(19) Europäisches Patentamt
European Patent Office
Office européen des brevets

(11) EP 3 312 780 A2

(12) **EUROPEAN PATENT APPLICATION**
published in accordance with Art. 153(4) EPC

(43) Date of publication:
**25.04.2018 Bulletin 2018/17**

(21) Application number: **16814802.1**

(22) Date of filing: **23.05.2016**

(51) Int Cl.:
*G06Q 10/00* (2012.01) *G06Q 10/06* (2012.01)

(86) International application number:
**PCT/RU2016/050014**

(87) International publication number:
**WO 2016/209121 (29.12.2016 Gazette 2016/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.06.2015 RU 2015124134**

(71) Applicant: **Merkulova, Yuliya Vladislavovna**
**Moscow 115597 (RU)**

(72) Inventor: **Merkulova, Yuliya Vladislavovna**
**Moscow 115597 (RU)**

(74) Representative: **Jackson, Richard Eric**
**Carpmaels & Ransford LLP**
**One Southampton Row**
**London WC1B 5HA (GB)**

# (54) METHOD OF MANAGING AN ARRAY OF VARIABLE DATA CONCERNING CONSUMER-RELATED PRODUCTION INDICES IN ORDER TO OPTIMIZE SAID INDICES TAKING INTO ACCOUNT TEMPORAL AND SPATIAL PARAMETERS

(57) SUMMARY

The declared invention under the name: «The way of management of plurality of the data variable the consumer indicators of products for their optimization, taking into account temporary and spatial parameters»" belongs to a way of the generating of planned-analytical tools of the enterprise and modeling of process of management of plurality of variable data on the basis of their machine processing for optimization of target function of the released products, and also indicators of their positioning on markets, taking into account temporary and spatial parameters in the formed situational- strategic plan of development of the enterprise [classification by MPK: G06Q 10/00].

The essence of the declared invention consists in the solution of an objective of management of plurality of variable data of consumer indicators of products for their optimization, taking into account temporary and spatial parameters by means of creation of the new way of the generation of planned-analytical tools including as the operations similar to a prototype over formation of databases, an array of basic data, over carrying out the cluster analysis and over creation of multidimensional matrixes over management of reforming, so and essentially new tools, also new stages, steps and the corresponding to them the operations of modeling of process of management of the data [Fig.7], which consist in formation of system of management of databases, in formation of object-relational models, dynamic rows of the array of basic data of the plan, of multidimensional models of plurality of data, of the product-market plan and the block of its strategy, strategic programs with the output data of the offer of product of firm in prospect, obtained on the basis of matrixes of multi-purpose optimization and also in creation of the machine of adjustment in the form of the matrixes of multiple optimization, which place on interactive display for situational updating of the output data of the strategic program of development and obtaining the output data of indicators of the offer of products in the current period.

The technical result consists in creation of such new way of creation of planned-analytical tools and in modeling of essentially new stages, stages and the operations over management of plurality of variable of the data of consumer indicators of products, which leads to increase of competitiveness level of products, as a result, of synergetic effect from output data of its offer, taking into account temporary and spatial parameters at optimization of costs of its production and sale; it leads to ensuring bigger useful effect from products, to the best satisfaction of public requirements, what provides industrial applicability of a way by enterprises of various industries.

EP 3 312 780 A2

## Description

### Area of the equipment to which the invention belongs

### Classification by MPK: G06Q 10/00

**G06 -** "Data processing, calculation, account".

**G06Q** -«Systems of data processing or ways which are specially intended for administrative, commercial, financial purposes and also for management, control, the forecast, which are not provided in other subclasses".

**G06Q 10/06** «Management of resources, working streams, people or projects, for example, organization, planning, drawing up of schedules or distribution of temporary, human or machine resources, planning by the enterprise, organizational models».

**The invention belongs to way** of creation of the project-analytical tools and of modeling of process of management of data. In particular, the invention belongs to a way of creation of the project-analytical tools and modeling of management process of plurality of variable data of consumer indexes of products for their coordinated optimization, taking into account temporary and spatial parameters, during forming the situational-strategic plan of development of the firm.

Object of the invention is the system of the enterprise (the organization, firm) with its instruments of economic planning of economic communications, the business environment, strategic zones of managing (SZM), grocery and market strategy which is expressed in formation of planned documents in the form of situational and strategic plans and programs of managing. Subject of the invention is products and process of them creation and realization, i.e. process of management of variable data of the range of target function, qualitative parameters, of prime costs of concrete types of products, and also by temporary parameters of life cycle and values of indicators of volume and offer price of products in the markets in SZH of firm. Persons of the invention are employees of the enterprise (the organization, firm), who carry out management process and planning, i.e. activate the planned and analytical tools, carry out a new way of their generation and modeling of process of management of data for obtaining technical result.

Variable data at the description of a way are used for definition of properties and consumer indicators of products, namely such as: target function of products; indicators of quality of products; effectiveness of target function of products; products offer price; temporary cycles of products; volume of the offer of products; assortment indicators of the offer of firm. Values of above-mentioned indicators define for characteristic and demand, and the commodity offer of firm. The formalized data set are intended for processing by the person or by means of automatic means. Data are variables, they can change depending on time, the market of positioning of products, a consumer environment, consumer demand, the competition, and also resources opportunities of the firm.

The essence of a way consists in generating of project-analytical tools for management by data variables. As a result of influence of the sets of all tools on variable data (the analysis, assessment, the forecast, planning of a variable) make decisions or about support of data in stable state, or about the direction of corrections, updating of data. Control of variable data of a one indicator of offering product are carry out, taking into account influence on it of other variable data of other indicators of products and various factors. In the course of values change of indicators of offering product consider the restrictions set, for example, restrictions of resource base, temporary and spatial parameters of positioning products on market. Thus, management of variable data is always management of a set of the registered information (data on an object, the actual values of various indicators, data of the forecast) submitted in the material form suitable for transfer, communication, processing by the person or by means of automatic means [ISO/IEC/IEEE 24765-2010 Systems and software engineering - Vocabulary].

### Primary spheres for application of the invention

The declared way of management of plurality of data variable of consumer indicators of products, taking into account temporary and spatial parameters by means of generating of tools can widely be used by the enterprises of various industries. However, primary direction is use of a way of management of plurality of data variable for optimization of target function, prime cost and quality indicators of difficult technical systems, and also indicators of their positioning in the markets, because at their planning it is the most difficult to achieve the coordinated optimization of data on a set of consumer parameters, especially taking into account situational change of demand, and the existing tools could not solve this problem enough effectively.

### The previous level technique

The declared invention has analogs and prototypes, which characterize technique level before the declared invention.

**Analogs and prototype of the invention**

First, the way of the analysis and planning of variable data on the basis of the statistical analysis is known [Borovkov A. A., Mathematical statistics. - Novosibirsk: Science; Publishing house of Institute of mathematics, 1997; Wald A., the Consecutive analysis, the lane with English - M.: Fizmatgiz,1960; Lehman E., Check of statistical hypotheses, the lane with English.- M., 1964]. The statistical analysis, traditional measuring tools and analytical tools in the form of statistical reports provides generally average assessment relating to each measured parameter. Several variables are often grouped by averaging of separate variables for formation of more capacious compound variable. This project-analytical tool can provide only limited assessment of some aspects of an object. It is used generally for drawing up statistical reports of the reached indicators and does not allow to carry out the complex analysis, system assessment, dynamic forecast and situational-strategic planning of object on the basis of finding synergetic set of variable values of consumer indicators of offering products. The way of the statistical analysis has very limited scope of application at a research of technical systems, because it does not allow to analyze relationships of cause and effect, to establish interrelations between variable data of offering products and to operate them.

Second, the way planning from the reached level on basis of extrapolation of tendencies of growth, is known [Big Encyclopaedic dictionary. 2000; Rayzberg B. A., Lozovsky L. Sh., Starodubtsev E. B. modern economic dictionary. - 2-е изд., испр. M.: ИНФРА-М. 479 с.. 1999.; Granberg A. G. Statistical modeling and forecasting / Under the editorship of A. G. Granberg.-M.: Finance and statistics.2000. - 383 c.; Karasyov A. I., Kramer N. Sh., Savelyeva T. N. Mathematical methods and models in planning. - M.: Economy.2001. - 239c.]. The main logic and motivation of such planning is in assumption: "future results of activity improve in comparison with the past".

Actually, reached values of indicators of the offer of products, their target functions are taken as a basis and rates of improvement (increase) of these values in comparison with the reached level are predicted on the future. In the conditions of a modern market mechanism this way of data management is inefficient, because do not allow to consider tendencies of change of the markets and consumer demand.

The purposes are established on a basis of a method of extrapolations on the line of ascent, without taking note on change of real conditions of managing, the markets, consumer demand, which can change in the different direction, and also without taking note on change of resource base of the firm. It results in groundlessness plans. Shortcoming of this way of data management is that is impossibility to develop development strategies, to carry out multi-purpose planning, i.e. to choose an optimal variant from several admissible and possible, and also impossibility to maneuver by variable data of indicators of offering products, taking into account change conditions of managing, consumer demand, of temporary and spatial parameters of development.

Third, the way of the analysis and planning of data on key indicators is known [Rayzberg B. A., Lozovsky L. Sh., Starodubtsev E. B. Modern economic dictionary. - 2nd prod., M.: INFRA-M.,1999. - C. 479; Kurakov L. P., Kurakov V. L., Kurakov of A. L. Economic and right: dictionary reference. - M.: Higher education institution and school,2004. - C. 1072]. Indicators are "indicators of a state". They are used for comparison of business data about business by the purposes and displays of current state by means of graphic indicators. Key indicators increase efficiency and accelerate process assessment of functioning of the organization, achievement of the main purpose of business. The way at which values of key indicators are used for drawing up its target business plans, on the one hand, has advantages, because allows to be guided, when planning key factors of success, and on the other hand, has shortcomings, because this way is rather narrow and does not allow to realize complex, system approaches and to consider influence of various factors on values of the planned indicators of the offer of products. Besides, this way does not allow during planning to consider change of temporary and spatial reference points and to exercise maneuverable situational data management of offering products of firm.

Fourth, the way of the analysis and planning on the predicted control points of growth is known [Bryan, F.L. (1992) Evaluation of risk at Critical Control Points. WHO, Geneva; Mortimer, S. and Wallace, C. (199*) HACCP A practical Approach. (2nd edition) Chapman and Hall, London]. This way is based on the concept recognizing the fact, that an object (firm) has advantage in this sphere, and also has all opportunities of growth and development of this advantage. Growth points at this way of data management are basis of the developed strategy. During realization of this way of data change, firm has to have exact strategic ideas about character, essence of the key indicators of growth. Therefore, firm often use way of management of data on the critical points allowing to predict critical values of the planned parameters below which they cannot fall [Breker of T, Lander L. Differentiable sprouts and accidents. Translation from English. M. Mir1977г. 208c]. It will allow to define admissible interval of data during planning and to increase effectiveness of this way of data management. This way is rather effective in the conditions of high stability of the environment, markets, supply and demand, but at once finds shortcomings in conditions of dynamically changing environment, at high instability of supply and demand, the competition. In the conditions of the dynamic markets the constant analysis of a situation and planning of range of opportunities for maneuvering by strategy and SZM (strategic zones of managing), are necessary. The way of planning on critical points, as well as a way of planning on key indicators cannot provide necessary maneuverable management of variable values of indicators of the offer of products. In the conditions of modern market economy and dynamically changing markets the traditional tools and ways of data management have the low effectiveness. They do not allow to carry out complex, system assessment of variable data, and it is only limited assessment of some aspects of an object. They do not allow to establish interrelations and the relations between planning indicators of the and to find their synergetic plurality of the variable data of indicators of offering products, at them will be impossible to model the influence of reforming on object. Therefore, scientists looked for other technical solutions over create the new tools.

Fifth, the way "Management of Reforming" [RU 2419874], which was registered in 2007 by Perry Warren John is known. He offered a way of generation of the analytical tool for estimation of an object. The organization is chosen as an object. The essence of this technical solution is that the analytical tool can be realized in the form of a two-dimensional matrix of basic data. Key data are received by means of three-dimensional modeling for receiving three-dimensional image. Set of the output data compare to basic data, and use result for estimation and management of reforming of an object. In particular, firm use a set of the output data for demonstration of how change of the inducing factor can influence an object. The inducing factors include factors of effectiveness, factors of reforming, and human factors as stimulation factors. Each of the inducing factors can have the inducing subfactors. Conditionally is accepted, that initially generate data of an object, which include, at least, one variable, that contains set of the inducing factors. The essence consists in inclusion of object data into cells of the analytical tool, which contains the massif of cells, and each cell contains a subset of key data. At the same time basic data in each cell provide a measure of each inducing factor, which belongs to community, part of which makes an object, and positioning of cells concerning each other is defined by interrelation of the basic data which are contained in cells. After that the output data are generate with the help of special tool. The tools use for the comprehensive analysis of an object. On the basis of the output data the evolutionary model is created, which allows to investigate influence on object of the processes proceeding in an object, characterizing possible actions for its reforming. As a result, firm generates the report with use of the output data.

**Shortcomings of a prototype.**

First, the offered analytical tool does not allow to realize fully complex, system approaches, because it is allowed to consider influence on an object at least one inducing factor. At the same time the possibility of connection in one variable set of the inducing factors is allowed. Such approach does not allow to consider that in some cases the inducing factors can be incompatible and contradict each other. It is apparent defect of a way. For example, increase in efficiency of the organization can be in a certain contradiction with material interests of her employees. Besides, in the conditions of a modern market mechanism of managing, the firm needs to investigate influence on each other at least of three factors: object, subject and person of managing.

Secondly, shortcoming of this method is that he suggests to consider only the inducing factors. However, in process of optimization of the data plurality it is necessary to consider also factors of restriction. In management process by variable data of indicators of the plan of firm it is necessary to consider triune influence: first, of the purposes, strategies of managing by object based on the inducing factors; second, of the conditions of managing, of external rules and restrictions; third, of the opportunities of an object, which characterize, on the one hand, reserves of resources for reforming, and on the other hand, restrictions in resources, internal reserves. It is necessary to consider also factors of instability and uncertainty, i.e. probability of various scenarios and situations.

Thirdly, the proposed technical solution is aimed mainly at estimation of an object, but not finding of optimal solutions on its adjustment. Now it is already not enough to use one analytical tools allowing to estimate a possibility of reforming of the studied object, but tools are necessary, which will allow to find optimal variants of correction of variable data of plan of offering products.

Fourthly, the offered analytical tools do not allow to estimate, analyze and to correct several variable parameters, taken in general as a plurality, and also to find optimum of the data plurality, providing the best synergetic result.

Fifthly, the offered analytical tools do not allow to analyze, estimate and to plan variable data, taking into account spatial reference points - parameters, that are very important in the conditions of market economy. With change of the markets - of spatial parameters of offering products, other parameters change too, namely: conditions of managing, inquiries of consumers, purposes, and strategy, the inducing factors, opportunities of resource base.

Sixthly, the offered analytical tools not fully consider time factor and also are based not on dynamic rows of variable indicators of the plan, and on basic data which do not consider dynamics of development.

Seventhly, the offered analytical tools are not aimed at development of the strategic programs of development, which contain data about the strategic range of values of various indicators of the plan for each type of product in a long-term outlook. They do not allow to reach of the synergetic optimizing of decisions, because do not contain of tools for establishment of interrelations between data and influence of values of various indicators at each other.

Eighthly, the proposed technical solution does not contain of mechanism of the current correction of variable values of indicators of the plan and does not allow to carry out expeditious, mobile current correction of variable values of indicators of offering products according to demand, but in borders of the designated strategic range of values. Despite all shortcomings of technical solution "Management of reforming", this way is closest (RU 2419874) to the declared way of data management and of generation of new tools, because is characterized by similarity of the key functions, has similar receptions and operations, and therefore it is chosen by me as a prototype.

**The declared way of data management with a prototype has coinciding index of classification by MPK: G06Q 10/00.** Thus, in the known level of the technique any of the known ways does not allow to receive that high technical result, which will be received by means of use of the declared way of data management.

**Advantage of the invention**

**Similarity and difference with a prototype** of the declared invention consists in the following. The analogs and prototype have the same appointment, as at the declared way. The unity at of the appointment declared with similar ways, is established first of all, taking into account unity of object for reformation. In prototype, possible object of reforming is the organization. Invention purpose: "Management of reforming" is increase of efficiency of the organization (enterprise). The declared invention consists in certain actions for correction of values of consumer indicators of products for increase in its efficiency, competitiveness at optimization of costs of its production and sale, what will allow to increase efficiency of the enterprise in general, also growth of its effect. Thus, an ultimate goal of the declared invention as and at a prototype is increase in efficiency of the organization (enterprise). Thereby, similarity with prototype in object and purpose of the invention is established. However, the declared way has to have with a prototype also similarity in technical solution. The declared invention has with a prototype "Management of reforming" similarity in tools, receptions and operations. Technical solution of a prototype consists in generation of analytical tools and in implementation of management of reforming, and the declared way consists in generation of project-analytical instruments of management of variable data of consumer indicators of the products, which are turned out by the enterprise.

Thus, for solution of technical task the declared new way, on the one hand, has common features with a prototype "Management of reforming", namely they consist: in generation of project-analytical tools and includes similar operations, among which there is a creation of databases, the cluster analysis, definition of key data, creation of matrixes of decision-making, and on the other hand, has the distinctive signs consisting in new set and in the new sequence of performance of operations in of time, as a result of which becomes possible to exercise situational and strategic planning and management of plurality of variable data of consumer indexes of products, taking into account temporary and spatial parameters and to receive as a result much more productive, exact and reliable programs, and also much higher useful effect, than at a prototype and analogs.

In the course of use of a new way of creation of the project-analytical tools unlike a prototype and analogs the technical solution will be received allowing to connect strategic and situational planning in uniform system. The firm begins process of formation of programs of offering products from analysis of situations in the markets, from dynamics of consumer demand, and consequently, operates data of the commodity assortment, quality, price, volume, and also by temporary indicators of the offer of products, taking into account dynamics of consumer demand in various markets. The approach, aimed on increase of indicators of efficiency of products for producers and consumers and finding best interrelations between them will become possible to realize both for long-term period, and at permission of the current situations, having achieved coordination not only in change of data of various indicators of the plan among themselves, but also between strategic programs and situational decisions on optimization of a plurality of variable data of the offer of products. Any former system of planning was not aimed at such useful effect. I will stop in more detail on distinctive features and stages of the new declared way of data management from a prototype.

1 stage - **«The way of formation of databases for drawing up plans and programs of the offer of products».** The declared invention unlike a prototype is based not on not on one database, and on system of databases and it allows on the first stage in process of forming databases most fully, in a complex to investigate the business environment of the organization (firm), its long-term and current product-markets strategies, their coherence and compatibility, the main indicators of supply and demand of products and major factors, which influence their balance during temporary cycle on various local markets, what increases the accuracy forecasts and effectiveness of planned and analytical instruments of situational and strategic planning and management.

2 stage - **«The way of formation of object-relational system for databases management in the process of drawing up plans on products».** Formation of DBMS - a new stage of system, because the prototype and other analogs did not include operations on formation of DBMS, creation of object-relational models. Establishment of interrelations between data as in one database, so and between data of different databases consists in creation of the object-relational models, taking into account influence of temporary and spatial parameters on the relation between data, on character of communications between them. For example, interrelations are established between data of tendencies of change of the markets and product-markets strategies, between data of long-term and current product-markets strategies and between the corresponding indicators of planning, and also between data of various sections of the plan for the commodity assortment, qualitative parameters of products, of volumes and of prices of positioning of various products, temporary parameters of production and offer of products, and between them and the product-markets strategies of firm. Establishment of similar interrelations between data of system, indicators of its planning and creation of object-relational models of forming DBMS will allow to increase effectiveness of data management considerably.

3 stage - **«The way of formation of dynamic rows of reference data of the plan on products, taking into account temporal and spatial parameters».** The prototype includes carrying out the cluster analysis of basic data for creation of the array of key data, taking note on them of the inducing factors. The declared way is not limited only to systematization and selection of basic data. The new way has set of distinctive features, advantages, because unlike a prototype provides formation not of the static basic data, defined on the basis of actual data or the planned data about characteristics of an object, but of dynamic rows of plurality of key data, which are reference data of consumer demand, of received by means of the forecast. This distinctive feature is very important for increase in consumer indicators of products and for obtaining useful effect, because it allows firm to maneuver and quickly to correct the output data of offering products in according with reference data of demand. In the declared way unlike a prototype is carried out assessment of influence on reference data not only of the inducing factors, but also of factors, which define strategic opportunities (restriction on resource base) and strategic installations (purposes, strategy) firms.

Besides, also much more productive mechanism of work with reference data is offered. If in a prototype basic data are entered into a matrix as the main, then into of the declared way, they are also entered into a matrix, but in other purposes: at the fifth stage as a reference point for drawing up strategic program of offering products, and at the sixth stage for situational correction of output data of indicators of offering products of firm, i.e. they play a role of important, but of intermediate of data, which dynamically change. Thus, formation of dynamic rows of reference data of the plan on products increases effectiveness, efficiency, mobility of the used tools.

4 stage - **«The way of formation of the situational-strategic plan of products development of firm».** This stage and operations, which enter it, are new distinctive feature of the declared invention, because are absent at a prototype. The fourth stage consists in creation of graphic information models (schemes) and in definition on their basis of the strategic zones of managing (SZM) of firm, product-markets strategies on the long-term period, in formation of assortment strategies, strategies for quality, target function of products, its temporary cycles and the strategies of positioning of products on the markets. It will allow to build system of the purposes, tasks and programs of their decision, taking into account the strategic prospects of development that will provide of organization steady, reliable position on the market, as well as profitable managing not only in current period, but in the long term. In it advantage of this way in comparison with a prototype, because it provides much higher technical result.

5 stage - **«The way of formation a plurality of data of the strategic program of offering products, taking into account the temporal and spatial parameters on the basis of matrices of multi-purpose optimization».**

The known prototype of the invention is based on use as the analytical tool of a matrix of key data. The analytical tool for assessment of an object is presented in the form of the cells of matrix, each cell contains a subset of reference data, which provide a measure of each inducing factor, influencing an object that is a part of community. Positioning of cells concerning each other is defined by interrelation of the key data, which are contained in cells of matrix. The essence of the known way of management of variable data was that plurality of the output data were compared to basic data and the result was used for estimation and management of reforming. Thus, at a prototype the matrix is used generally as the tool for the analysis of collected data.

Unlike a prototype the offered matrix is the tool not only for analysis, but also for strategic planning, because not only data analyze, but also key data of demand predict, and according to them are generate the output data of offering products. Thereby, novelty of a matrix consists in use of the predicted data of demand as reference data. Thanks to the offered new mechanism of creation of matrixes they become the instrument of multi-purpose optimization, strategic forecasting, planning of strategic programs of development of different types of products of firm, taking into account the prospects of their positioning over various markets during certain temporary periods.

First, these matrices are divided on cells so, in order that not only to do comparison of values of the main indicators of the offer with the corresponding values of indicators of demand, but at the same time to estimate spatial (SZH of firm in various local markets) and temporary (stages of life cycle) parameters of positioning of each type of product from assortment of firm.

Secondly, the matrices of multi-purpose optimization allow not only to plan the strategic range of values of various indicators of the offer according to the predicted data of demand, but also to consider their influence at each other, to estimate synergetic result and to find the best synergetic set of the output data of indicators of the offer of the different types of products, forming the strategic program of firm.

The known analytical tools of forecasting and planning unlike matrices of multi-purpose optimization have the following shortcomings: first, they not allow to predict plurality of values of indicators of demand, of taken together; and secondly, they not allow to make plans not each indicator separately, but coordinated plurality of values of various indicators of offering products. The action of a matrix is based on use of economic-mathematical forecasting, graphic multidimensional modeling and planning over principle of «theory of pluralities». Thus, dynamic matrices of multi-purpose optimization can use widely for finding of optimum plurality of data about structure, the width, depth of the assortment offer, for optimization of parameters of target function and qualitative parameters of products, for optimization and synchronization with demand of temporary parameters of positioning of products, and also for the coordinated optimization of volume, quality, price indicators of positioning of products in various local markets (in SZM of firm) and stages them of life cycle. Output data of matrixes is an integral part of the strategic program of development. Therefore, the special importance of the matrixes of multiple optimization for formation of the strategic program of development is in achievement of balance of demand data with data of the main indicators of the offer of different types of products, i.e. quality, volume and price indicators of positioning of products in various local markets (in SZH of firm) during stages of its life cycle. Unlike a prototype of a matrix of multi-purpose optimization allow to solve all tasks, on the one hand in a complex, taking into account a set of factors, and on the other hand, in dynamics, taking into account spatial maneuvering, what increases efficiency of process of planning in many times over. Use of similar matrixes will allow to find optimal solutions at once concerning several parameters and to solve the spatial tasks not in two-dimensional, and in multidimensional measurement, what, certainly, will lead to increase of effectiveness of made decisions, of process of planning the program documents and efficiency of the organization in general.

6 stage - **«The way of situational transformation of data of consumer indicators of the products, by using matrices of multi-purpose optimization, which function by means of the interactive display»**

It is essentially new stage of the declared invention, what is consisting in introduction of new operations, which the prototype does not contain. In spite of the fact that the maintenance of this stage is connected with creation of matrixes, which analog is present at a prototype, purpose of these matrixes, the mechanism of their construction and functioning are essentially new. The matrixes of situational adjustment, which are used at the 6th stage even differ from the matrices, used at the 5th stage, because on the one hand, they continue to remain matrices of multiple optimization and are logical continuation of the matrices used at the 5th stage of the declared way, but on the other hand, they are already absolutely other project-analytical tool.

Fundamental differences of a matrix of situational adjustment from a matrix of a prototype consist:

First, the matrix is used already not only, as the analysis tool, similar to prototype or even, as tool of forecasting and planning, as at the previous stage of the declared way, but as the dynamic mechanism, which functions by means of the interactive display for corrections of the planned offer indicators under the influence of change of situations in the markets and as a result of change of the predicted values of indicators of consumer demand in the current period.
Secondly, the matrix allows to carry out situational adjustment in real time, which begins with replacement in cells of a matrix of the predicted values of demand by actual data, and includes process of comparison them with the planned values of the indicators of the offer, of reflected in symmetric cells of a matrix. Dynamically functioning mechanism of situational matrix, which functions by means of the interactive display with replaceable panels allows to make correction of data of offering products by highly productive, high-speed process and to aim it at balance with demand. The balance between supply and demand by volume, price, assortment, by qualitative and temporary parameters is very important, because allows to increase effect from products, the competitiveness them.
Thirdly, the matrix of situational adjustment that it is similar with matrix of the 5th stage of the declared way possesses the mechanism of multi-purpose optimization. Thus, actual data of demand has to be placed into top part of cells of a matrix of situational adjustment, what allows not only to correct concrete indicators of the offer according to data of demand, but also to establish influence of different indicators of the offer on each other, on different data of the demand and on the end result. Such mechanism of matrixes of situational adjustment provides the highest synergetic effect from current updating of data, by means of achievement of balance of supply and demand over plurality of parameters, and also provides the highest growth of the useful effect from products for producer and consumers. Use of the interactive display will allow to make adjustment process quick, to use the replaced panels for expeditious creation of schedules of balance of supply and demand in a set of parameters with use of methods of multidimensional modeling and display of data, and also to build algorithms of situational adjustments and of finding of optimal solutions. The results received by means of opportunities of the interactive display can quickly be placed in cells of a matrix of situational adjustment. Therefore, possibilities of the interactive display are used to change easily contents of various cells of a matrix for new data, to analyze their compatibility with data of other cells and to correct summary cells of a matrix, taking into account a complex of the made changes. It is offered to build separate matrixes for situational adjustments of assortment, qualitative, temporary parameters of the offer of production and a total matrix containing data on the main indicators of positioning in the different markets of all types of products of firm (on the most detailed classification of the assortment program), taking into account temporary parameters of their positioning.

Thus, the declared way of management of a set of variable data for optimization of consumer indicators of products, taking into account temporary and spatial parameters, contains essentially new planned and analytical tools in the form of the formed databases, object and relational models, DBMS, dynamic rows of the basic predicted data of the plan for a product, the block of development strategies, the strategic program determining the strategic range of the output data of the offer of products, matrixes of multiple optimization of the strategic program and the mechanism of situational updating of data with the help of the interactive display. Invented tools and mechanisms of the declared way will provide much higher efficiency of processes of planning and management of the organization (enterprise) in comparison with the existing analogs and the chosen prototype.

**Technical task**

The technical task of the invention consists in creation of new mechanism, of tools of way of management of plurality of variable data of consumer indexes of products for their coordinated optimization, taking into account the temporary and spatial parameters, for on the one hand, of best satisfaction of consumer demand, of public requirements by means of increase of competitiveness of the products, and on the other hand, achievements of an objective with smaller expenses in comparison with the known analogs and prototype in result of optimization of costs of production and at sale of products.

**Essence of the invention**

The essence of the declared invention consists in the solution of the technical task over management of plurality of variable data of consumer indexes of products for their optimization, taking into account the temporary and spatial parameters, by means of creating of the new tools and list of the sequences, which include not only operations similar to a prototype over formation of databases, of rows of reference data, over carrying out the cluster analysis, creation of multidimensional matrixes for management of reforming, but and essentially new project-analytical tools, as well as models of the new stages, steps and operations of process of management of data, which consist in formation: systems of databases management and object-relational models for determination of interrelations between data and the databases, of dynamic rows of set of reference data of plan, multidimensional models of data plurality, of situational-strategic plan and of strategies block, of strategic program with output data of offering products in prospect on base of matrices of the multi-purpose optimization, as well as in creation of the tool-machines of situational updating of data in the form of the matrix of the multi-purpose optimization on the interactive display with replaceable panels, which allows in real time to transform data of different cages of matrix, taking into account their influence on each other for providing the best synergetic result at situational updating of the output data of the strategic program of development and obtaining the output data of indicators of the offer of products in the current period.

**Technical result** consists at such new way of creation of the project-analytical tools and modeling of the sequence of essentially new stages, stages and operations of management of plurality of variable data of consumer indicators of products, which leads to increase of competitiveness level of products at the expense of bigger accuracy, effectiveness of the output data of the offer of products, taking into account temporary and spatial parameters at optimization of costs in production and sale them, and as a result, it provide the bigger efficiency of the organization (enterprise), the best satisfaction of public requirements.

**Short description of drawings of a way**

**Fig. 1** - «Model of a way of formation of databases (D) for drawing up plans and programs over products». Characterizes content of the first stage.

**Fig. 2** - «Model of a way of formation of the object-relational system of management of databases (DMS) in the course of drawing up programs over products». Characterizes content of the second stage.

**The examples** of the object-relational models of the DBMS, which describe the 2-nd stage of a way.

Fig. 2.1- «Object-relational model of interrelations-relations between indicators of the plan for a product, the market and indicators of a business environment of firm in the commodity markets».

Fig.2.2 - «Object-relational model of interrelations-relations between the strategy of planning of the enterprise in long-term outlook and its current strategies over products and the markets».

Fig.2.3 - «Object-relational model of interrelations-relations between strategies of the commodity assortment of firm and its current product-markets strategies».

Fig. 2.4 - «Object-relational model of interrelations-relations between temporary parameters of life cycle and the main indicators of positioning of a product in the markets».

Fig. 2.5 - «Object-relational model of interrelations between strategies over qualitative parameters, target function of a product and by needs for it».

Figs. 2.6 - «Object-relational model of interrelations-relations between stages, indicators of demand and of offer of a product at planning an optimum plurality of the interconnected indicators of its efficiency».

**Fig. 3** - «Model of a way of formation of dynamic rows of key data of the plan over products, taking into account temporary and spatial parameters». Characterizes content of the third stage.

**Fig. 4**- «Model of a way of formation of the situational-strategic plan of products development of firm». Characterizes content of the fourth stage.

**Fig. 5** - «Model of a way of formation of a plurality of data of the strategic program of the offer of products, taking into account temporary and spatial parameters, on the basis of creation of matrixes of multi-purpose optimization». Characterizes content of the fifth stage.

**Examples of the algorithms** of the 5th stage of a way.

Fig. 5.1 - «Algorithm of the choice of variant of the strategic program over data of indicators of width of commodity nomenclature and assortments of firm».

Fig. 5.2 - «Algorithm of the choice of variant of the strategic program over data of temporary parameters of life cycle of a product».

Fig. 5.3 - «Algorithm of the choice of variant of the strategic program over data of effectiveness and cumulative cost of target function of a product».

Fig.5.4 - «An algorithm of the choice of variant of the strategic program over plurality of the coordinated data of the price and volume of the offer of products».

Fig. 5.5 - «An algorithm of the choice of version of the strategic program on the basis of the comparative assessment of efficiency of offering products»

**Fig. 6** - «Model of a way of situational correction of a data plurality of the consumer indicators of products». Characterizes content of the sixth stage.

**Examples** of algorithms and situational models of the data, which describe the sixth stage of a way.

Fig. 6.1 - «Algorithm of correction of a data plurality of indicators of the commodity assortment».

Fig. 6.2 - «Algorithm of adjustment of a temporary parameters of life cycle of the offer of products».

Fig. 6.3 - «Algorithm of adjustment of a range of data of indicators of target function of a product».

Fig. 6.4 - «The situational modeling of a data of the main indicators of offering products at realization of the strategy of improvement of its quality».

Fig. 6.5 - «The situational modeling of a data of the main indicators of offering products at realization of the strategy of broad penetration in the market».

Fig.6.6 - «Algorithm of cumulative correction of a data plurality of indicators of offering products».

**Fig. 7** - «The summary model of a way of management of a plurality of variable data of consumer indicators of products for their optimization, taking into account temporary and spatial parameters».

The way of management of plurality of variable data of consumer indexes of products for their optimization, taking into account the temporary and spatial parameters, consists in implementation following one after another of the six stage, them of steps, each of which is connected with consecutive performance of the special operations. Thus, each stage is described by the model, which is executed in a digital format. The models describing a way are designated by figures, which are numbered by integers from 1 to 6. Fig.7 numbered the final model of a way. However, at the description of a way examples are given, they contain drawings and tables, which describe operations of a way.

Therefore, they are numbered by two figures through a point. The first digit indicates on number of a stage of a way, and the second - on number of table or drawing. Additional drawings are provided for the 2nd, 5th, 6th stage of a way. These drawings are numbered by figures respectively from 2.1 to 2.6 for the 2nd stage; from 5.1 to 5.5 for the 5th stage and from 6.1 to 6.6 for the 6th stage. The 5th stage of a way contains the tables, which are numbered in separately similar way from 5.1 to 5.5. Formulas are numbered similarly. In numbering of formulas the first three digits indicate respectively on number of the stage, step, operation, to which the formula belongs, and the last digit - on number of formula. The model of each of stages of a way is described by number and essence of the steps making it, and each step includes unique consecutive operations, but which are typified and unified in system. In the accepted numbering of figures of a way the first digit means number of a stage, the second digit - number of operation; the last digit- number of a step, namely, at numbering steps of a stage, number of operation is specified in the middle, and each step of a certain stage of a way includes several operations. For example, designation [1.1-6.2] indicates that the first stage of the second step includes consecutive operations from the 1st to the 6th, and when numbering each concrete operation only one figure is specified in the middle. For example, designation [1.2.3] indicates the second operation of the third step of the first stage.

**Implementation of the invention**

**List of designations [Fig.1]**

**The stage 1 - «The way of formation of databases (DB) for drawing up plans and programs over products»,** consists of the following steps:

1.1-6.1 - «The way of formation of the database for the planning of a business environment of firm in the commodity markets»;

1.1-6.2 - «The way of formation of the database for planning of development strategies of firm»;

1.1-6.3 - «The way of formation of the database for planning indicators of the commodity nomenclature and commodity assortment»;

1.1-6.4 - «The way of formation of the database for planning of cumulative life cycle of product»;

1.1-6.5 - «The way of formation of the database for planning of parameters of target function and quality of product»;

1.1-6.6 - «The way of formation of the database for planning of the main indicators of the offer and effectiveness of product».

Steps of the first stage of formation of databases carry out in parallel each other [Fig.1]. Each of the listed steps of the first stage consists of consecutive operations.

**List of operations of the 1st stage [Fig.1]:**

**1.1** - to collect data about indicators and categories for planning;

**1.2** - to systematize and analyze collected data of constant character;

**1.3** - to construct the scheme of classification of the database or group of databases;

**1.4** -to define the list of fields of the database or group of databases;

**1.5** - to define keys for identifying data of the database or group of databases;

**1.6** -to generate the analog-to-digital database or group of databases in the form of tables (table), in which assign for each text line of each text column the digital code.

**1st step - «The way of formation of the database for the planning of a business environment of firm in the commodity markets»** includes the following operations:

**1.1.1** - to collect constant data about stages and indicators of planning of a business environment of firm in the commodity markets (about indicators of planning of consumer demand, about buyers, resellers, capacity of the market, intensity of the competition in the commodity markets between buyers and sellers);

1.2.1 - to carry out the system analysis, systematize data about stages and indicators of planning, about categories of the market and a business environment of firm in the commodity markets;

1.3.1 - to construct the scheme of classification for systematization of constant data about categories, stages and indicators of planning of a business environment of firm in the commodity markets;

1.4.1 - to define the list of fields of the database or group of databases: «Databases about stages and indicators of planning of firm and its business environment in the commodity markets»;

1.5.1 - to define keys for identifying data of the database or group of databases: «Databases about stages and indicators of planning of firm and its business environment in the commodity markets»;

1.6.1 - to generate the analog-to-digital database or group of databases in the form of tables, namely: «Database about stages and indicators of planning of firm and its business environment in the commodity markets», this group of databases includes: «Database about structure and maintenance of system of planning of the enterprise»; «Database about indicators of planning of a business environment of firm in the commodity markets».

**2nd step - «The way of formation of the database for planning of development strategies of firm»** includes the following operations:

1.1.2 - to collect constant data about main content of marketing and process of business management, about strategies of long-term development and current strategies of firm;

1.2.2 - to carry out the system analysis, systematize data about the purposes, tasks, motivation, stages of implementation of long-term and current strategies of the producer;

1.3.2 - to construct the scheme of classification of the databases, for example: a) the scheme of the systematized data about characteristics of demand and types of the marketing in various situations; b) the scheme of the systematized data about long-term and current strategies at implementation of situational-strategic planning at the enterprise; c) the scheme of systematization of data about the main indicators and product-markets strategies of firm;

1.4.2 - to define the list of fields of the database or group of databases: «Strategies of planning of firm»;

1.5.2 - to define keys for identifying data of the database or group of databases about strategies of firm»;

1.6.2 - to generate the analog-to-digital database or group of databases in the form of tables, namely: «The strategies of planning of firm» includes: «Database about the main indicators of the strategic development plan of the firm», which include: «Database about contents of the main development strategies of firm»; «Database about the main factors, reserves and directions of activity of firm at realization of various long-term strategies of its growth»; «Database for planning of long-term strategy of growth of firm according tendencies of consumer demand»; «Database about typical tendencies of change of the main indicators at realization of various long-term development strategies of firm»; «Database about combinations of strategies of long-term development of firm with each other and with the current product-markets strategies».

**3rd step- «The way of formation of the database for planning indicators of the commodity nomenclature and commodity assortment»** includes the following operations:

1.1.3 - to collect constant data about indicators of the assortment plan (a saturation, the width of the product range, width, depth, a harmony, elasticity of the commodity assortment), and also about structure of the commodity nomenclature and commodity assortment;
1.2.3 - to carry out the system analysis, systematize data for planning of the commodity nomenclature and commodity assortment;
1.3.3 - to construct the scheme of classification of database about structure and indicators of the commodity nomenclature and commodity assortment;
1.4.3 - to define the list of fields of the database for planning indicators of the commodity nomenclature and commodity assortment;
1.5.3 - to define keys for identifying data of the database for planning of indicators of the commodity nomenclature and commodity assortment;
1.6.3 - to generate the analog-to-digital database for planning of indicators of the commodity assortment, taking into account factor of time and strategic zones of positioning of the commodity assortment of firm in the market.

**4th step- «The way of formation of database for planning of cumulative life cycle of a product»** includes the following operations:

1.1.4 - to collect constant data about structure and contents of cumulative life cycle of a product;
1.2.4 - to carry out the system analysis, systematize data about stages of production, positioning and practical use of a product, and also about stages of its supply and demand in the market;
1.3.4 - to construct the scheme of classification of the database about structure of cumulative life cycle of a product;
1.4.4 - to define a list of fields of the database for planning of cumulative life cycle of different products;
1.5.4 - to define keys for identifying data of the database for planning of cumulative life cycle of different products;
1.6.4 - to generate the analog-to-digital database for planning of cumulative life cycle of a product in the form of tables.

**5th step - «The way of formation of database for planning of parameters of target function and quality of product»** includes the following operations:

1.1.5 - to collect constant data about the main services, quality indicators and functional purpose of the final product;
1.2.5 - to carry out the system analysis, systematize data about the main, auxiliary, serving functions of the products, about indicators of quality and set of their services;
1.3.5 - to construct the scheme of classification of the functional structure of a product, indicators of its quality and set of services, rendered to them, of aimed at realization of its target function;
1.4.5 - to define the list of fields of database for planning of parameters of target function and quality of product;
1.5.5 - to define keys for identifying data of database for planning the parameters of target function and quality of product;
1.6.5 - to generate the analog-to-digital database or group of databases for planning of target function and quality of a product in the form of tables, namely: «Database for planning of the main indicators of quality of products, taking into account a factor of time and SZM of firm»; «Database for planning of influence of demand on data of offer of the target function of a product».

**6th step - «The way of formation of the database for planning of the main indicators of the offer and effectiveness of products»** includes the following operations:

1.1.6 - to collect constant data about the main indicators of the offer of products in the market, about the indicators characterizing efficiency of products;
1.2.6 - to carry out the system analysis, systematize data for planning of the main indicators of supply and demand of products;

1.3.6 - to construct the scheme of classification for systematization of constant data about main indicators of positioning of products at stages of life cycle them of offer, and stages of life cycle of demand in product on markets;

1.4.6 - to define the list of fields of databases group: «Planning of indicators of offering products, taking into account temporary and spatial parameters»;

1.5.6 - to define keys for identifying data of database group: «Planning of indicators of offering products, taking into account temporary and spatial parameters»;

1.6.6 - to generate analog-to-digital databases «Planning of indicators of offering products, taking into account temporary and spatial parameters» in the form of tables, namely: «Database for planning of the main indicators of the commodity offer of firm»; «Database for definition of a role of functional divisions of firm in the course of planning of offering products»; «Database about indicators of efficiency of the products».

All databases, which are created at the 1st stage, have integrity at implementation of situational-strategic system of planning, because at any operations, they not change. They are intended for storage and subsequent processing on the IBM of the systematized data about indicators of a business environment of firm in the commodity markets, about product-markets development strategies of firm, about stages of life cycle of production, demand and offer of a product, about the main indicators of efficiency of product and the planned indicators of its offer.

**List of designations [Fig.2]**

**2nd stage- «The way of formation of object-relational models for databases management in the process of drawing up plans on the products»** consists of the following steps:

2.1-4.1 - «The way of formation of object-relational databases management system for planning of a business environment of the firm»;

2.1-4.2 - «The way of formation of object-relational databases management system for planning of long-term and current strategies of the offer of products of firm»;

2.1-4.3 - «The way of formation of object-relational databases management system for planning of indicators of commodity assortments of firm»;

2.1-4.4 - «The way of formation of object-relational databases management system for planning of temporary parameters of the offer of products of firm»;

2.1-4.5 - «The way of formation of object-relational databases management system for planning of quality indicators of products»;

2.1-4.6 - «The way of formation of object-relational databases management system for planning of indicators of the offer of products, taking into account the temporal and spatial parameters».

Model [Fig.2] illustrates that steps of a stage of formation of object-relational DBMS in the course of planning of a business environment, product-markets strategies, of various indicators of the positioning of the products on the markets can be carried out in parallel each other, but before of the beginning of operation over creation of object-relational models of interrelations between data of various databases, when process becomes consecutive. Data of different steps of the second stage depend from each other, also influence on each other, therefore, interrelations between them are analyzed. It is illustrated by means of model [Fig.2]. The process of systematization of information on various blocks of indicators can be carried out in parallel, when interrelations are established in one database, but when interrelations begin to be analyzed between different blocks of information, then the process stops being parallel, and becomes consecutive. The object-relational models are tools, which allow to form the different blocks of information from different databases relating to different steps of second stage and to establish interrelations between them. The scheme [Fig.2] illustrates the direct and returnable arrows, which show interrelations between steps and blocks of information of different databases management systems at forming object-relational models of the second stage. Each step of this stage includes consistently carried out operations.

**List of operations 2 stages [Fig.2]:**

2.1 - to determine formulas for calculating the main indicators of planning;

2.2 - to carry out the system analysis of interrelations between the data within a specific database, generated on the first stage;

2.3 - to define relationships between different databases, generated on the first stage;

2.4 - to generate object-relational analog-to-digital models for establishment of relationships between data of different databases of the situational-strategic system of planning.

**1st step - «The way of formation of object-relational database management system for planning of a business environment of firm»** includes the following operations:

2.1.1 - to define formulas of calculation of the main indicators of planning of a business environment of firm.

**Indicators of intensity of the competition in the commodity markets:**

$$[\text{Form. } 2.1.1.1,\ 2.1.1.2] \quad И_{к_т} = \frac{m}{n} \ ; \quad И_{к_п} = \frac{n}{m}$$

where: $И_{к_т}$ - intensity of the competition between producers in the commodity markets;

$И_{к_п}$ - intensity of the competition between buyers in the commodity markets;

*m* - number of producers; *n* - number of buyers of a product.

**Indicators of share of intermediaries at sales of products of firm:**

$$[\text{Form. } 2.1.1.3, 2.1.1.4] \quad d_т = \frac{V_т}{V_т + V_{т_{сб}}} \ ; \ d_{т_{сб}} = \frac{V_{т_{сб}}}{V_т + V_{т_{сб}}},$$

where $V_T$ + $V_{т_{сб}}$ - total number of contracts for purchase of product of this type;

$V_T$ - number of direct contracts with consumers of product;

$V_{т_{сб}}$ - number of contracts with resellers for sale of product;

$d_T$ - share of direct contracts with consumers of a product in total number of transactions;

$d_{т_{сб}}$ - share of contracts for sale product through resellers.

**Indicators of intensity of the competition between marketers in the commodity markets:**

$$[\text{Form. } 2.1.1.5, 2.1.1.6\ ] \quad И_{к_{сб_т}} = \frac{n_{сб}}{m} \ ; \ И_{к_{сб_п}} = \frac{n_{сб}}{n} \ ,$$

where $n_{сб}$ - number of resellers in the commodity markets;

*m* - number of producers - sellers of a product;

*n* - number of buyers of a product;

$И_{к_{сб_т}}$ - intensity of the competition between resellers in the commodity markets over products and their producers;

$И_{к_{сб_п}}$ - intensity of the competition between resellers in the commodity markets over the buyers;

**Indicators of a share of presence in the market:**

$$[\text{Form. } 2.1.1.7, 2.1.1.8] \qquad d_{\Phi_{\text{т.р}}} = \frac{n_{\text{т}\Phi}}{n}; \qquad d_{\text{К}_{\text{т.р}}} = \frac{n_{\text{тк}}}{n},$$

where $d_{\phi\text{Т.р}}$ - share of the firm over sales to buyers of the commodity market;
$d_{\text{кТ.р}}$ - share of competitors of the firm over sales to buyers of the commodity market;
$n_{\text{Т}\Phi}$ - number of consumers of products of firm in local market;
$n_{\text{Т}_{\text{к}}}$ - number of consumers of products of competitors of firm in the market;
$n$ - total number of consumers in the local market.

**Indicators of comparative competition of positions of firm on the market:**

$$[\text{Form. } 2.1.1.9 - 2.1.1.11] \quad K_{d_{\text{т.р}}} = \frac{d_{\Phi_{\text{т.р}}}}{d_{\text{к}_{\text{т.р}}}}; \; K_{Q_{\text{т}}} = \frac{Q_{\text{т}\Phi}}{Q_{\text{тк}}}; \; K_{\text{Ц}_{\text{т}}} = \frac{\text{Ц}_{\text{т}\Phi}}{\text{Ц}_{\text{тк}}},$$

where $K_{Q_\text{T}}$ - comparative competitiveness coefficient of firm over the volume of the product, marketed on a certain commodity market;
$K_{\text{Ц}_\text{т}}$ - comparative competitiveness coefficient of firm over the price of the product, marketed on a certain commodity market;
$K_{d\text{T.р}}$ - comparative competitiveness coefficient of firm over a share of presence of the firm on the commodity market;
$d_{\Phi\text{T.р}}$ - share of the firm over sales to buyers of the commodity market;
$d_{\text{кТ.р}}$ - share of competitors of the firm over sales to buyers of the commodity market;
$Q_{\text{Т}_\phi}$ - the volume of the product, marketed by firm on a certain commodity market;
$\text{Ц}_{\text{т}\Phi}$ - the price of the product, marketed by firm on a certain commodity market;
$Q_{\text{Т}_\text{к}}$ - the volume of the product-analog, marketed by competitors of firm on a certain commodity market; $\text{Ц}_{\text{тк}}$ - the price of the product-analog, marketed by competitors of firm on a certain commodity market;

2.2.1 - to carry out the complex analysis of interrelations between indicators of a business environment of firm, namely: between data of a line and columns in one database;
2.3.1 - to establish interrelations between indicator of a business environment of firm and product-markets strategies, various indicators of the plan, i.e. between lines and columns of the database for planning of a business environment of firm and lines and columns of other databases defining strategy and indicators of the plan over product.
2.4.1 - to generate an object-relational analog-to-digital model, which establishes relationships between indicators of a business environment of firm and by product-markets strategies. The example of similar object-relational model [Fig.2.1].

The interrelations are established between various planned indicators, and also between them and the strategy of their optimization by means of object-relational model. On the one hand, are establish interrelations between indicators of dynamics of the markets, resellers, buyers, consumer demand and the competition. On the other hand, are establish interdependence between assortment, volume, quality and price indicators of products. In purposes of the optimization of these indicators the interrelations are established between them and indicators of a business environment of firm. However, not only situations on markets have influence on programs of firm over products, but and programs of firm exert impact on the formation of the business environment of the firm, namely: on circle of buyers and their inquiries, resellers, on definition of the markets, into which the firm seeks to receive an exit.

**2nd step - «The way of formation of object-relational database management system for planning of long-term and current strategies of the offer of products of firm»** includes the following operations:

2.1.2 - to define typical long-term strategies of growth and interrelation between them;
2.2.2 - to define current strategies over product and market and interrelation between them;
2.3.2 - to establish interrelations between long-term and current products-markets strategies;
2.4.2 - to generate an object-relational analog-to-digital model, which establishes relationships between long-term and current strategies of the firm, between indicators of the situational-strategic plan characterizing them [Fig.2.2].

The interrelations are established between the current strategies over products and markets and with strategies on the long-term period, and also between the indicators characterizing them by means of object-relational model. For example, the strategy of intensive growth, what consist in deep penetration of firm on the market is integrated most often with the strategies of regressive or horizontal integration, which strengthen control the firm over suppliers of resources and competitors. The long-term strategy of concentric diversification, what consist in replenishment of the commodity assortment by modifications of the existing products, is based not on expansion of spheres of influence, but on deeper presence in former market segments, weakening of the competition at them. This strategy will often be coordinated with the current strategy of narrow specialization, selective penetration on the market and with the concentrated, passive marketing. The current strategy of low costs and low prices apply not only with the strategy of broad or deep coverage of the markets by the identical commodity offer in combination with undifferentiated marketing, but also with the strategy of the successor in the market or preservations of positions on the market and passive marketing.

The strategy of intensive growth, what consist in expansion of borders of the market is most often unites with the long-term strategy of the progressive integration, which establishes more rigid control over system of distribution, and with strategy of the conglomerate diversification in form of replenishment of commodity nomenclature and commodity assortment essentially by new products, which have no relation neither to the used technologies, nor to existing products and markets of the firm. The current strategies of release of novelties and differentiation of the commodity assortment consists in wide penetration of the firm on the market at the expense of the various commodity offer and implementation of the differentiated marketing.

The strategy of intensive growth of firm as a result improvement of quality of products unites with the strategy of regressive integration. Rigid control over suppliers will allow firm to receive better raw materials, materials, components at the favorable prices, what is very important for realization of the current strategies of improvement of quality of products and productions of novelties, which implement with strategy of the active, concentrated marketing. These current strategies at the same time combine with the strategy of the horizontal diversification for replenishment by new products of the commodity assortment, what can attract interest of consumer clients of the firm in former segments of the market. Information about what current strategy for a product and the market most correspond with strategies of long-term development of firm is very important for planning the relations between the strategies of various level, and also for the choice of compatible long-term and current strategies, for the choice of orientation of development and for replacements of strategy at changing a situation.

**3rd step - «The way of formation of object-relational database management system for planning of the assortment indicators of the firm»** includes the following operations:

2.1.3 - to define indicators for assessment of width, depth, harmony, elasticity of the commodity nomenclature and commodity assortment, also formulas for calculation of efficiency of their correction, taking into account temporary cycles of demand.

**Indicators of efficiency of correction of width of commodity nomenclature and commodity assortment, depth of commodity assortment:**

$$[\text{Form. } 2.1.3.1\text{- } 2.1.3.3] \qquad \frac{l^t{}_{\text{кор}(\Delta l;\nabla l;l^3)_A}}{l^t{}_{A_{\text{с/л}}}} \cong 1 \ ; \frac{b^t{}_{\text{кор}(\Delta b;\nabla b;b^3)_{A_1}}}{b^t{}_{A_{1\text{с/л}}}} \cong 1; \frac{h^t{}_{\text{кор}(\Delta h;\nabla h;h^3)_{A_{1.1}}}}{h^t{}_{A_{1.1\text{с/л}}}} \cong 1$$

where $l^t{}_{A_{c/\pi}}$ - demand of the local market in width of the commodity nomenclature «*A*» on *t* stage of life cycle of demand;
$t \in \{1,2,3,4,5\}$ - stages of life cycle of demand and of offering products;

$l^t{}_{\text{кор}(\Delta l;\nabla l;l^3)_A}$ - adjustment of the commodity nomenclature «*A*» by means of addition, reduction, replacements of the assortments, which enter in commodity nomenclature at *t* stage of offer;

$b^t{}_{A_{1\text{с/л}}}$ - demand of the local market in width of the commodity assortment «$A_1$» on *t* stage of life cycle of demand;

$b^t{}_{\text{кор}(\Delta b;\nabla b;b^3)_{A_1}}$ - adjustment of the commodity assortment «$A_1$» by means of addition, reduction, replacements of the types of products in commodity assortment on *t* stage of offer;

$h^t{}_{A_{1.1\text{с/л}}}$ - demand of the local market on depth of the commodity assortment on *t* stage of life cycle of demand;

$h^{t}{}_{кор(\Delta h;\nabla h;h^{3})_{A_{1.1}}}$ - adjustment of depth of the commodity assortment by means of addition, reduction, replacements in composition of modifications «$A_{1.1}$» on $t$ stage of offer.

For assessment of balance between supply and demand over indicators of width of the commodity nomenclature, width and depths of the commodity assortment, compare data plurality of supply and demand, taking into account dynamics them during temporary stages of positioning of the commodity assortments on the markets.

**Indicators of supply and demand of data plurality of the assortment:**

[Form. 2.1.3.4 – 2.1.3.5]

$$\left\{\bigcup_{ТН\in A}^{t\in 1...5}|l_{сТН}| \in \bigcup_{ТА\in A_1...A_l}^{t\in 1...5}|b_{сТА_А}| \in \bigcup_{ТА\in A_{1.1}...A_{b.l}}^{t\in 1...5}|h_{сТА_А}|\right\};\left\{\bigcup_{ТН\in A}^{t\in 1...5}|l_{пТН}| \in \bigcup_{ТА\in A_1...A_l}^{t\in 1...5}|b_{пТА_А}| \in \bigcup_{ТА\in A_{1.1}...A_{b.l}}^{t\in 1...5}|h_{пТА_А}|\right\} -$$

respectively cumulative supply and demand over width of the commodity nomenclature, width and depth of the commodity assortment during stages of their life cycles; E- includes. The sign of inclusion shows that the width of the nomenclature includes all width of the commodity assortment; assortment in turn - all number of modifications of each type of a product.

**Elasticity coefficient of the commodity assortment:**

$$\text{[Form. 2.1.3.6]} \qquad Ke_{A_1} = \frac{e_{A_1}}{b_{A_1}},$$

where $Ke_{A_1}$ - elasticity coefficient of the commodity assortment «$A_1$»;
$e_{A1}$ - number of flexible types of products (goods) in commodity assortment «$A_1$»;
$b_{A_1}$ - total number of types of products (goods) in commodity assortment «$A_1$».

The elasticity coefficient is determined by the relation of number of the products capable to change of price and quality to total number of products in assortment group. Coefficients of elasticity of different types of products determine by the relation of number of its elastic modifications, to total number of its modifications. The elasticity of different types of products at the price and on quality are determine similarly.

**Coefficients of elasticity of products:**

[Form. 2.1.3.7 – 2.1.3.9]

$$Ke_{A_{1.1}} = \frac{e_{A_{1.1}}}{h_{A_{1.1}}};\ \ Ke_{Ц_{A_{1.1}}} = \frac{e_{Ц_{A_{1.1}}}}{e_{A_{1.1}}};\ \ Ke_{кач_{A_{1.1}}} = \frac{e_{кач_{A_{1.1}}}}{e_{A_{1.1}}},$$

where «$A_{1.1}$» - type of commodity group in commodity assortment «$A_{1.1}$»; (further in the text the called goods of «$A_{1.1}$»;
$Ke_{A1.1}$ - coefficient of elasticity of goods of «$A_{1.1}$»;
$e_{A_{1.1}}$ - total number of flexible modifications of goods «$A_{1.1}$»;
$h_{A1.1}$ - total number of modifications of goods of «$A_{1.1}$»;
$e_{Ц_{A_{1.1}}}$ - number of modifications of goods«$A_{1.1}$», of flexible at the price;
$e_{кач_{A_{1.1}}}$ - number of modifications of goods«$A_{1.1}$», of flexible over quality;
$Ke_{Ц_{A1.1}}$ - coefficient of elasticity of goods«$A_{1.1}$» at the price;

$Ke_{\text{кач}A_{1.1}}$ - coefficient of elasticity of goods «$A_{1.1}$» over quality.

The commodity assortment is not rational if it is possible to increase profits, having made replacements of a number of the products, which enter in it, by modifications of products, which will be more flexible or more harmonious. The harmony indicator of the commodity assortment is determined mainly by the attitude of number of products, similar over qualitative or price characteristics, towards total number of products in commodity assortment.

**Harmony coefficient of the commodity assortment:**

$$\text{[Form. 2.1.3.10]} \qquad K_{G_{A_1}} = \frac{G_{A_1}}{b_{A_1}},$$

where $K_{G_{A_1}}$ - harmony coefficient of the commodity assortment «$A_1$»;

$G_{A1}$ - number of harmonious types of products in commodity assortment «$A_1$»;

$b_{A1}$ - total number of types of products in commodity assortment «$A_1$».

The analysis of the products harmony over separate indicators begin with definition of admissible borders of their fluctuations. For example, during estimate of price harmony of products, the borders of price are defined. The price cannot be established below of the minimum border, because minimum necessary level of costs of production of a product has to pay off. The upper bound of the price will be limited by demand on the market. Thus, the product at the price is harmonious, if the price of it is higher or is equal to the lower limit of the price and below or is equal to the price of demand for it.

**Borders of harmonious fluctuations of the price of a product:**

$$\text{[Form. 2.1.3.11]} \quad Ц_{A_{1.1_{\text{lim}}}} \leq Ц_{A_{1.1_{\text{п}}}} \leq Ц_{A_{1.1_{\text{с/л}}}},$$

where $Ц_{A_{1.1lim}}$ - the extreme (limited) lower level of the price of a concrete type of a product «$A_{1.1}$» on local market, which will allow to raise demand in product;

$Ц_{A_{1.1_{\text{п}}}}$ - the price of offer of concrete type of a product «$A_{1.1}$», which is established by firm for local market; $\boldsymbol{A_{1.1}}$ - for an example the chosen type of a product in commodity assortment «$A$»;

$Ц_{A_{1.1_{\text{с/л}}}}$ - price of demand of the local market on the product «$A_{1.1}$» or top level of the price.

For estimating of a harmony of products over effectiveness of target function, on the contrary, limit of upper bound of effectiveness is defined, above which it should not be, in view of the forecast of increase of consumer requirements to quality of products, and also resources restrictions in the form of the formed limit of costs of production of a product. The lower border is determined by requirements of demand, because if a product over quality below the minimum level of demand, then product most likely will not be realized. As a result, the product over effectiveness of target function is harmonious, if effectiveness its lower or is equal to the top limit of this indicator and above or is equal to requirements of demand in effectiveness of this product.

**Borders of harmonious fluctuations of effectiveness of a product:**

$$\text{[Form. 2.1.3.12]} \quad RZ_{A_{1.1_{\text{с/л}}}} \leq RZ_{A_{1.1_{\text{п}}}} \leq RZ_{A_{1.1_{lim}}},$$

where $RZ_{A_{1.1_{lim}}}$ - the top level (the limit) of effectiveness of a concrete type of a product «$A_{1.1}$» on local market, which will allow to raise demand in product;
«$A_{1.1}$» - for an example the chosen concrete type of a product in commodity assortment «$A_1$»;
$RZ_{A_{1.1_{п}}}$ - offered effectiveness of a product «$A_{1.1}$» on the local market;
$RZ_{A_{1.1_{с/л}}}$ - demand of local market in effectiveness of a product«$A_{1.1}$».

2.2.3 - to establish interrelations between lines and columns in the database for planning of the commodity nomenclature and commodity assortment;
2.3.3 - to establish interrelations between data of different databases for planning of the commodity nomenclature, assortment and data of the database for planning product-markets strategies of firm;
2.4.3 - to generate an object-relational analog-to-digital model, which establishes relationships between indicators of the commodity nomenclature, of commodity assortment and product-markets strategies, taking into account temporary and spatial parameters [Fig. 2.3].

The influence of temporary and spatial parameters on formation of indicators of the commodity nomenclature and assortment, their interrelation with development strategies of firm is established by means of object-relational analog-to-digital model. The assortment strategies are connected with each other and with various product-markets strategies. For example, the strategies of expansion of the commodity nomenclature and assortment, deepening of the commodity assortment, partial replacements in structure of the commodity assortment for increases in its harmony and elasticity are compatible. They can be implemented not only with the strategy of extension of the offer of products at the expense of low costs and the low prices of production or with strategy of broad of offering identical product in all markets in combination with undifferentiated, active marketing, but also with strategy of differentiation of production, of offering products and with strategy of broad penetration on the markets in combination with differentiated, active marketing. The strategies of differentiation are usually connected with global change of structures of the commodity assortment and with improvement of quality of the offered products.

Strategy over release of novelties usually is combined with strategies of partial replacements in structure of the commodity assortment, with increase in its harmony and elasticity, these strategies are carry out or as a result of strategy of selective, deep penetration on the markets in combination with concentrated marketing, or as a result strategy of broad of offering identical products on the different markets in combination with undifferentiated, active marketing. The strategies of the successor in the market or of selective penetration on the markets in combination with passive marketing are usually used in a situation of low costs and the low prices on products, when the commodity nomenclature and assortment are narrowing. In some cases, to narrowing of the commodity nomenclature and assortment resort at strategies of narrow specialization and selective penetration on the markets, carrying out the concentrated marketing.

**4th step - «The way of formation of object-relational database management system for planning of the temporary parameters of offering products of the firm»** includes the following operations:

2.1.4 - to determine formulas of calculation of temporary stability of supply and demand, including temporary stability by volume, price, quality indicators of supply and demand of products. Indicators of log of temporary stability of supply and demand estimate over each of main indicator of positioning of product in the market.

**Coefficients of stability of price parameters of supply and demand of a product:**

$$[\text{Form.2.1.4.1, 2.1.4.2}] \qquad K_{st}{t}_{с_{Ц_{т}}} = \frac{t_{с_{Ц_{т}}const}}{t_{с_{т}общ}}, \qquad K_{st}{t}_{п_{Ц_{т}}} = \frac{t_{п_{Ц_{т}}const}}{t_{п_{т}общ}}$$

where $K_{st}{t}_{с_{Ц_{т}}}$ - coefficient of temporary stability of price parameters of demand in product;

$t_{с_{Ц_{т}}const}$ - duration of invariable price demand, i.e. the period of time during which the price of demand in product is stable (is constant);

$t_{с_{т}общ}$ - general duration of life cycle of demand in product;

$K_{st}t_{\text{пц}_{\text{т}}}$ - coefficient of temporary stability of price parameters of offering product;

$t_{\text{пц}_{\text{т}}const}$ - duration of the invariable price offer, i.e. the period of time during which the offer price of a product is stable (is constant);

$t_{\text{п}_{\text{т}}\text{общ}}$ - the general duration of life cycle of the offer of a product in the market.

**Coefficients of temporary stability of supply and demand of effectiveness parameters of target function of a product:**

$$[\text{Form.2.1.4.3} - 2.1.4.4] \qquad K_{\text{с}_{RZ_{\text{т}}}} = \frac{t_{\text{с}_{RZ_{\text{т}}const}}}{t_{\text{с}_{\text{т}}\text{общ}}}\,, \qquad K_{st}t_{\text{п}_{RZ_{\text{т}}}} = \frac{t_{\text{п}_{RZ_{\text{т}}const}}}{t_{\text{п}_{\text{т}}\text{общ}}}$$

where $K_{st}t_{\text{с}_{RZ_{\text{т}}}}$ - coefficient of temporary stability of demand in effectiveness parameters of target function of a product;

$t_{\text{с}_{RZ_{\text{т}}const}}$ - duration of invariable demand in product, i.e. the period of time during which demand in effectiveness parameters of target function of a product is stable;

$t_{\text{с}_{\text{т}}\text{общ}}$ - general duration of life cycle of demand in product;

$K_{st}t_{\text{п}_{RZ_{\text{т}}}}$ - coefficient of temporary stability of the offer of effectiveness parameters of target function of a product;

$t_{\text{п}_{RZ_{\text{т}}const}}$ - duration of the invariable offer on quality of a product, i.e. the period of time during which the offer of effectiveness parameters of target function of a product is stable;

$t_{\text{п}_{\text{т}}\text{общ}}$ - the general duration of life cycle of the offer of a product in the market.

The comparative analysis with use of formulas, of coefficients of temporary stability of the main indicators of supply and demand are carry out for definition of reserves of temporary balance, taking into account changes of supply and demand over price and qualitative parameters of a product during stages of its life cycle in the market.

**2.2.4** - to establish interrelations between lines and columns in borders of the made database, namely: between stages of production, positioning and practical use of end products, and also between stages of life cycle of supply and demand of product;
**2.3.4** - to establish interrelations between data of different databases, namely: between the database for planning of temporary parameters of supply and demand and the database for planning of product-markets strategies and the main indicators of offering products;
**2.4.4** - to generate an object-relational analog-to-digital model of interrelations - of the relations between stages of life cycle of demand and offer, and also between the temporary parameters and product-markets strategies, by plan indicators corresponding to them [Fig.2.4].

On one hand, duration of demand in product has impact on duration of life cycle and stages of the offer of a product in the market, but on the other hand, duration of life cycle of the offer of a product influences on duration of demand. The set of constant data is systematized by means of object-relational models, namely: about stages of life cycles of supply and demand of products, interrelations between them, about influence of temporary factors on indicators of the commodity nomenclature and assortment, quality, volumes, and price of different types of products.

Thus, stages of life cycles of supply and demand of a product are constantly repeating for each new cycle and a product, but their duration are in continuous change under the influence of various factors. Achievement of temporary balance - the dynamic process, which is characterized by the identity for each concrete product on each local market. Indicators of planning are typical for any kind of product and commodity assortment of firm, but their values are in dynamics and depend on life cycles of products. Object-relational model [Fig. 2.4] illustrates process of correction of indicators of products under the influence of change of consumer demand during time. Besides, it shows cumulative influence of various indicators of the offer on indicator of efficiency of a product that demonstrates that each concrete indicator of the offer of a product is optimized, first, for achievement of temporary balance with demand of the different markets, and secondly, for its compatibility with values of other indicators of the offer of a product for achievement of the best synergetic effect.

**5th step - «The way of formation of object-relational database management system for planning of quality indicators of products»** includes the following operations:

2.1.5 - to define formulas for calculation of target function of products and its parameters, namely: of effectiveness of target function and cumulative expenses.

**Indicator of target function of product:**

$$[\text{Form. 2.1.5.1}] \qquad Z_{\text{т}} \in \sum_{\text{у}=1\ldots i} \frac{Q_{\text{у}_{\text{т}}}}{З_{\text{у}_{\text{т}}}} \in \left\{ \frac{Q_{\text{у}_{1_{\text{т}}}}}{З_{\text{у}_{1_{\text{т}}}}} = Z_{\text{у}_{1_{\text{т}}}}; \quad \frac{Q_{\text{у}_{2_{\text{т}}}}}{З_{\text{у}_{2_{\text{т}}}}} = Z_{\text{у}_{2_{\text{т}}}}; \ldots; \quad \frac{Q_{\text{у}_{i_{\text{т}}}}}{З_{\text{у}_{i_{\text{т}}}}} = Z_{\text{у}_{i_{\text{т}}}} \right\},$$

where $Z_{\text{Т}}$ - target function of the offered product during the guaranteed term of its operation;

$Z_{\text{у}_{1_{\text{т}}}}; Z_{\text{у}_{2_{\text{т}}}}; \ldots; Z_{\text{у}_{i_{\text{т}}}}$ - target function of the 1, 2,..., *i-y* of the services during guaranteed product service life;

$\sum_{\text{у}=1\ldots i} \frac{Q_{\text{у}_{\text{т}}}}{З_{\text{у}_{\text{т}}}}$ - target function of the product during guaranteed product service life;

∈ - the sign means "inclusion»;

{...} - plurality of values from 1 to *i* of the services of target function of a product during the guaranteed term of its operation. The guaranteed product service life accepted for calculations in all formulas should not be confused with guarantee period of product, which is usually established from of year up to three years.

Target function of a product characterizes effectiveness of each of its services to unit of cumulative expenses of the consumer, and by that characterizes the qualitative level of product for the consumer, and also its usefulness and rationality during operational life cycle.

**Cumulative effectiveness of target function of product:**

$$[\text{Form. 2.1.5.2}] \qquad Q_{\text{у}_{1_{\text{т}}}} + Q_{\text{у}_{2_{\text{т}}}} + \cdots + Q_{\text{у}_{i_{\text{т}}}} = \sum_{\text{у}=1\ldots i} Q_{\text{у}_{\text{т}}} = RZ_{\text{т}},$$

where $Q_{\text{у}_{1_{\text{т}}}}; Q_{\text{у}_{2_{\text{т}}}}; \ldots; Q_{\text{у}_{i_{\text{т}}}}$ - effectiveness of the 1, 2,..., *i-y* of the services during guaranteed product service life;

$\sum_{\text{у}=1\ldots i} Q_{\text{у}_{\text{т}}}$ - summary effectiveness of the guaranteed set of the services, rendered by product during its all service life.

In more compact, simplified look of effectiveness of target function of a product is designated - $RZ_{\text{T}}$.

**Cumulative consumer costs of receiving *i-go* of the guaranteed set of the services, rendered by a product:**

[Form.2.1.5.3]

$$(Ц_{\text{у}_{1_{\text{т}}}} + З_{\text{э}_{\text{у}_{1_{\text{т}}}}}) + (Ц_{\text{у}_{2_{\text{т}}}} + З_{\text{э}_{\text{у}_{2_{\text{т}}}}}) + \cdots + (Ц_{\text{у}_{i_{\text{т}}}} + З_{\text{э}_{\text{у}_{i_{\text{т}}}}}) = З_{\text{у}_{1_{\text{т}}}} + З_{\text{у}_{2_{\text{т}}}} + \cdots + З_{\text{у}_{i_{\text{т}}}} = \sum_{\text{у}=1\ldots i} З_{\text{у}_{\text{т}}} = З_{\text{п}}$$

where $Ц_{у_{1_т}}; Ц_{у_{2_т}}; ...; Ц_{у_{i_т}}$ - the price the 1st, 2nd,..., *i-y* of the service, rendered by product;

$\sum_{y=1...i} З_{у_т}$ - cumulative consumer costs of receiving *i* - Γo *of the* guaranteed set of the services, rendered by a product during its service life;

$Ц_т$ - price of product for the consumer;

$З_п$ - cumulative expenses of the consumer of a product;

$З_{у_{1_т}}; З_{у_{2_т}}; ...; З_{у_{i_т}}$ - consumer costs of receiving the 1st, 2nd,..., *i-y of the* service, rendered by product;

$З_{эу_{1_т}}; З_{эу_{2_т}}; ...; З_{эу_{i_т}}$ - operational expenses of the consumer at implementation of the 1, 2, *i*-y of the services, rendered by product.

The consumer cost of each concrete service, rendered by a product is determined by set of the postponed share of the price of a product and operational expenses of the consumer on one service.

2.2.5 - to establish interrelations between lines and columns in borders of the made database, namely: are carry out the system analysis and define influence of parameters of quality on each other and on target function of product;
2.3.5 - to establish interrelations between data of different databases, namely: between the database for planning target function, quality of the product and the database for planning of product-markets strategies and stages of life cycle of offering products;
2.4.5 - to generate an object-relational analog-to-digital model of interrelations - of the relations between qualitative parameters of strategy, the target function of products and by needs in them, taking into account temporary and spatial parameters of demand.

Object-relational model [Fig. 2.5] shows functional dependences between requirements, a product and services during all service life of product. The services of a product, when it gets form of the commodity, are the concentrated expression of its target function, and by means of the realization of consumer usefulness, the product has to promote satisfaction of public requirement. Any commodity surely carry out not only the main functions, but and functions of accompanying, providing, supporting. In the course of planning of satisfaction of consumer demand analyze all functionality of a product, which expand, if it is expedient. All functions of a product have to be focused on the best exercise of target function, what directly depends on effectiveness and rationality of realization of the services of product in the course of use.

The main function of consumers - "to wish service", and the main function of a product - «to satisfy requirement». Therefore, realization of the target function of product has to be planned through the functions providing its effectiveness, quality, reliability, service life, price and esthetic characteristics, and those, in turn, is necessary to define through the content of target services, which this product carries out, and quality of their rendering. Everything together they influence formation of quality indicators of the plan over products.

**6th step - «The way of formation of object-relational database management system for planning of indicators of offering products, taking into account the temporal and spatial parameters»** includes the following operations:

2.1.6 - to define formulas for calculation of efficiency of products for producers, consumers, marketers, financiers, as well for the national economy in general.

**Coefficient of efficiency of a product for producer:**

[Form.2.1.6.1] $$K_{эф.т_{х/р}} = \frac{Ц_т}{З_{т_{х/р}}} = \frac{Э_{т_{х/р}}}{З_{т_{х/р}}}$$

where $K_{эФ.Т_{х/р}}$ - coefficient of efficiency with product units for the producer;

$Ц_т$ - the price of sale by the producer of a product of a certain type;

$Э_{Т_{х/р}}$ - effect of the producer from production and sale of unit of a product of a certain type;

$З_{Т_{х/р}}$ - costs of production and sale by producer of unit of a product of a certain type.

**Coefficient of efficiency of the producer** from realization of the cumulative offer of a product in the markets during its full life cycle:

[Form.2.1.6.2]

$$K_{эф_{ТП_{х/р}}} = \frac{(Ц_{Т}^{1} \times Q_{Т}^{1}) + (Ц_{Т}^{2} \times Q_{Т}^{2}) + (Ц_{Т}^{3} \times Q_{Т}^{3}) + (Ц_{Т}^{4} \times Q_{Т}^{4}) + (Ц_{Т}^{5} \times Q_{Т}^{5})}{(З_{Т_{х/р}}^{1} \times Q_{Т}^{1}) + (З_{Т_{х/р}}^{2} \times Q_{Т}^{2}) + (З_{Т_{х/р}}^{3} \times Q_{Т}^{3}) + (З_{Т_{х/р}}^{4} \times Q_{Т}^{4}) + (З_{Т_{х/р}}^{5} \times Q_{Т}^{5})},$$

where $K_{эф_{ТП_{х/р}}}$ - coefficient of efficiency of the producer from realization of the cumulative offer of a product in the markets during its full life cycle:

$$Ц_{Т}^{1}\,;Ц_{Т}^{2}\,;\ Ц_{Т}^{3}\,;Ц_{Т}^{4}\,;Ц_{Т}^{5}$$

- the price of sale by the producer of unit of a product respectively at the 1st, 2nd, 3rd, 4th, 5th stages of its life cycle in the market;

$З_{Т_{х/р}}^{1}\,;З_{Т_{х/р}}^{2}\,;\ З_{Т_{х/р}}^{3}\,;З_{Т_{х/р}}^{4}\,;З_{Т_{х/р}}^{5}$ - costs of production and sale by producer of unit of a product respectively at the 1st, 2nd, 3rd, 4th, 5th stages of its life cycle in the market;

$Q_{Т}^{1}\,;Q_{Т}^{2}\,;\ Q_{Т}^{3}\,;Q_{Т}^{4}\,;Q_{Т}^{5}$ - sales volume by producer of a concrete product respectively at the 1st, 2nd, 3rd, 4th, 5th stages of its life cycle in the market (in natural expression).

**Coefficient of consumer efficiency of a product:**

[Form.2.1.6.3] $$K_{эф_{Т_П}} = \frac{Э_{Т_П}}{З_{Т_П}},$$

where $З_{Т_П}$ - the consumer's costs of receiving the guaranteed set of services of product unit during its all service life;

$Э_{Т_П}$ - effect of the consumer from product unit during its all guaranteed service life;

$K_{эф_{Т_П}}$ - coefficient of consumer efficiency of unit of a product.

**Effect of the consumer:**

[Form. 2.1.6.4]

$$(Q_{у_{1_Т}} \times P_{у_1}) + (Q_{у_{2_Т}} \times P_{у_2}) + \cdots + (Q_{у_{i_Т}} \times P_{у_i}) = \sum_{у=1\ldots i} (Q_{у_Т} \times P_{у}) = \sum_{у=1\ldots i} Э_{у_{Т_П}} = Э_{Т_П},$$

where $\sum_{у=1\ldots i} Э_{у_{Т_П}}\,; Э_{Т_П}$ - effect of the consumer from product unit during all guaranteed service life;

$Q_{у_{(1,2,..i)_Т}}$ - effectiveness (volume) respectively 1,2,, *i-y of the* service, rendered by product during its all guaranteed service life;

$P_{y(1,2,\ldots,i)}$ - price of market of services on unit of volume of the work, performed respectively for 1, 2., *i-y* of the service, rendered by product, i.e. from the guaranteed set of the services during all service life of product.

The effect of the consumer is defined on the basis of that, how many he will win, if will satisfies the demand in result of acquisition of a product.

The possible expenses of consumer on the market of services, which at acquisition of a product avoid, in this case will mean the consumer effect - benefit.

**Cumulative expenses of the consumer:**

$$\text{[Form. 2.1.6.5]} \quad \sum_{y=1...i} Ц_{у_т} + \sum_{y=1...i} З_{э у_т} = \sum_{y=1...i} З_{у_{т_п}} = З_{т_п},$$

where *i* -the guaranteed set of the services, rendered by a product during its all service life;

*y* - the service, rendered by a product; y=1...*i* - services from the 1st to *i-y*;

$\sum_{y=1...i} Ц_{у_т}$ - price of services, rendered by a product during its all guaranteed service life, equal to the price of acquisition of a product by the consumer;

$\sum_{y=1...i} З_{э у_т}$ - operational expenses of consumer on receiving services, rendered by a product during its all guaranteed service life;

$\sum_{y=1...I} З_{у_{т_п}}$ ; $З_{т_п}$ - cumulative expenses of the consumer of a product on receiving guaranteed set of the services, rendered by a product during its all service life.

Cumulative expenses of the consumer determine by the total cost of the services rendered by a product. Any service, rendered by a product, has the price, which consists of the postponed share of price, paid by the consumer of product and of the operational expenses of the consumer at using this product, if those are required. At calculation of this indicator it is necessary to distinguish the price, quoted by a producer, from price of the product for the consumer, which usually above, because they include a tax on additional cost and the trade additive to the price.

**Coefficient of consumer efficiency of a product, taking into account full life cycle of demand in it:**

$$\text{[Form.2.1.6.6]} \quad K_{эф_{тп_п}} = \frac{(Э^1_{т_п} \times Q^1_т) + (Э^2_{т_п} \times Q^2_т) + (Э^3_{т_п} \times Q^3_т) + (Э^4_{т_п} \times Q^4_т) + (Э^5_{т_п} \times Q^5_т)}{(З^1_{т_п} \times Q^1_т) + (З^2_{т_п} \times Q^2_т) + (З^3_{т_п} \times Q^3_т) + (З^4_{т_п} \times Q^4_т) + (З^5_{т_п} \times Q^5_т)},$$

where $K_{эф_{тп_п}}$ - coefficient of consumer efficiency from acquisition of all volume of a product of a certain type (in kind form);

$Q^1_п; Q^2_п; Q^3_п; Q^4_п; Q^5_п$ - quantity of the acquired product by consumer respectively at the 1st, 2nd, 3rd, 4th and 5th stages of life cycle of demand in it (in kind form);

$З^1_{т_п}; З^2_{т_п}; З^3_{т_п}; З^4_{т_п}; З^5_{т_п}$ - expenses of the consumer of a product on receiving guaranteed set of the services, rendered by unit of the product acquired respectively at the 1st, 2nd, 3rd, 4th, 5th stages of life cycle of demand in it;

$Э^1_{т_п}; Э^2_{т_п}; Э^3_{т_п}; Э^4_{т_п}; Э^5_{т_п}$ - effect of the consumer from product unit during all guaranteed service life in the form of economy on expenses for alternative services in the market of services during the different temporary periods - a stage of life cycle of demand in goods.

**Coefficient of efficiency of the resellers from realization of products:**

$$[\text{Form.2.1.6.7}] \qquad K_{эф_{тпсб}} = \frac{\Delta P_т \times Q_т}{З_{тсб} \times Q_т},$$

where $З_{тсб}$ - resellers's costs of realization of unit of a product;

$K_{эф_{тпсб}}$ - coefficient of efficiency of the resellers from realization of products of the certain type;

$Q_T$ - sales volume of product by resellers (in kind form);

$\Delta P_T$ - extra charge to price of the product unit, which is received by resellers.

**Coefficient of efficiency of the product for resellers, taking into account full life cycle of demand:**

[Form.2.1.6.8]

$$K_{эф_{тпсб}} = \frac{(\Delta P_т^1 \times Q_т^1) + (\Delta P_т^2 \times Q_т^2) + (\Delta P_т^3 \times Q_т^3) + (\Delta P_т^4 \times Q_т^4) + (\Delta P_т^5 \times Q_т^5)}{(З_{тсб}^1 \times Q_т^1) + (З_{тсб}^2 \times Q_т^2) + (З_{тсб}^3 \times Q_т^3) + (З_{тсб}^4 \times Q_т^4) + (З_{тсб}^5 \times Q_т^5)},$$

where $З_{тсб}^1; З_{тсб}^2; З_{тсб}^3; З_{тсб}^4; З_{тсб}^5$ - resellers's costs of realization of unit of a product respectively at the 1st, 2nd, 3rd, 4th, 5th stages of demand in it;

$\Delta P_т^1; \Delta P_т^2; \Delta P_т^3; \Delta P_т^4; \Delta P_т^5$ - extra charge to price of the product unit for resellers, respectively on the 1st, 2nd, 3rd, 4th, 5th stages of demand in it;

$Q_т^1; Q_т^2; Q_т^3; Q_т^4; Q_т^5$ - sales volume of product by resellers respectively at the 1st, 2nd, 3rd, 4th, 5th stages of demand in it.

**Coefficient of efficiency of the financier:**

$$[\text{Form. 2.1.6.9}] \qquad Э_{тф} = V_k \times k_c; \quad K_{эф_{тпф}} = \frac{Э_{тф}}{З_{тф}},$$

where $З_{Тф}$ - financier's costs of support and service of the transaction;

- $K_{эф_{тпф}}$ coefficient of efficiency of the financier from crediting of the production and sale of a certain commodity offer;

$Э_{тф}$ - effect of the financier from financing of production and sale of a certain commodity offer;

$V_k$ - volume of credit;

$k_c$ - financier's percent from the credit

**Coefficient of efficiency of a product for national economy:**

$$K_{эф_{тн/х}} = \frac{Э_{тн/х}}{З_{тн/х}} = \frac{Э_{тх/р} + Э_{тсб} + Э_{тф} + Э_{тп}}{З_{тх/р} + З_{тсб} + З_{тф} + З_{тп}};$$

where $К_{эф_{тн/х}}$ - coefficient of efficiency of a product of the certain type for national economy;

$Э_{Тн/х}$ - effect from product unit of the certain type for national economy;
$З_{ТН/Х}$ -cumulative expenses of producers, intermediaries and consumers on product unit of the certain type;
$Э_{Тх/р}$ - effect of the producer from production and sale of unit of a product of the certain type;
$Э_{Тсб}$ - effect of sphere of trade from realization of unit of a product of the certain type;
$Э_{Тф}$ - effect of sphere of finance from financing of production, sale and consumption of unit of a product of the certain type;
$Э_{Тп}$ - effect of the consumer from acquisition and use of unit of a product of the certain type;
$З_{Тх/р}$ - expenses of producers on the production and sale of unit of a product of the certain type;
$З_{Тсб}$ - expenses of sphere of trade on realization of unit of a product of the certain type;
$З_{Тф}$ - expenses of sphere of finance from financing of production, sale and consumption of unit of a product of the certain type;
$З_{Тп}$ - consumer's costs of purchase and use of unit of a product of the certain type;

2.2.6 - to establish interrelations between lines and columns in borders of the made database, namely: between the main planned indicators of the offer of products and indicators them of efficiency, taking into account temporary and spatial parameters;
2.3.6 - to establish interrelations between data of different databases, namely: between by database for planning of indicators of the offer, efficiency of products and by database for planning of product-markets strategies, temporary and spatial parameters of positioning of products;
2.4.6 - to generate an object-relational analog-to-digital model of interrelations - of the relations between indicators of efficiency of products and by product-markets strategies, by main indicators of offering products in the market, taking into account influence on them of temporary and spatial parameters [Fig 2.6].

The presented object-relational model shows influence of temporary parameters of life cycle of supply and demand of a product, its spatial parameters of positioning products on various markets on data plurality of quality, volume, price indicators of its offer, which are in turn connected with cumulative costs of production, sale and exploitation of a product. Everything together parameters of quality, volume, of price define efficiency of product for the manufacturer, the consumer, intermediaries, and the national economy in general. According to the object-relational scheme each indicator of the offer of a product are planning in interrelation, on the one hand, with other indicators of offer in purposes of formation them of synergetic plurality, and on the other hand, with indicators of consumer demand in purposes of economically reasonable regulation them.
Besides, for each stage of life cycle of positioning of a product in the market the optimum plurality of the data of these indicators is defined, coordinated with each other. It is shown on the scheme by dashed lines. At the same time, it is important to take into account, what not only temporary stages of demand exert impact on duration of stages of the offer of a product and on data of its volume, price, quality, but and price, qualitative parameters of its offer can either reduce, or increase demand for a product, stimulating it. The straight lines and the return relief shooters of model are shown these interrelations.
The contribution of coefficients of efficiency of a product for producer, consumers and for intermediaries into aggregate useful effect from a product and in formation coefficient of efficiency of a product for national economy in general is reflected on the scheme [Fig.2.6].
Communications - the relations between these indicators are illustrated on the model by straight lines and continuous shooters of return. Direct shooters of scheme reflect also mutual influence of data of quality, volume, price of offering product on each other, and also on indicators of expenses of resources and efficiency of a product. Continuous shooters of scheme are illustrating, what data of the commodity offer are under influence of time factor, i.e. depend from duration of stages of the offer of a product in the market. Efficiency of a product at different stages of its offering on markets is changeable, because volumes and the prices of demand change. Interrelations between various indicators of the offer of products, which are established by means of object-relational model, will allow to carry out effective planning them.
First, are planning achievement of temporary balance between supply and demand of a product, because it is a necessary prerequisite for finding of optimum values of other indicators of its offer.
Secondly, are planning such data of indicators of volume, effectiveness of target function, the price of offering product, plurality of which at different stages of life cycle of the offer of a product provides the highest synergetic effect at optimization of cumulative costs of its production, sale and exploitation. It will raise and consumer effect, and effect of the producer. The new mechanism of transformation of data of the offer of products provides the double effect, when both the coefficient of consumer efficiency, and coefficient of efficiency of produce for producer tend to growth and to an optimum combination with each other.

Thus, model [Fig.2.6] illustrates process of dynamic planning of the commodity offer of firm at different stages of consumer demand and characterizes such scheme of the relations in the course of planning, which will allow to provide technical result, at the expense of it increase of competitiveness of products, effect of the firm for best satisfaction of public requirements, consumer demand. The object-relational model [Fig.2.6] allows to plan not only the optimum offer of a certain type of a product for concrete commodity market, but also to establish indirect external interrelations between the prices and volumes of the offer of different types of products in the different commodity markets, to find options of optimization of the cumulative commodity offer of firm.

**List of designations [Fig.3]**

**3 stage - «The way of formation of dynamic rows of reference data of the plan on products, taking into account temporal and spatial parameters»** consists of the following stages:

3.1-5.1 - «The way of formation of dynamic rows of reference data of the plan about markets and business environment of firm»;
3.1-5.2 - «The way of formation of dynamic rows of reference data of the plan about development strategies and efficiency of firm»;
3.1-5.3 - «The way of formation of dynamic rows of reference data of the plan on indicators of the commodity nomenclature and commodity assortment»;
3.1-5.4 - «The way of formation of dynamic rows of reference data of temporary parameters of the plan on products»;
3.1-5.5 - «The way of formation of dynamic rows of reference data of the plan on parameters of target function, quality of products»;
3.1-5.6 - «The way of formation of dynamic rows of reference data of the plan on parameters of positioning products».
Model [Fig.3] illustrates the parallel and consecutive character of dependences at forming dynamic rows of reference data of indicators of the plan on products.

**List of operations of the 3rd stage [Fig.3]:**

3.1 - to collect and analyze data about achieved data of development of markets, enterprises, products;
3.2 - to carry out the cluster analysis for choice and systematization over probability degree of a set of the predicted variable data about possible tendencies of development of the markets, business environment, competition, consumer demand of different markets during the planned long-term period;
3.3 - to carry out the graphic analysis of change of consumer indicators of products, the markets, the competition, consumer demand under the influence of conditions and various factors;
3.4 - to carry out the dynamic forecast of the most probable tendencies of change in prospect (on stages of life cycle of demand) and at space (on the local markets) of variable data of demand for different types of products on the base of tools of multidimensional modeling and economic-mathematical forecasting;
3.5 - to define the dynamic rows of a plurality of reference data of different indicators of demand in products in the planned strategic zones of each local market during certain periods of time.

**1st step - «The way of formation of dynamic rows of reference data of the plan about markets and business environment of firm»** includes the following operations.

3.1.1 - to collect and analyze actual data about markets capacity, segments of market, number and list of buyers, intensity of the competition, degree of satisfaction of consumer demand, about business environment of firm and share of capture of the markets by firm;
3.2.1 - to carry out the cluster analysis, for choice and systematization over probability degree of a set of the predicted variable data about possible tendencies of development of the markets, a business environment, the competition, consumer demand in different markets during the planned long-term period;
3.3.1 - to carry out the graphic analysis of change of data of a business environment of firm under the influence of conditions and of tendencies of development of the markets, the competition during the planned long-term period;
3.4.1 - to carry out dynamic forecast of the most probable tendencies of change in prospect (on stages of life cycle of demand) and at space (on local markets) of data about indicators of a business environment of firm, the competition, markets on the base of tools economic-mathematical forecasting;

3.5.1 - to define dynamic rows of reference data of the plan on predicted indicators of a business environment of firm, capacity and segmentation of the markets, intensity of the competition on them during certain periods of time.

**2nd step - «The way of formation of dynamic rows of reference data of the plan about development strategies and efficiency of firm»** includes the following operations:

3.1.2 - to collect and analyze actual data about efficiency of firm and motivation of a producer (about level of capitalization, profits, profitability of firm, about volumes of production, capital investments);
3.2.2 - to carry out the cluster analysis of a plurality of the predicted variable data about change of financial opportunities, about profits, profitability of firm at different strategies of development of firm on different markets during certain period of time;
3.3.2 - to carry out the graphic analysis of the influence of conditions, various factors and a contribution of functional divisions of firm (the scientific research; the construction working; the technological and organizational preparation for production; the process of production) into realization of product-markets strategies of firm, taking into account temporary and spatial parameters;
3.4.2 - to define the main indicators for each product-market strategy and carry out the dynamic analysis of the most probable tendencies of change in prospect and at space (on local markets) of product-markets strategies of the firm, taking into account the change tendencies of opportunities of the resource base, the changing conditions of managing, a business environment of firm;
3.5.2 - to define dynamic rows of reference data of key indicators of demand in various type of products, which are positioned in planned strategic zones of different markets during certain period of time.

**3rd step - «The way of formation of dynamic rows of reference data of the plan on indicators of the commodity nomenclature and commodity assortment»** includes the following operations:

3.1.3 - to analyze the actual data of indicators of the commodity nomenclature and commodity assortment;
3.2.3 - to carry out the cluster analysis (choice and systematization over probability degree) of a plurality of the predicted variable data about change of indicators of demand in breadth, depth, harmony, elasticity of the commodity assortment for the planned strategic zones of the different markets during certain period of time;
3.3.3 - to carry out the graphic analysis of the influence of various factors on data of breadth, depth, harmony, elasticity of commodity assortment in the planned strategic zones of the different markets during certain period of time (for example, the influence of market capacity, of number of consumer segments on data of depth, of breadth of demand in commodity assortment; influence of channels of sales of products on harmony of the commodity assortment; influence of qualitative, price factors on differentiation of demand and on elasticity of demand);
3.4.3 - to carry out the dynamic forecast of tendencies of change of demand of various markets in assortment of firm at the most probable scenarios of development of demand during the planned time period;
3.5.3 - to define dynamic rows of reference data of demand in breadth, depth, harmony, elasticity of commodity assortment in the planned strategic zones of different markets during certain stage of life cycle.

**4th step - «The way of formation of dynamic rows of reference data of temporary parameters of the plan on products»** includes the following operations:

3.1.4 - to analyze actual data of duration of demand in different types of products, time of their production and offer in different markets;
3.2.4 - to carry out the cluster analysis (choice and systematization over probability degree) of a plurality of the predicted variable data about duration of demand in different types of products in the planned strategic zones of the different markets;
3.3.4 - to carry out the graphic analysis of change of duration of stages and life cycle of demand in different types of products under the influence of various factors in the planned strategic zones of the different markets (for example, the influence of the competition between producers on duration of demand in products; the influence of scientific and technical progress, speed of emergence of novelties on duration of demand in products);
3.4.4 - to carry out forecast during of planned period of tendencies of change of demand duration in different types of products at the most probable scenarios of development in the planned strategic zones of the different markets on the base of tools of multidimensional modeling;
3.5.4 - to define dynamic rows of reference data of stages duration of demand in different types of products in the planned strategic zones of different markets.

**5th step - «The way of formation of dynamic rows of reference data of the plan on parameters of target**

**function, quality of products»** includes the following operations:

3.1.5 - to analyze actual data of indicators of quality and target function of different types of products;
3.2.5 - to carry out the cluster analysis for choice and systematization over probability degree of a set of the predicted variable data of demand in indicators of quality and the target function, of different types of products in the planned strategic zones of different markets during of certain period;
3.3.5 - to carry out the graphic analysis of tendencies of change of consumer demand in parameters of target function, quality of different types of products under the influence of various factors of different markets during certain period (for example, the influence of tendencies of change of solvency of buyers, level of differentiation of their requests on change of data of indicators of quality and the target function of a product);
3.4.5 - to carry out forecast of tendencies of change of demand in parameters of target function, quality of different types of products at the most probable scenarios of development in the strategic zones of different markets during of planned period on base of tools of the economic-mathematical forecasting and multidimensional modeling;
3.5.5 - to define dynamic rows of reference data on stages of life cycle of demand in parameters of target function, quality of different types of products in the planned strategic zones of different markets.

**6th step - «The way of formation of dynamic rows of reference data of the plan on parameters of demand in products»** includes the following operations:

3.1.6 - to analyze actual data of effectiveness of target function, the price, volumes of the offer of different types of products in various markets and the reached data of profitability, efficiency of the products;
3.2.6 - to carry out the cluster analysis (choice and systematization over probability degree) of a plurality of the predicted variable data of volumes, of effectiveness of target function, the prices of demand in different types of products in the planned strategic zones of different markets during of certain period;
3.3.6 - to carry out the graphic analysis of change of consumer demand in parameters of effectiveness of target function, the price, volume of different types of products in various markets under the influence of various factors in the planned strategic zones of different markets during of certain period;
3.4.6 - to carry out forecast of tendencies of change of demand in parameters of effectiveness of target function, the price, volumes of different types of products at the most probable scenarios of development in the planned strategic zones of different markets during of certain period;
3.5.6 - to define dynamic rows of reference data on stages of life cycle of demand in parameters of effectiveness of target function, the price, volumes of different types of products in the planned strategic zones of different markets.

**List of designations [Fig.4]**

**4 stage- «The way of formation of the situational-strategic plan of products development of firm»** consists of the following steps [Fig. 4]:

4.1-6.1 - «The way of formation of business environment and of the strategic areas of positioning products on markets in situational-strategic plan of development of the firm»;
4.1-6.2 - «The way of formation of product-markets strategies of situational-strategic plan of development of firm»;
4.1-6.3 - «The way of formation of strategies on assortment of firm»;
4.1-6.4 - «The way of formation of strategies on temporary parameters of offering products»;
4.1-6.5 - «The way of formation of strategies on parameters of target function, quality of products»;
4.1-6.6 - «The way of formation of strategies of positioning products in strategic areas of different markets».

The model [Fig. 4] illustrates, what each of the listed steps includes consecutive operations. Steps of the fourth stage of a way are carried out consistently, i.e. each subsequent step of this stage begins only after the termination of previous.

**List of operations of the 4th stage [Fig.4]:**

4.1 - to choose possible options of strategies of firm for realization of the purposes and tasks of the strategic development plan, and also estimate their potential profitability and prospects during the planned long-term period;
4.2 - to choose perspective strategies among all possible for the most probable development of the situation and consumer demand in different markets during the long-term period;

4.3 - to evaluate the predicted possibilities of potential of the resource base for realization of the selected strategies of development during the planned long-term period;
4.4 - to establish priority product-markets strategies and profiling development indicators;
4.5 - to determine the optimal long-term product-markets strategies of development in the planned strategic zones of firm in the markets;
4.6 - to generate a set of current product-markets strategies for different markets in accordance with perspective development strategies.

**1st step - «The way of formation of business environment and of the strategic areas of positioning products in the markets in the situational-strategic plan of development of firm» includes the following** operations:

4.1.1 - to evaluate potential profitability and prospects of various local markets for positioning of various type of products during the planned long-term period;
4.2.1 - to choose local markets, in which firm will position products during the long-term period;
4.3.1 - to investigate consumer segments of the chosen markets and a business environment of firm in these segments during the planned long-term period;
4.4.1 - to define a set of consumer segments, also share of expansion and depth of penetration into market segments during the planned long-term period;
4.5.1 - to define in the strategic development plan the optimum segments of market for realization of different types of products during the planned long-term period;

The choice has to be carried out among the following strategies: first, strategy of expansion of strategic market zones; second, strategy of deepening of strategic market zones; third, strategy of narrowing of strategic market zones; fourth, strategy of partial change of composition of strategic market zones; fifth, strategy of full change of composition of strategic market zones.

4.6.1 - to define market segments for positioning of different types of products in the current period, of but in borders of strategic zones, which are chosen for positioning of products in the markets during long term.

**2nd step - «The way of formation of product-markets strategies of the situational-strategic plan of development of firm»** includes the following operations:

4.1.2 - to choose possible options of product-markets strategies according to the purposes and tasks of the strategic development plan, and also estimate their potential profitability and prospects in various markets during of long-term period;
4.2.2 - to choose the adequate, perspective strategies of development of firm among all possible for the most probable development of the situation and consumer demand in different markets during the long-term period;
4.3.2 - to evaluate the predicted possibilities of potential of the resource base for realization of the selected options of product-markets strategies during the long-term period;
4.4.2 - to establish priority among of different strategies of offering products and profiling development indicators of firm during the long-term period. The choice of perspective strategies has to be carried out over following directions of growth: first, strategies of intensive growth: the strategy of deep penetrations on the market; strategy of expansion of borders of the markets; strategy of improvement of products; second, strategies of the integration growth: strategy of regressive integration; strategy of progressive integration; strategy of horizontal integration; third, strategies of diversification growth: strategy of concentric diversification; strategy of horizontal diversification; strategy of conglomerate diversification. Strategic development plans can be based both on one, and on the different directions of growth. However, at any of the strategic plan are establish the priority strategy, which will play a main role during a certain period;
4.5.2 - to define optimum perspective product-markets strategies in various segments of the market during of long-term period;
4.6.2 - to generate a set of current strategies of offering products in various segments of the markets in accordance with perspective product-markets strategies.

**3rd step - «The way of formation of strategies on assortment of firm»** includes the following operations:

4.1.3 - to choose possible options of strategies on the commodity assortment of firm according to the purposes and tasks of the strategic development plan, and also estimate their potential profitability and prospects in various segments of the markets during the long-term period;

4.2.3 - to choose the adequate, perspective strategies on commodity assortment among all possible for the most probable development of the situation and consumer demand in various segments of the markets during the long-term period. The choice has to be carried out among the following strategies: first, strategy of differentiation of the commodity assortment; second, strategy of expansion of the commodity assortment; third , strategy of deepening of the commodity assortment; fourth, strategy of narrowing of the commodity assortment and narrow specialization; fifth, strategy of updating of structure of the commodity assortment by novelties; sixth, strategy of increase in a harmony of the commodity assortment; seventh, strategy of increase in elasticity of the commodity assortment. The compatible strategies on change of the commodity assortment can be combined with each other.
4.3.3 - to evaluate the predicted possibilities of potential of the resource base for realization of the selected perspective strategies on the commodity assortment in various segments of the markets during the long-term period;
4.4.3 - to establish priority types of products in composition of the selected commodity assortment and for the define of indicators of a harmony, elasticity of commodity assortment for various segments of the markets during of long-term period;
4.5.3 - to define optimum perspective strategies of commodity assortments in different segments of the markets during the long-term period;
4.6.3 - to generate a set of current strategies of commodity assortments in different segments of the markets, according to perspective strategies on assortment.

**4th step - «The way of formation of strategies on temporary parameters of offering products»** includes the following operations:

4.1.4 - to choose possible options of the duration of the production of different types of products, according to the purposes and tasks of the strategic development plan, and also estimate their potential profitability and prospects in various segments of the markets during the planned long-term period;
4.2.4 - to choose perspective strategies of temporary parameters of production of different types of the products among all possible for the most probable development of the situation and consumer demand in various segments of the markets;
The choice has to be carried out among the following strategies: first, strategies over change of duration of production of different types of products; second strategies over lengthening of life cycle of positioning of certain type of products; third strategies over shortening of life cycle of positioning of certain type of products; fourth strategies over lengthening of one and over shortening of other stages of life cycle of offer of products in the market.
4.3.4 - to evaluate the predicted possibilities of potential of the resource base for realization of the selected temporary strategies of production of different types of the products during the planned long-term period;
4.4.4 - to establish priority stages of production of different types of products and priority stages of their positioning in the market during long-term period;
4.5.4 - to define optimum temporary strategies of production and positioning of different types of products in various segments of the markets during of long-term period;
4.6.4 - to generate a set of current temporary strategies of production and positioning of products in the markets, according to the temporary perspective strategies.

**5th step - «The way of formation of strategies on parameters of target function, quality of products»** includes the following operations:

4.1.5 - to choose possible options of strategies on target function, quality of products, according to the purposes and tasks of the strategic development plan, and also estimate their potential profitability and prospects in various segments of the markets during of planned long-term period;
4.2.5 - to choose the adequate, the perspective strategies on target function, quality of products among all possible for the most probable development of the situation and consumer demand in different segments of the markets during long-term period.
The choice has to be carried out among the following strategies: first, strategy of improvement of quality of certain types of products; second, strategy of introduction of more qualitative novelties; third, strategy of introduction of cheap novelties of low quality; fourth, strategy of replacements of less qualitative by better products; fifth, the strategy of decrease of qualitative level of the products, for example, of the types of products, which are becoming outdated;
4.3.5 - to evaluate the predicted possibilities of potential of the resource base for realization of the selected strategies over quality, the target function of products during the long-term period;
4.4.5 - to establish priority indicators of quality, of target function of each type of product in different segments of the markets during long-term period;
4.5.5 - to define optimum perspective strategies on target function, quality of different types of products in various segments of the markets during the long-term period;
4.6.5 - to generate a set of current strategies on target function, quality of products in different segments of the markets, according to perspective strategies of development of firm.

**6th step - «The way of formation of strategies of positioning products in the strategic areas of different markets»** includes the following operations:

4.1.6 - to choose possible options of strategies of positioning of products, according to the purposes and tasks of the strategic development plan, and also estimate their potential profitability and prospects in various segments of the markets during of planned long-term period;
4.2.6 -to choose the adequate, perspective strategies of offering products in the markets among all possible for the most probable development of the situation and consumer demand in various segments of the markets during the long-term period. The choice has to be carried out among the following strategies first, strategy of the differentiated marketing (of broad penetration to markets); second , strategy of the undifferentiated marketing ( of expansion of number of the markets in which the same commodity offer is offered); third, strategy of the concentrated marketing (of deep penetration to market); fourth , strategy of the successor in the markets; fifth, strategy of the preservation of positions in the market; sixth, strategy of the active marketing; seventh , strategy of the passive marketing; eighth6 strategy of the intensive marketing;
4.3.6 - to evaluate the predicted possibilities of potential of the resource base for realization of the selected strategies of offering products in the markets during of the long-term period;
4.4.6 - to establish priorities of marketing policy of firm, priorities of positioning of products in various segments of the markets during of long-term period;
4.5.6 - to define optimum perspective strategies of positioning of different types of products in various segments of the markets during the long-term period;
4.6.6 - to generate a set of current strategies of positioning of various types of products in various segments of the markets, according to perspective strategies of positioning of products in the markets.

**List of designations [Fig.5]**

**The 5th stage - «The way of formation a plurality of the output data of the strategic program of offering products, taking into account temporary and spatial parameters on the basis of matrices of multi-purpose optimization»** consists of the following steps [Fig.5]:

5.1-6.1 - **«The way of formation** of a data plurality of the strategic program over parameters of the commodity nomenclature and commodity assortments»;
5.1-6.2 - **«The way of formation** of data of the strategic program over temporal parameters of offering products»;
5.1-6.3 - **«The way of formation** of a data plurality of the strategic program over qualitative parameters of offering products»;
5.1-6.4 - **«The way of formation** of a synergistic plurality of data of the strategic program over parameters of quality, volume, price of offering products».

The model [Fig.5] illustrates, what each step of fifth stage of formation of data plurality of the strategic program of offering products includes six consecutive operations, and steps of the 5th stage are consecutive, i.e. each subsequent step begins only after the termination of previous.

**List of operations of the 5th stage [Fig.5]:**

5.1 - to build matrices for multi-objective optimization; to reflect temporary parameters in vertical position of matrix, whereas spatial parameters (strategic zones of positioning of products of firm in the markets) and indicators of the offer of products in them - in horizontal position, also to divide each cage in half; to reflect data of indicators of demand in the top part of each cell of a matrix, whereas the planned data of indicators of offering products - at the bottom part;
5.2 - to place the predicted data of demand of different markets in the top half of each cell of a matrix, which were predicted on basis of «set theory» and of economic-mathematical forecasting for each type of product during of a long-term period;
5.3 - to generate possible variants of a data plurality of the offer of different types of products for different markets and temporary stages of a long-term period on the basis of predicted data of demand by means of «set theory», economic-mathematical forecasting, of graphic multidimensional modeling;

5.4 - to carry out a comparative assessment of different options by means of calculation of effectiveness of options, of their influence on indicators of efficiency of product for consumers and producer; to find among different variants the best options, which provide synergetic result and increase in competitiveness of products at the predicted situation of development of the markets and demand in the long term;

5.5 - to choose an optimal variant of the strategic range of data of indicators of the offer of products by means of creation of algorithms of the choice of optimal solutions; to generate the output data of the strategic program.

The solution of similar tasks is usually connected with processing of big data array that demands machine processing of information. Algorithms are enough typical for creating of computer programs;

5.6 - to place in the bottom half of each cell of a matrix the strategic output data (the strategic range of the output data) of the offer of products in different markets (in strategic zones of positioning of products of firm) during of planned long-term period, to synthesize total cells of a matrix.

**1$^{st}$ step - «The way of formation of a data plurality of the strategic program over parameters of commodity nomenclature and assortments»** includes the following operations:

5.1.1 - to build matrices for multi-objective optimization; to reflect temporary parameters (stages of life cycle of supply and demand) in vertical position of a matrix, whereas spatial parameters (strategic zones of positioning of products of firm in the markets) and indicators of the offer of products in them, namely: data of breadth of nomenclature, a breadth, depth and composition of the commodity assortment - in horizontal position; also to divide each cage in half; to reflect data of demand in breadth, depth and composition of commodity assortments in the top part of each cell of a matrix, whereas the planned data of indicators of commodity assortments - at the bottom part;

5.2.1 - to place data of demand of different markets in parameters of commodity assortments, which were predicted on the basis of «set theory» and of economic-mathematical forecasting of indicators of commodity assortment during stages of a long-term period, in the top half of each cell of a matrix;

5.3.1 - to generate possible variants of a data plurality of offer of commodity assortments for different markets according to data of demand in different temporary stages of a long-term period, taking into account compatibility of different types of products in commodity assortment, interrelation between data their offering, as well as cumulative influence of commodity assortment on indicators of efficiency both for the producer and consumers. Options generate on the basis of data predicted by means of «set theory», economic-mathematical forecasting of graphic multidimensional modeling;

**Example of matrixes of multi-objective optimization of strategic programs of the assortment offer of firm are presented in [Tab. 5.1, 5.2].**

The **list of symbols to [Tab. 5.1]**

$l^1_{\text{с}\,\text{тн}_A}; l^2_{\text{с}\,\text{тн}_A}; l^3_{\text{с}\,\text{тн}_A}; l^4_{\text{с}\,\text{тн}_A}; l^5_{\text{с}\,\text{тн}_A}$ - breadth of demand in commodity nomenclature «*A*» at the 1st, 2nd, 3rd, 4th and 5th stage of life cycle of demand respectively;

$l^1_{\text{п}\,\text{тн}_A}; l^2_{\text{п}\,\text{тн}_A}; l^3_{\text{п}\,\text{тн}_A}; l^4_{\text{п}\,\text{тн}_A}; l^5_{\text{п}\,\text{тн}_A}$ - breadth of offer of the commodity nomenclature «*A*» at the 1st, 2nd, 3rd, 4th, 5th stage of life cycle of positioning them on markets respectively;

$b^1_{\text{с}\,\text{та}_{A_{(1...l)}}}; b^2_{\text{с}\,\text{та}_{A_{(1...l)}}}; b^3_{\text{с}\,\text{та}_{A_{(1...l)}}}; b^4_{\text{с}\,\text{та}_{A_{(1...l)}}}; b^5_{\text{с}\,\text{та}_{A_{(1...l)}}}$ - breadth of demand in commodity assortments from $A_1$ *to* $A_l$ at the 1st, 2nd, 3rd, 4th and 5th stage of life cycle of demand respectively;

$b^1_{\text{п}\,\text{та}_{A_{(1...l)}}}; b^2_{\text{п}\,\text{та}_{A_{(1...l)}}}; b^3_{\text{п}\,\text{та}_{A_{(1...l)}}}; b^4_{\text{п}\,\text{та}_{A_{(1...l)}}}; b^5_{\text{п}\,\text{та}_{A_{(1...l)}}}$ - breadth of offer of the commodity assortments from $A_1$ to $A_l$ at the 1st, 2nd, 3rd, 4th, 5th stage of life cycle of positioning them on markets respectively;

$h^1_{\text{с}\,\text{та}_{A_{(1.1...b.l)}}}; h^2_{\text{с}\,\text{та}_{A_{(1.1...b.l)}}}; h^3_{\text{с}\,\text{та}_{A_{(1.1...b.l)}}}; h^4_{\text{с}\,\text{та}_{A_{(1.1...b.l)}}}; h^5_{\text{с}\,\text{та}_{A_{(1.1...b.l)}}}$ - depth of demand in commodity assortments from $A_{1.1}$ to $A_{b.l}$ at the 1st, 2nd, 3rd, 4th and 5th stage of life cycle of demand respectively;

$h^1_{\text{п}\,\text{та}_{A_{(1.1...b.l)}}}; h^2_{\text{п}\,\text{та}_{A_{(1.1...b.l)}}}; h^3_{\text{п}\,\text{та}_{A_{(1.1...b.l)}}}; h^4_{\text{п}\,\text{та}_{A_{(1.1...b.l)}}}; h^5_{\text{п}\,\text{та}_{A_{(1.1...b.l)}}}$ - depth of offer of the commodity assortments from $A_{1.1}$ to $A_{b.l}$ at the 1st, 2nd, 3rd, 4th and 5th stage of life cycle of positioning them on the markets respectively;

$\bigcup_{\text{TH}\in A}^{t\in 1\ldots 5}|l_{\text{cTH}}|$; $\bigcup_{\text{TA}\in A_1\ldots A_l}^{t\in 1\ldots 5}|b_{\text{cTA}_\text{A}}|$; $\bigcup_{\text{TA}\in A_{1.1}\ldots A_{b.l}}^{t\in 1\ldots 5}|h_{\text{cTA}_\text{A}}|$ - plurality of data of the demand, respectively in breadth of the commodity nomenclature and breadth, depth of the commodity assortments during full life cycle;

$\bigcup_{\text{TH}\in A}^{t\in 1\ldots 5}|l_{\text{пTH}}|$; $\bigcup_{\text{TA}\in A_1\ldots A_l}^{t\in 1\ldots 5}|b_{\text{пTA}_\text{A}}|$; $\bigcup_{\text{TA}\in A_{1.1}\ldots A_{b.l}}^{t\in 1\ldots 5}|h_{\text{пTA}_\text{A}}|$ - plurality of data of the offer of breadth of the commodity nomenclature and breadth, depth of the commodity assortments during full life cycle;

$\left\{\bigcup_{\text{TH}\in A}^{t\in 1\ldots 5}|l_{\text{cTH}}| \in \bigcup_{\text{TA}\in A_1\ldots A_l}^{t\in 1\ldots 5}|b_{\text{cTA}_\text{A}}| \in \bigcup_{\text{TA}\in A_{1.1}\ldots A_{b.l}}^{t\in 1\ldots 5}|h_{\text{cTA}_\text{A}}|\right\}$ - plurality from pluralities of planned and coordmated with each other of indicators of demand in commodity nomenclature and commodity assortments during life cycle;

$\left\{\bigcup_{\text{TH}\in A}^{t\in 1\ldots 5}|l_{\text{пTH}}| \in \bigcup_{\text{TA}\in A_1\ldots A_l}^{t\in 1\ldots 5}|b_{\text{пTA}_\text{A}}| \in \bigcup_{\text{TA}\in A_{1.1}\ldots A_{b.l}}^{t\in 1\ldots 5}|h_{\text{пTA}_\text{A}}|\right\}$ - plurality from pluralities of planned and coordimated with each other of indicators of offer of commodity nomenclature and commodity assortments during life cycle.

**The list of symbols to [Tab. 5.2]**

$\bigcup_{l}^{b}|A_{\text{п}}|$ - cumulative offer of the commodity assortments, which enter in nomenclatyre «*A*»;

$A_1, A_2,\ldots$, $A_l$ - commodity assortments, which enter in commodity nomenclature «A»;

$\{A_{1.1}, A_{2.1},\ldots, A_{b.1}\}$;$\{A_{1.2}, A_{2.2},\ldots, A_{b.2}\}$;...;$\{A_{1.l}, A_{2.l},\ldots, A_{b.l}\}$ - types of products, which enter in commodity assortments: $A_1, A_2, \ldots, A_l$, respectively;

$\{A_{1.b.1},\ldots, A_{h.b.1}\}$;$\{A_{1.b.2}, \ldots, A_{h.b.2}\}$;...; $\{A_{1.b.l},\ldots, A_{h.b.l}\}$ - examples of modifications of the offer of various types of products, which enter in commodity assortments: $A_1, A_2,\ldots, A_l$, respectively;

$\{A_{1.1},.., A_{b.1}\}$;$\{A_{1.2},.., A_{b.2}\}$; $\{A_{1.l},\ldots, A_{b.l}\}$ - cumulative offer in all markets of commodity assortments «$A_1$»; «$A_2$»; «$A_l$», respectively;

*A*- symbol of the commodity nomenclature; *t* -life cycle (includes 1..., 5 stages);

$\text{TA}_{A_1\ldots A_l}$ - commodity assortments from $A_1$ д'О $A_l$; {...} - plurality;

$\text{TH}_A$ - commodity nomenclature «*A*»; $\text{TП}_A \in A_1 \ldots A_l$ - commodity offer from $A_1$ to $A_l$;

Matrixes of the multi-purpose optimization of the commodity nomenclature and the commodity assortment are dynamic, because indicators of width and of depth of the commodity assortments in each of the temporary classification groups will be constantly changed under influence of change of consumer demand, and owing to objective passing by goods of temporary cycles.

All commodity assortment of firm is classified over groups of products, which correspond to different stages of life cycle of demand, namely: the breadth and depth of offer of products groups are determined for stages of introduction on market and positioned at stages of growth, a maturity, decrease and removal with of market. At the same time, the matrix allows to consider the movement of products from one the classification group in another in process of transition to the following stage of their life cycle. Such movements need to be predicted, because depth and breadth of the offered commodity assortment can change, and it is very important that these changes corresponded to changes of demand [Tab. 5.1]. Thereby, commodity nomenclature is plurality, which includes a set of others of different pluralities of commodity assortments, and which needs to be defined both for full life cycle, and for the cumulative offer of commodity assortments on all markets.

Table 5.1

| **Matrix of planning of a data plurality of indicators of commodity assortments in a certain market, taking into account time factor** | | | | | |
|---|---|---|---|---|---|
| **Stages of life cycle** | | **Indicators of the commodity assortment (CA) of firm** | | | **The plurality of data of the commodity nomenclature (CN) and commodity assortment (CA)** |
| **№** | **Demand at goods**<br>**Offer of goods** | **Breadth CN** | **Breadth CA** | **Depth CA** | |
| **1** | **2** | **3** | **4** | **5** | **6** |
| 1 | Emergence of demand at goods | $l^{1}_{\text{cTH}_A}$ | $\{b^{1}_{\text{cTA}_{A_1}}; \ldots; b^{1}_{\text{cTA}_{A_l}}\}$ | $\{h^{1}_{\text{cTA}_{A_{1.1}}}; \ldots; h^{1}_{\text{cTA}_{A_{b.l}}}\}$ | $\left\{\bigcup_{\text{TH}\in A}^{t=1} \lvert l_{\text{cTH}}\rvert \in \bigcup_{\text{TA}\in A_1\ldots A_l}^{t=1} \lvert b_{\text{cTA}_A}\rvert \in \bigcup_{\text{TA}\in A_{1.1}\ldots A_{b.l}}^{t=1} \lvert h_{\text{cTA}_A}\rvert\right\}$ |
| 1 | Introduction of goods on markets | $l^{1}_{\text{пTH}_A}$ | $\{b^{1}_{\text{пTA}_{A_1}}; \ldots; b^{1}_{\text{пTA}_{A_l}}\}$ | $\{h^{1}_{\text{пTA}_{A_{1.1}}}; \ldots; h^{1}_{\text{пTA}_{A_{b.l}}}\}$ | $\left\{\bigcup_{\text{TH}\in A}^{t=1} \lvert l_{\text{пTH}}\rvert \in \bigcup_{\text{TA}\in A_1\ldots A_l}^{t=1} \lvert b_{\text{пTA}_A}\rvert \in \bigcup_{\text{TA}\in A_{1.1}\ldots A_{b.l}}^{t=1} \lvert h_{\text{пTA}_A}\rvert\right\}$ |
| 2 | Acceleration of demand at goods | $l^{2}_{\text{cTH}_A}$ | $\{b^{2}_{\text{cTA}_{A_1}}; \ldots; b^{2}_{\text{cTA}_{A_l}}\}$ | $\{h^{2}_{\text{cTA}_{A_{1.1}}}; \ldots; h^{2}_{\text{cTA}_{A_{b.l}}}\}$ | $\left\{\bigcup_{\text{TH}\in A}^{t=2} \lvert l_{\text{cTH}}\rvert \in \bigcup_{\text{TA}\in A_1\ldots A_l}^{t=2} \lvert b_{\text{cTA}_A}\rvert \in \bigcup_{\text{TA}\in A_{1.1}\ldots A_{b.l}}^{t=2} \lvert h_{\text{cTA}_A}\rvert\right\}$ |
| 2 | Growth of the offer of goods | $l^{2}_{\text{пTH}_A}$ | $\{b^{2}_{\text{пTA}_{A_1}}; \ldots; b^{2}_{\text{пTA}_{A_l}}\}$ | $\{h^{2}_{\text{пTA}_{A_{1.1}}}; \ldots; h^{2}_{\text{пTA}_{A_{b.l}}}\}$ | $\left\{\bigcup_{\text{TH}\in A}^{t=2} \lvert l_{\text{пTH}}\rvert \in \bigcup_{\text{TA}\in A_1\ldots A_l}^{t=2} \lvert b_{\text{пTA}_A}\rvert \in \bigcup_{\text{TA}\in A_{1.1}\ldots A_{b.l}}^{t=2} \lvert h_{\text{пTA}_A}\rvert\right\}$ |
| 3 | Stabilization of demand at goods | $l^{3}_{\text{cTH}_A}$ | $\{b^{3}_{\text{cTA}_{A_1}}; \ldots; b^{3}_{\text{cTA}_{A_l}}\}$ | $\{h^{3}_{\text{cTA}_{A_{1.1}}}; \ldots; h^{3}_{\text{cTA}_{A_{b.l}}}\}$ | $\left\{\bigcup_{\text{TH}\in A}^{t=3} \lvert l_{\text{cTH}}\rvert \in \bigcup_{\text{TA}\in A_1\ldots A_l}^{t=3} \lvert b_{\text{cTA}_A}\rvert \in \bigcup_{\text{TA}\in A_{1.1}\ldots A_{b.l}}^{t=3} \lvert h_{\text{cTA}_A}\rvert\right\}$ |
| 3 | Maturity of the offer of goods | $l^{3}_{\text{пTH}_A}$ | $\{b^{3}_{\text{пTA}_{A_1}}; \ldots; b^{3}_{\text{пTA}_{A_l}}\}$ | $\{h^{3}_{\text{пTA}_{A_{1.1}}}; \ldots; h^{3}_{\text{пTA}_{A_{b.l}}}\}$ | $\left\{\bigcup_{\text{TH}\in A}^{t=3} \lvert l_{\text{пTH}}\rvert \in \bigcup_{\text{TA}\in A_1\ldots A_l}^{t=3} \lvert b_{\text{пTA}_A}\rvert \in \bigcup_{\text{TA}\in A_{1.1}\ldots A_{b.l}}^{t=3} \lvert h_{\text{пTA}_A}\rvert\right\}$ |
| 4 | Decrease of demand at Goods | $l^{4}_{\text{cTH}_A}$ | $\{b^{4}_{\text{cTA}_{A_1}}; \ldots; b^{4}_{\text{cTA}_{A_l}}\}$ | $\{h^{4}_{\text{cTA}_{A_{1.1}}}; \ldots; h^{4}_{\text{cTA}_{A_{b.l}}}\}$ | $\left\{\bigcup_{\text{TH}\in A}^{t=4} \lvert l_{\text{cTH}}\rvert \in \bigcup_{\text{TA}\in A_1\ldots A_l}^{t=4} \lvert b_{\text{cTA}_A}\rvert \in \bigcup_{\text{TA}\in A_{1.1}\ldots A_{b.l}}^{t=4} \lvert h_{\text{cTA}_A}\rvert\right\}$ |

(continued)

| Matrix of planning of a data plurality of indicators of commodity assortments in a certain market, taking into account time factor | | | | | |
|---|---|---|---|---|---|
| **Stages of life cycle** | | **Indicators of the commodity assortment (CA) of firm** | | | **The plurality of data of the commodity nomenclature (CN) and commodity assortment (CA)** |
| **№** | **Demand at goods** / **Offer of goods** | **Breadth CN** | **Breadth CA** | **Depth CA** | |
| **1** | **2** | **3** | **4** | **5** | **6** |
| 4 | Decrease of the offer of goods | $l^4_{\text{ПТН}_A}$ | $\{b^4_{\text{ПТА}_{A_1}};\ldots;b^4_{\text{ПТА}_{A_l}}\}$ | $\{h^4_{\text{ПТА}_{A_{1.1}}};\ldots;h^4_{\text{ПТА}_{A_{b.l}}}\}$ | $\left\{\bigcup_{\text{ТН}\in A}^{t=4}\lvert l_{\text{ПТН}}\rvert\in\bigcup_{\text{ТА}\in A_1\ldots A_l}^{t=4}\lvert b_{\text{ПТА}_A}\rvert\in\bigcup_{\text{ТА}\in A_{1.1}\ldots A_{b.l}}^{t=4}\lvert h_{\text{ПТА}_A}\rvert\right\}$ |
| 5 | Fading of demand in goods | $l^5_{\text{СТН}_A}$ | $\{b^5_{\text{СТА}_{A_1}};\ldots;b^5_{\text{СТА}_{A_l}}\}$ | $\{h^5_{\text{СТА}_{A_{1.1}}};\ldots;h^5_{\text{СТА}_{A_{b.l}}}\}$ | $\left\{\bigcup_{\text{ТН}\in A}^{t=5}\lvert l_{\text{СТН}}\rvert\in\bigcup_{\text{ТА}\in A_1\ldots A_l}^{t=5}\lvert b_{\text{СТА}_A}\rvert\in\bigcup_{\text{ТА}\in A_{1.1}\ldots A_{b.l}}^{t=5}\lvert h_{\text{СТА}_A}\rvert\right\}$ |
| 5 | Removal of goods from the market | $l^5_{\text{ПТН}_A}$ | $\{b^5_{\text{ПТА}_{A_1}};\ldots;b^5_{\text{ПТА}_{A_l}}\}$ | $\{h^5_{\text{ПТА}_{A_{1.1}}};\ldots;h^5_{\text{ПТА}_{A_{b.l}}}\}$ | $\left\{\bigcup_{\text{ТН}\in A}^{t=5}\lvert l_{\text{ПТН}}\rvert\in\bigcup_{\text{ТА}\in A_1\ldots A_l}^{t=5}\lvert b_{\text{ПТА}_A}\rvert\in\bigcup_{\text{ТА}\in A_{1.1}\ldots A_{b.l}}^{t=5}\lvert h_{\text{ПТА}_A}\rvert\right\}$ |
| | Cumulative life cycle of demand in CN and CA | $\bigcup_{\text{ТН}\in A}^{t\in1\ldots5}\lvert l_{\text{СТН}}\rvert$ | $\bigcup_{\text{ТА}\in A_1\ldots A_l}^{t\in1\ldots5}\lvert b_{\text{СТА}_A}\rvert$ | $\bigcup_{\text{ТА}\in A_{1.1}\ldots A_{b.l}}^{t\in1\ldots5}\lvert h_{\text{СТА}_A}\rvert$ | $\left\{\bigcup_{\text{ТН}\in A}^{t\in1\ldots5}\lvert l_{\text{СТН}}\rvert\in\bigcup_{\text{ТА}\in A_1\ldots A_l}^{t\in1\ldots5}\lvert b_{\text{СТА}_A}\rvert\in\bigcup_{\text{ТА}\in A_{1.1}\ldots A_{b.l}}^{t\in1\ldots5}\lvert h_{\text{СТА}_A}\rvert\right\}$ |
| | Cumulative life cycle of the commodity offer | $\bigcup_{\text{ТН}\in A}^{t\in1\ldots5}\lvert l_{\text{ПТН}}\rvert$ | $\bigcup_{\text{ТА}\in A_1\ldots A_l}^{t\in1\ldots5}\lvert b_{\text{ПТА}_A}\rvert$ | $\bigcup_{\text{ТА}\in A_{1.1}\ldots A_{b.l}}^{t\in1\ldots5}\lvert h_{\text{ПТА}_A}\rvert$ | $\left\{\bigcup_{\text{ТН}\in A}^{t\in1\ldots5}\lvert l_{\text{ПТН}}\rvert\in\bigcup_{\text{ТА}\in A_1\ldots A_l}^{t\in1\ldots5}\lvert b_{\text{ПТА}_A}\rvert\in\bigcup_{\text{ТА}\in A_{1.1}\ldots A_{b.l}}^{t\in1\ldots5}\lvert h_{\text{ПТА}_A}\rvert\right\}$ |

Table 5.2

| Matrix of planning of composition of offering commodity assortment in various markets | | | | | |
|---|---|---|---|---|---|
| CA of firm | Stages of life cycle of offer of the commodity assortment | The planned the composition of the commodity assortments according to demand of the Markets | | | The cumulative offer CN and CA in all markets |
| | | **Market 1** | Market 2 ... | Market n | |
| 1 | 2 | 3 | 4 | 5 | 6 |
| $A_1$ | Cumulative life cycle | $A_{1.1}, A_{2.1},.., A_{b.1}$ | $A_{1.1}, A_{2.1}$ | $A_{2.1},..., A_{b.1}$ | $\{A_{1.1},..,A_{b.1}\}$ |
| $A_{1.1}$ | Introduction | $A_{1.1.1},.., A_{h.1.1}$ | $A_{3.1.1}$ | - | - |
| $A_{2.1}$ | Growth | $A_{1.2.1}, A_{2.2.1}$ | $A_{1.2.1}$ | $A_{1.2.1}, A_{h.2.1}$ | - |
| $A_{b.1}$... | Maturity | $A_{1.b.1},.., A_{h.b.1}$ | - | $A_{3.b.1}, A_{h.b.1}$ | - |
| $A_2$ | Cumulative life cycle | $A_{1.2}, A_{2.2},.., A_{b.2}$ | $A_{2.2}, A_{3.2}$ | $A_{1.2},..., A_{b.2}$ | $\{A_{1.2},..,A_{b.2}\}$ |
| $A_{1.2}$ | Decrease | $A_{1.1.2}, A_{2.1.2}$ | - | $A_{h.1.2}$ | - |
| $A_{2.2}$ ... | Removal | $A_{2.2.2}$ | $A_{1.2.2}$ | $A_{3.2.2}, A_{h.2.2}$ | - |
| $A_{b.2}$ ... | Introduction | $A_{1.b.2},..., A_{h.b.2}$ | - | $A_{3.b.2},..., A_{h.b.2}$ | - |
| $A_l$ | Cumulative life cycle | $A_{1.l}, A_{2.l},.., A_{b.l}$ | $A_{1.l}, A_{b.l}$ | $A_{2.l},.., A_{b.l}$ | $\{A_{1.l},.., A_{b.l}\}$ |
| $A_{1.l}$ | Growth | $A_{1.1.l}$ | $A_{2.1.l}$ | - | - |
| $A_{2.l}$ | Maturity | $A_{2.2.l}$ | - | $A_{1.2.l}, A_{2.2.l}$ | - |
| $A_{3.l}$... | Decrease | $A_{1.3.l}, A_{3.3.l}$ | $A_{2.3.l}$ | $A_{1.3.l}$ | - |
| $A_{b.l}$ | Removal | $A_{1.b.l},..., A_{h.b.l}$ | $A_{h.b.l}$ | $A_{1.b.l}, A_{h.b.l}$ | - |
| The cumulative offer of the commodity nomenclature and assortment | | $\begin{Bmatrix} A_{1.1},..,A_{b.1} \\ A_{1.2},..,A_{b.2...} \\ A_{1.l},..,A_{b.l} \end{Bmatrix}$ | $\begin{Bmatrix} A_{1.1},A_{2.1} \\ A_{2.2},A_{3.2} \\ A_{1.l},A_{b.l} \end{Bmatrix}$ | $\begin{Bmatrix} A_{2.1},..,A_{b.1} \\ A_{1.2},..,A_{b.2...} \\ A_{2.l},..,A_{b.l} \end{Bmatrix}$ | $\bigcup_{l}^{b} \lvert A_{\Pi} \rvert$ |

In matrix [Tab.5.1] each cell is divided in half; data of breadth, depth and composition of the commodity assortment, which are characteristic for stages of life cycle of demand are reflected in the top part of each cell, whereas the planned data indicators of the commodity assortments, which are characteristic for stages of life cycle of offer - at the bottom half.

Summary cells of a matrix in vertical position reflect the predicted plurality of data of demand in assortment on each market, and the plurality of the data of breadth and depth of offering assortment, coordinated with demand during full life cycle. Summary cells of a matrix in horizontal position reflect the predicted plurality of data of demand in assortment for all markets, but on each stage of life cycle, and the plurality of the data of breadth and depth of offering assortment, coordinated with demand on each stage of life cycle on all markets. The effect of plurality is not equal to the sum of effects from each, separate product from it. All groups of the commodity assortments differing in temporary parameters of positioning in the markets and products, which are their part are synthesized in a total cell of matrix in the planned period. The optimum variant is assortment, which provides the highest synergetic effect. However, the separate matrixes need to be formed for strategic planning detailed (over the most detailed classification) of composition of each assortment of firm. The example of such matrix is given in [Tab. 5.2].

The compositions of various commodity assortments, which enter in commodity nomenclature «*A*», planned according to demand, are reflected in a matrix [Tab. 5.2]. On each of the local markets during the different temporary periods of demand the offer of different types of products and their modifications is forming. Each product of structure of the commodity assortment occupies a separate cell of a matrix. The general summary cell of a matrix brings together all groups of assortments together. Thus, offer of commodity nomenclature of the firm are forming as plurality from many other pluralities of commodity assortments. The any replacements in composition of commodity assortment can cause chain reaction of change of demand in other products from commodity offer of firm. Therefore, not only the offer of each separately taken product, but also and all their plurality has to be optimized.

In the course of formation of the section of the strategic program over assortment it is necessary to consider, what not only the producers, but consumers have resources limit. For example, if production of one product grows, then production of another decreases, and increase of demand volume in one of products leads to decrease of demand or even to total disappearance of demand in other products. The changes of volumes and of prices of demand are predict at addition to assortment of new products, also at narrowing the assortment, because there is a competition not only among producers and between buyers, but and the competition between types of products. Therefore, the producer chooses the products, which are the more favorable for production, and the consumer chooses the products, which are the most favorable for buy and satisfactions of his requirements. The use of matrixes of the commodity assortment will allow to find the plurality of parameters of breadth of the commodity nomenclature, breadth, depth and composition of the commodity assortments, balanced with by demand, to form the cumulative offer of assortments, as for of time spans (stages of life cycle of positioning of products), so and taking into account spatial parameters of satisfaction of demand of the local markets. Matrixes will provide the optimum structure not only of separate assortment, but also the optimum structure of all offer of products of firm in general. It will allow to receive higher technical result in comparison with the known analogs. It will increase balance, competitiveness of the strategic program over assortments, will provide benefit, the best satisfaction of cumulative consumer demand. The matrixes given as an example are typical and used as basic at the 6th stage for situational updating of programs;

5.4.1 - to carry out a comparative assessment of different options of strategic program of the offer of commodity assortments by means of calculation of a complex of indicators of commodity nomenclature and assortments (form. 2.1.3.1 - 2.1.3.12) for finding of the best balance with demand, also of the best harmony, of the elasticity of the commodity assortment, of optimum breadth of the commodity nomenclature and assortments, as well as depth of commodity assortments, of the optimum compatibility of different types of products and their modifications in composition of commodity assortment and to provide the maximum synergetic result and optimum costs;

5.5.1 - to choose the optimum variant of offer of each assortment, which provides the highest synergetic effect by means of creating algorithm of the consecutive choice; to generate the optimal integrated plurality of the output data of commodity nomenclature and assortments of the strategic program.

**Example of an algorithm of the choice of the optimum variant of the strategic program over data of breadth of commodity nomenclature and commodity assortments of the firm** [Fig. 5.1].

**The list of symbols to [Fig.5.1]:**

where $l/b_{B1}$; $l/b_{B2}$ ; $l/b_{B3}$ - respectively first, second, third versions of the strategic program over data of breadth of the commodity nomenclature and commodity assortments;

ΔΠЭ - increment of useful effect; →- - brings (follows); *opt* - optimum;

$\Delta l/b_{B1(2,3)}$; $\nabla l/b_{B1(2,3)}$ - respectively expansion, narrowing of breadth of the commodity nomenclature and commodity assortments in the first, second, third version of the offer;

$l/b^{3}_{B1(2,3)}$ - replacements in composition of the commodity nomenclature and commodity assortments respectively in first, second and third version of the offer.

As an example, it is accepted that there are three options of data (or three options of strategic range of data) of breadth of the commodity nomenclature (of commodity assortment); it is necessary to choose one, which is the most optimum from them or to find new options of data of breadth of the commodity nomenclature (of commodity assortment). Assessment begins with the second option, i.e. with of average data of breadth of the commodity nomenclature (of commodity assortment) between two extreme values:

$$\text{[Form. 5.5.1.1]} \qquad l/b_{B1} < l/b_{B2} < l/b_{B3}.$$

If the effect can be increased by means of narrowing of breadth of the commodity nomenclature (of commodity assortment) over the second option, then it is the beginning for assessment of the first variant, but if by means of expansion of the commodity nomenclature (of commodity assortment), then it leads to assessment of the third version of the strategic program. In turn, if the effect can be increased by means of the narrowing or expansion of the commodity nomenclature (of commodity assortment) at the first or third version of the offer, as well as by means of replacements in composition of the commodity assortment of each of variants, then it is the beginning for search of new versions of offering commodity nomenclature (of commodity assortment). If at any of the offered options the effect reaches optimum level, then the optimal variant of data of breadth of the commodity nomenclature and commodity assortments is found. Similar algorithms need to be created for the choice of optimal variants of strategic range of data of indicators of depth, a harmony and elasticity of the commodity assortments;

5.6.1 - to place in the bottom half of each cell of a matrix the strategic output data (the strategic range of the output data) of the offer of commodity nomenclature and assortments in different markets and stages of life cycle during the long-term period; to synthesize total cells of the matrix.

**2nd step - «The way of formation of data of the strategic program over temporal parameters of offering products»** includes the following operations:

5.1.2 - to build matrices for multi-objective optimization, to reflect the markets and types of products in vertical position of a matrix, whereas the columns of time of the beginning and time of the termination of stages of life cycle of supply and demand of a product in each market - in horizontal position, also to divide each cage in half; to reflect data of temporal parameters of demand in the top part of each cell, whereas the planned data of temporal parameters of offering products - at the bottom part of a matrix;

5.2.2 - to place data of temporal parameters of demand of different markets in each type of products, which were predicted on the basis of economic-mathematical forecasting in the top half of each cell of a matrix;

5.3.2 - to generate possible variants of data range of temporal parameters of different stages of life cycle of offer of each type of product according to data of demand of different markets. For this purpose, it is necessary to use graphic models of balance of life cycles of supply and demand, to build models of multidimensional spatial image.

It is conditionally accepted that each product is positioned during all stages of the life cycle in the one market. The purpose of a matrix is to balance temporary cycles of the offer of products according to the predicted temporary cycles of demand. In the course of drawing up the strategic program for each type of product the range of temporary parameters is planned, namely: data of the general duration of life cycle; duration of each stage, and also parameters of time of the beginning and time of the termination of stages of life cycle of each product, which is positioned on certain market. Each cell of the given matrix is halved of half. The predicted parameters of the beginning and of the termination of each stage of demand of certain type of product are placed in top half of each cell of matrix, whereas the planned data of the corresponding temporary parameters of the offer are reflected in bottom half of a cell.

Table 5.3

**Matrix of planning of temporary parameters of positioning products of firm**

| Markets | Structure CA | Stages of life cycle of the demand / offer of product | | | | | | | | | | Cumulative the life cycle of products |
|---|---|---|---|---|---|---|---|---|---|---|---|---|
| | | 1. Emergence | | 2. Acceleration | | 3. Stabilization | | 4. Decrease | | 5. Fading | | |
| | | 1.Introduction | | 2 . Growth | | 3. Maturity | | 4. Decrease | | 5. Removal | | |
| | | Start | End | Start | End | Start | End | Start | End | Start | End | |
| 1 | 2 | 3 | 4 | 5 | 6 | 7 | 8 | 9 | 10 | 11 | 12 | 13 |
| Market 1 | $A_{1.1}$ ... | $t^{s_1}_{\text{С}_{A1.1}}$ | $t^{f_1}_{\text{С}_{A1.1}}$ | $t^{s_2}_{\text{С}_{A1.1}}$ | $t^{f_2}_{\text{С}_{A1.1}}$ | $t^{s_3}_{\text{С}_{A1.1}}$ | $t^{f_3}_{\text{С}_{A1.1}}$ | $t^{s_4}_{\text{С}_{A1.1}}$ | $t^{f_4}_{\text{С}_{A1.1}}$ | $t^{s_5}_{\text{С}_{A1.1}}$ | $t^{f_5}_{\text{С}_{A1.1}}$ | $t^{\text{ж.ц.}}_{\text{С}_{A1.1}}$ |
| | | $t^{s_1}_{\text{П}_{A1.1}}$ | $t^{f_1}_{\text{П}_{A1.1}}$ | $t^{s_2}_{\text{П}_{A1.1}}$ | $t^{f_2}_{\text{П}_{A1.1}}$ | $t^{s_3}_{\text{П}_{A1.1}}$ | $t^{f_3}_{\text{П}_{A1.1}}$ | $t^{s_4}_{\text{П}_{A1.1}}$ | $t^{f_4}_{\text{П}_{A1.1}}$ | $t^{s_5}_{\text{П}_{A1.1}}$ | $t^{f_5}_{\text{П}_{A1.1}}$ | $t^{\text{ж.ц.}}_{\text{П}_{A1.1}}$ |
| | $A_{b.1}$ | $t^{s_1}_{\text{С}_{Ab.1}}$ | $t^{f_1}_{\text{С}_{Ab.1}}$ | $t^{s_2}_{\text{С}_{Ab.1}}$ | $t^{f_2}_{\text{С}_{Ab.1}}$ | $t^{s_3}_{\text{С}_{Ab.1}}$ | $t^{f_3}_{\text{С}_{Ab.1}}$ | $t^{s_4}_{\text{С}_{Ab.1}}$ | $t^{f_4}_{\text{С}_{Ab.1}}$ | $t^{s_5}_{\text{С}_{Ab.1}}$ | $t^{f_5}_{\text{С}_{Ab.1}}$ | $t^{\text{ж.ц.}}_{\text{С}_{Ab.1}}$ |
| | | $t^{s_1}_{\text{П}_{Ab.1}}$ | $t^{f_1}_{\text{П}_{Ab.1}}$ | $t^{s_2}_{\text{П}_{Ab.1}}$ | $t^{f_2}_{\text{П}_{Ab.1}}$ | $t^{s_3}_{\text{П}_{Ab.1}}$ | $t^{f_3}_{\text{П}_{Ab.1}}$ | $t^{s_4}_{\text{П}_{Ab.1}}$ | $t^{f_4}_{\text{П}_{Ab.1}}$ | $t^{s_5}_{\text{П}_{Ab.1}}$ | $t^{f_5}_{\text{П}_{Ab.1}}$ | $t^{\text{ж.ц.}}_{\text{П}_{Ab.1}}$ |
| Market 2 | $A_{1.2}$ ... | $t^{s_1}_{\text{С}_{A1.2}}$ | $t^{f_1}_{\text{С}_{A1.2}}$ | $t^{s_2}_{\text{С}_{A1.2}}$ | $t^{f_2}_{\text{С}_{A1.2}}$ | $t^{s_3}_{\text{С}_{A1.2}}$ | $t^{f_3}_{\text{С}_{A1.2}}$ | $t^{s_4}_{\text{С}_{A1.2}}$ | $t^{f_4}_{\text{С}_{A1.2}}$ | $t^{s_5}_{\text{С}_{A1.2}}$ | $t^{f_5}_{\text{С}_{A1.2}}$ | $t^{\text{ж.ц.}}_{\text{С}_{A1.2}}$ |
| | | $t^{s_1}_{\text{П}_{A1.2}}$ | $t^{f_1}_{\text{П}_{A1.2}}$ | $t^{s_2}_{\text{П}_{A1.2}}$ | $t^{f_2}_{\text{П}_{A1.2}}$ | $t^{s_3}_{\text{П}_{A1.2}}$ | $t^{f_3}_{\text{П}_{A1.2}}$ | $t^{s_4}_{\text{П}_{A1.2}}$ | $t^{f_4}_{\text{П}_{A1.2}}$ | $t^{s_5}_{\text{П}_{A1.2}}$ | $t^{f_5}_{\text{П}_{A1.2}}$ | $t^{\text{ж.ц.}}_{\text{П}_{A1.2}}$ |

Continuation tab.5.3

| 1 | 2 | 3 | 4 | 5 | 6 | 7 | 8 | 9 | 10 | 11 | 12 | 13 |
|---|---|---|---|---|---|---|---|---|---|---|---|---|
| **Market 2** | $A_{b.2}$ | $t^{S_1}_{\text{С}Ab.2}$ | $t^{f_1}_{\text{С}Ab.2}$ | $t^{S_2}_{\text{С}Ab.2}$ | $t^{f_2}_{\text{С}Ab.2}$ | $t^{S_3}_{\text{С}Ab.2}$ | $t^{f_3}_{\text{С}Ab.2}$ | $t^{S_4}_{\text{С}Ab.2}$ | $t^{f_4}_{\text{С}Ab.2}$ | $t^{S_5}_{\text{С}Ab.2}$ | $t^{f_5}_{\text{С}Ab.2}$ | $t^{\text{Ж.Ц.}}_{\text{С}Ab.2}$ |
| | | $t^{S_1}_{\text{П}Ab.2}$ | $t^{f_1}_{\text{П}Ab.2}$ | $t^{S_2}_{\text{П}Ab.2}$ | $t^{f_2}_{\text{П}Ab.2}$ | $t^{S_3}_{\text{П}Ab.2}$ | $t^{f_3}_{\text{П}Ab.2}$ | $t^{S_4}_{\text{П}Ab.2}$ | $t^{f_4}_{\text{П}Ab.2}$ | $t^{S_5}_{\text{П}Ab.2}$ | $t^{f_5}_{\text{П}Ab.2}$ | $t^{\text{Ж.Ц.}}_{\text{П}Ab.2}$ |
| **Market** ***n*** | $A_{1.l..}$ | $t^{S_1}_{\text{С}A1.l}$ | $t^{f_1}_{\text{С}A1.l}$ | $t^{S_2}_{\text{С}A1.l}$ | $t^{f_2}_{\text{С}A1.l}$ | $t^{S_3}_{\text{С}A1.l}$ | $t^{f_3}_{\text{С}A1.l}$ | $t^{S_4}_{\text{С}A1.l}$ | $t^{f_4}_{\text{С}A1.l}$ | $t^{S_5}_{\text{С}A1.l}$ | $t^{f_5}_{\text{С}A1.l}$ | $t^{\text{Ж.Ц.}}_{\text{С}A1.l}$ |
| | | $t^{S_1}_{\text{П}A1.l}$ | $t^{f_1}_{\text{П}A1.l}$ | $t^{S_2}_{\text{П}A1.l}$ | $t^{f_2}_{\text{П}A1.l}$ | $t^{S_3}_{\text{П}A1.l}$ | $t^{f_3}_{\text{П}A1.l}$ | $t^{S_4}_{\text{П}A1.l}$ | $t^{f_4}_{\text{П}A1.l}$ | $t^{S_5}_{\text{П}A1.l}$ | $t^{f_5}_{\text{П}A1.l}$ | $t^{\text{Ж.Ц.}}_{\text{П}A1.l}$ |
| | $A_{b.l}$ | $t^{S_1}_{\text{С}Ab.l}$ | $t^{f_1}_{\text{С}Ab.l}$ | $t^{S_2}_{\text{С}Ab.l}$ | $t^{f_2}_{\text{С}Ab.l}$ | $t^{S_3}_{\text{С}Ab.l}$ | $t^{f_3}_{\text{С}Ab.l}$ | $t^{S_4}_{\text{С}Ab.l}$ | $t^{f_4}_{\text{С}Ab.l}$ | $t^{S_5}_{\text{С}Ab.l}$ | $t^{f_5}_{\text{С}Ab.l}$ | $t^{\text{Ж.Ц.}}_{\text{С}Ab.l}$ |
| | | $t^{S_1}_{\text{П}Ab.l}$ | $t^{f_1}_{\text{П}Ab.l}$ | $t^{S_2}_{\text{П}Ab.l}$ | $t^{f_2}_{\text{П}Ab.l}$ | $t^{S_3}_{\text{П}Ab.l}$ | $t^{f_3}_{\text{П}Ab.l}$ | $t^{S_4}_{\text{П}Ab.l}$ | $t^{f_4}_{\text{П}Ab.l}$ | $t^{S_5}_{\text{П}Ab.l}$ | $t^{f_5}_{\text{П}Ab.l}$ | $t^{\text{Ж.Ц.}}_{\text{С}Ab.l}$ |

**The example of creating matrices of multi-objective optimization of temporary parameters of life cycle of the offer of products at the market is presented in [Tab. 5.3].**

**The list of symbols** on the example of a product of $A_{1.1}$ to [Tab. 5.3]:

$t^{s_1}_{\text{с}A_{1.1}}$; $t^{s_2}_{\text{с}A_{1.1}}$; $t^{s_3}_{\text{с}A_{1.1}}$; $t^{s_4}_{\text{с}A_{1.1}}$; $t^{s_5}_{\text{с}A_{1.1}}$ - start time, respectively of the 1st, 2nd, 3rd, 4th, 5th stage of the life cycle of demand of local market in product $A_{1.1}$; $p$ =1...$n$ - markets from 1 to $n$;

$t^{s_1}_{\text{п}A_{1.1}}$; $t^{s_2}_{\text{п}A_{1.1}}$; $t^{s_3}_{\text{п}A_{1.1}}$; $t^{s_4}_{\text{п}A_{1.1}}$; $t^{s_5}_{\text{п}A_{1.1}}$ - start time, respectively of the 1st, 2nd, 3rd, 4th, 5th stage of life cycle of offer of the product $A_{1.1}$ on local market;

$t^{f_1}_{\text{с}A_{1.1}}$; $t^{f_2}_{\text{с}A_{1.1}}$; $t^{f_3}_{\text{с}A_{1.1}}$; $t^{f_4}_{\text{с}A_{1.1}}$; $t^{f_5}_{\text{с}A_{1.1}}$ - termination time, respectively of the 1st, 2nd, 3rd, 4th, 5th stage of life cycle of demand of local market in product $A_{11}$;

$t^{f_1}_{\text{п}A_{1.1}}$; $t^{f_2}_{\text{п}A_{1.1}}$; $t^{f_3}_{\text{п}A_{1.1}}$; $t^{f_4}_{\text{п}A_{1.1}}$; $t^{f_5}_{\text{п}A_{1.1}}$ - termination time, respectively of the 1st, 2nd, 3rd, 4th, 5th stage of life cycle of offer of the product $A_{1.1}$ on local market;

$t^{\text{ж.ц.}}_{\text{с}A_{1.1}}$; $t^{\text{ж.ц.}}_{\text{п}A_{1.1}}$ - general duration of life cycle, respectively of the offer and of demand in product $A_{1.1}$;
Similar symbols are entered for products $A_{2.1}$ ... $A_{b.1}$;.. .;$A_{1.l}$ ... $A_{b.l}$

Definition of strategic range of time over each product will allow to more precisely predict the dynamics of demand and will increase effectiveness of process of management of plurality of variable data of consumer indicators of products. At the 6$^{th}$ stage of process this matrix is used as basic for carrying out situational updating of temporary cycles of the offered products;

5.4.2 - to carry out a comparative assessment of options of potentially possible range of data of temporary parameters of different stages of life cycle of the offer of certain type of products by calculation of indicators [Form. 2.1.4.1 - 2.1.4.4] of their stability, synchronization with the predicted temporary parameters of demand of the markets, compatibility with temporary parameters of stay in the same markets of other products from the commodity offer of firm for achievement of the best synergetic result and increase in competitiveness of products.

It is necessary to take into account that the same type of a product can be positioned in the different markets and temporary phases, and also duration of stages of offering him at them can be different. Besides, duration of vital cycles of positioning of one products exerts impact on temporary parameters of demand in other products. Therefore, at assessment of temporary parameters of the offer of various products in various markets it is necessary to solve tasks of multi-purpose optimization.

5.5.2 - to choose the optimal variant of strategic range of temporary parameters of different stages of life cycle of offer of different types of products on each local market by means of creation of an algorithm of consecutive choice; to generate the output data of temporary parameters of the strategic program of the offer of products.

**Example of an algorithm of the choice of variant of the strategic program over data of temporary parameters of life cycle of a product [Fig.5**.2].

**The list of symbols to [Fig.5.2]:**

$t^{\text{в}1}_{A}$;$t^{\text{в}2}_{A}$; $t^{\text{в}3}_{A}$ - respectively first, second and third version of the strategic program over indicator of duration of life cycle of a product «*A*»;
$\Delta(\nabla)t_A$ - respectively increase and reduction of life cycle of a product «*A*»;
$t^{\text{зв}1(2,3)}_{A}$ - replacements of duration of separate stages during life cycle of a product «*A*» (at an invariance of the general duration of life cycle of a product);
$\rightarrow$- - follows; *opt* - optimum; $\Delta\Pi\text{Э}$ - increment of useful effect.

It is conditionally accepted that there are three options of duration of life cycle of the offer of product «*A*» on the local market; it is necessary to choose one, which is the most optimum among conditional three options or to find new options of data of duration of stages and full life cycle of a product. At the same time, each life cycle includes five stages, their duration characterizes structure of certain life cycle. Assessment begins with the second option, i.e. from average data of duration of life cycle of a product between two extreme values:

$$[\text{Form.5.5.2.1}] \qquad t_A^{в1} < t_A^{в2} < t_A^{в3}.$$

If the effect can be increased by reduction of duration of life cycle of a product over second option, then it is the beginning of assessment of the first variant, which establishes shorter life cycle of a product, but if by means of increase of duration of life cycle of a product, then it leads to assessment of the third option of strategic program with the longest life cycle of a product. If the effect can be increased by reduction or lengthening of life cycle of a product respectively at the first and third version of the strategic program, as well as in result of replacements of duration of separate stages of each of the program options, then it is the beginning of search of new options of duration and structure of life cycle of a product. If at any of options of temporary parameters the required useful effect is reached, then the optimal variant is found;

5.6.2 - to place in the bottom half of each cell of the matrix the strategic the output data (the strategic range of the output data) of temporary parameters of stages of life cycle of the offer of products in strategic segments of the markets during of planned long-term period; to synthesize the summary cell of the matrix.

**3rd step - «The way of formation of data plurality of the strategic program over qualitative parameters of offering products»** includes the following operations:

5.1.3 - to build matrix for multi-objective optimization, to reflect temporary parameters of stages of life cycle of supply and demand of each type of products in vertical position of a matrix, whereas spatial parameters (strategic zones of positioning of products of firm in the markets) and parameters of target function of products in them - in horizontal position; also to divide each cage in half; to reflect data of demand in parameters of target function of products in the top part of each cell of a matrix, whereas the planned data of parameters of the offer of target function of products - at the bottom part. The following parameters of target function are defined: effectiveness of target function of a product; cumulative consumer costs consisting of the price of acquisition of a product by the buyer and of the operational costs for its use, as well as take into account the parameters of esthetics, ergonomics and the guaranteed operation term of a product;
5.2.3 - to place data of demand of different markets, which were predicted on the basis of graphic and economic-mathematical forecasts relatively of parameters of target function, qualitative parameters of different types of products during stages of a long-term period in the top half of each cell of a matrix;
5.3.3 - to generate possible variants of a data plurality of quality parameters of offer of each type of product and to create possible variants of data range of target function of the offer of each type of a product for different markets and temporary stages of long-term period by means of calculation of coefficient of ponderability of contribution of quality parameters into target function of a product, into its effectiveness, cumulative consumer costs; to generate options on the basis of use of «set theory», economic-mathematical forecasting of graphic multidimensional modeling;

The matrix [Tab. 5.4] is the example of positioning product «*A*» on different markets and temporary stages of life cycle, and a matrix is typical. Matrices of qualitative parameters generate a plurality of data of target function and its compound parameters, such as effectiveness of target function of product and cumulative consumer expenses on product.
**The example of creating matrices of multiple optimization of data of target function and quality of products is presented in [Tab. 5.4].**
**The list of symbols to [Tab. 5.4]:**

$З_{\Pi A}$ - cumulative expenses of the consumer of a product;
$Z_A$ - target function of a product;
$RZ_A$ - effectiveness of target function of a product «*A*»,

$З_{\Pi c1_A}^{1(2,3,4,5)}, З_{\Pi c2_A}^{1(2,3,4,5)}, \ldots, З_{\Pi cn_A}^{1(2,3,4,5)}$ - demand of buyers of the 1st, 2nd ,..., *n* of the market into of cumulative cost of product «*A*» (in price and operational costs of product), respectively at the 1st, 2nd, 3rd, 4th, 5th stage of life cycle of demand;

$Z_{c1_A}^{1(2,3,4,5)}, Z_{c2_A}^{1(2,3,4,5)}, \ldots, Z_{cn_A}^{1(2,3,4,5)}$ - demand of buyers of the 1st , 2nd, ..., *n* of the market in target function of product «*A*», respectively at the 1st, 2nd, 3rd, 4th, 5th stage of life cycle of demand;

$RZ_{c1_A}^{1(2,3,4,5)}, RZ_{c2_A}^{1(2,3,4,5)}, \ldots, RZ_{cn_A}^{1(2,3,4,5)}$ - demand of buyers of the 1st, 2nd, ..., *n* of the market in effectiveness of target function of a product «*A*», respectively at the 1st, 2nd, 3rd, 4th, 5th stage of life cycle of demand;

$Z_{\text{п}1_A}^{1(2,3,4,5)}, Z_{\text{п}2_A}^{1(2,3,4,5)}, \ldots, Z_{\text{п}n_A}^{1(2,3,4,5)}$ - target function of a product «*A*», which is offered on market, respectively 1,2, ..., *n* during 1st, 2nd, 3rd, 4th, 5th stage of life cycle;

$RZ_{\text{п}1_A}^{1(2,3,4,5)}, RZ_{\text{п}2_A}^{1(2,3,4,5)}, \ldots, RZ_{\text{п}n_A}^{1(2,3,4,5)}$ - effectiveness of target function of a product «*A*», which is offered on market, respectively 1, 2, ..., *n* during 1st, 2nd, 3rd, 4th, 5th stage of life cycle;

$З_{\text{п}_{\text{п}1_A}}^{1(2,3,4,5)}, З_{\text{п}_{\text{п}2_A}}^{1(2,3,4,5)}, \ldots, З_{\text{п}_{\text{п}n_A}}^{1(2,3,4,5)}$ - cumulative expenses of consumers at acquisition and use of a product «*A*», which is offered on market, respectively 1, 2, ..., *n* during 1st, 2nd, 3rd, 4th, 5th stage of life cycle;

$\bigcup_{p=1}^{t\in 1\ldots 5}\left\{З_{\text{п}_{\text{с}_A}}; RZ_{\text{с}_A}; Z_{\text{с}_A}\right\}; \bigcup_{p=2}^{t\in 1\ldots 5}\left\{З_{\text{п}_{\text{с}_A}}; RZ_{\text{с}_A}; Z_{\text{с}_A}\right\}; \ldots; \bigcup_{p=n}^{t\in 1\ldots 5}\left\{З_{\text{п}_{\text{с}_A}}; RZ_{\text{с}_A}; Z_{\text{с}_A}\right\}$ - cumulative demand in of of plurality of separate parameters and at target function of product «*A*» in general on market, respectively on 1,2, ...,*n* during full life cycle;

$\bigcup_{p=1}^{t\in 1\ldots 5}\left\{З_{\text{п}_{\text{п}_A}}; RZ_{\text{п}_A}; Z_{\text{п}_A}\right\}; \bigcup_{p=2}^{t\in 1\ldots 5}\left\{З_{\text{п}_{\text{п}_A}}; RZ_{\text{п}_A}; Z_{\text{п}_A}\right\}; \ldots; \bigcup_{p=n}^{t\in 1\ldots 5}\left\{З_{\text{п}_{\text{п}_A}}; RZ_{\text{п}_A}; Z_{\text{п}_A}\right\}$ - cumulative plurality of separate parameters and of target function of the offer of product «*A*» on market, respectively on 1...,*n* during full life cycle;

Matrices are tool for implementation of a way of management of a plurality of data of target function of a product and its components, which change depending on temporary and spatial parameters. The demand in the parameters of target function even of one type of products is changing not only from a stage to a stage of life cycle, but also at changing of markets. Needs of buyers of the different markets in certain product even at coincidence of temporary phases of demand for it can differ essentially.

**Table 5.4**

| Matrix of planning of variable data of target function of the product, taking into account temporary and spatial parameters | | | | | | | | | |
|---|---|---|---|---|---|---|---|---|---|
| **Target function of the product (*ZA*)** | **Market 1** | | | **Market 2** | | | **Market *n*** | | |
| | Parameters | | **Target function product** ($Z_A$) | Parameters | | **Target function product** ($Z_A$) | Parameters | | **Target function product** ($Z_A$) |
| | $RZ_A$ | $З_{П_A}$ | | $RZ_A$ | $З_{П_A}$ | | $RZ_A$ | $З_{П_A}$ | |
| **1** | **2** | **3** | **4** | **5** | **6** | **7** | **8** | **9** | **10** |
| **1. Emergence** | $RZ^{1}_{\text{с}1_A}$ | $З^{\ 1}_{\text{пс}1_A}$ | $Z^{1}_{\text{с}1_A}$ | $RZ^{1}_{\text{с}2_A}$ | $З^{\ 1}_{\text{пс}2_A}$ | $Z^{1}_{\text{с}2_A}$ | $RZ^{1}_{\text{с}n_A}$ | $З^{\ 1}_{\text{пс}n_A}$ | $Z^{1}_{\text{с}n_A}$ |
| **1. Introduction** | $RZ^{1}_{\text{п}1_A}$ | $З^{\ 1}_{\text{пп}1_A}$ | $Z^{1}_{\text{п}1_A}$ | $RZ^{1}_{\text{п}2_A}$ | $З^{\ 1}_{\text{пп}2_A}$ | $Z^{1}_{\text{п}2_A}$ | $RZ^{1}_{\text{п}n_A}$ | $З^{\ 1}_{\text{пп}n_A}$ | $Z^{1}_{\text{п}n_A}$ |
| **2. Acceleration** | $RZ^{2}_{\text{с}1_A}$ | $З^{\ 2}_{\text{пс}1_A}$ | $Z^{2}_{\text{с}1_A}$ | $RZ^{2}_{\text{с}2_A}$ | $З^{\ 2}_{\text{пс}2_A}$ | $Z^{2}_{\text{с}2_A}$ | $RZ^{2}_{\text{с}n_A}$ | $З^{\ 2}_{\text{пс}n_A}$ | $Z^{2}_{\text{с}n_A}$ |
| **2. Growth** | $RZ^{2}_{\text{п}1_A}$ | $З^{\ 2}_{\text{пп}1_A}$ | $Z^{2}_{\text{п}1_A}$ | $RZ^{2}_{\text{п}2_A}$ | $З^{\ 2}_{\text{пп}2_A}$ | $Z^{2}_{\text{п}2_A}$ | $RZ^{2}_{\text{п}n_A}$ | $З^{\ 2}_{\text{пп}n_A}$ | $Z^{2}_{\text{п}n_A}$ |
| **3. Stabilization** | $RZ^{3}_{\text{с}1_A}$ | $З^{\ 3}_{\text{пс}1_A}$ | $Z^{3}_{\text{с}1_A}$ | $RZ^{3}_{\text{с}2_A}$ | $З^{\ 3}_{\text{пс}2_A}$ | $Z^{3}_{\text{с}2_A}$ | $RZ^{3}_{\text{с}n_A}$ | $З^{\ 3}_{\text{пс}n_A}$ | $Z^{3}_{\text{с}n_A}$ |
| **3.Maturity** | $RZ^{3}_{\text{п}1_A}$ | $З^{\ 3}_{\text{пп}1_A}$ | $Z^{3}_{\text{п}1_A}$ | $RZ^{3}_{\text{п}2_A}$ | $З^{\ 3}_{\text{пп}2_A}$ | $Z^{3}_{\text{п}2_A}$ | $RZ^{3}_{\text{п}n_A}$ | $З^{\ 3}_{\text{пп}n_A}$ | $Z^{3}_{\text{п}n_A}$ |
| **4. Decrease** | $RZ^{4}_{\text{с}1_A}$ | $З^{\ 4}_{\text{пс}1_A}$ | $Z^{4}_{\text{с}1_A}$ | $RZ^{4}_{\text{с}2_A}$ | $З^{\ 4}_{\text{пс}2_A}$ | $Z^{4}_{\text{с}2_A}$ | $RZ^{4}_{\text{с}n_A}$ | $З^{\ 4}_{\text{пс}n_A}$ | $Z^{4}_{\text{с}n_A}$ |
| **4. Decrease** | $RZ^{4}_{\text{п}1_A}$ | $З^{\ 4}_{\text{пп}1_A}$ | $Z^{4}_{\text{п}1_A}$ | $RZ^{4}_{\text{п}2_A}$ | $З^{\ 4}_{\text{пп}2_A}$ | $Z^{4}_{\text{п}2_A}$ | $RZ^{4}_{\text{п}n_A}$ | $З^{\ 4}_{\text{пп}n_A}$ | $Z^{4}_{\text{п}n_A}$ |
| **5. Fading** | $RZ^{5}_{\text{с}1_A}$ | $З^{\ 5}_{\text{пс}1_A}$ | $Z^{5}_{\text{с}1_A}$ | $RZ^{5}_{\text{с}2_A}$ | $З^{\ 5}_{\text{пс}2_A}$ | $Z^{5}_{\text{с}2_A}$ | $RZ^{5}_{\text{с}n_A}$ | $З^{\ 5}_{\text{пс}n_A}$ | $Z^{5}_{\text{с}n_A}$ |
| **5. Removal** | $RZ^{5}_{\text{п}1_A}$ | $З^{\ 5}_{\text{пп}1_A}$ | $Z^{5}_{\text{п}1_A}$ | $RZ^{5}_{\text{п}2_A}$ | $З^{\ 5}_{\text{пп}2_A}$ | $Z^{5}_{\text{п}2_A}$ | $RZ^{5}_{\text{п}n_A}$ | $З^{\ 5}_{\text{пп}n_A}$ | $Z^{5}_{\text{п}n_A}$ |

(continued)

| Matrix of planning of variable data of target function of the product, taking into account temporary and spatial parameters | | | | | | | | | |
|---|---|---|---|---|---|---|---|---|---|
| **Target function of the product (*ZA*)** | **Market 1** | | | **Market 2** | | | **Market *n*** | | |
| | Parameters | | **Target function product** ($Z_A$) | Parameters | | **Target function product** ($Z_A$) | Parameters | | **Target function product** ($Z_A$) |
| | $RZ_A$ | $З_{\Pi A}$ | | $RZ_A$ | $З_{\Pi A}$ | | $RZ_A$ | $З_{\Pi A}$ | |
| **1** | **2** | **3** | **4** | **5** | **6** | **7** | **8** | **9** | **10** |
| TOTAL: | $\bigcup_{p=1}^{t\in 1...5}\left\{З_{\Pi c_A}; RZ_{c_A}; Z_{c_A}\right\}$ | | | $\bigcup_{p=2}^{t\in 1...5}\left\{З_{\Pi c_A}; RZ_{c_A}; Z_{c_A}\right\}$ ... | | | $\bigcup_{p=n}^{t\in 1...5}\left\{З_{\Pi c_A}; RZ_{c_A}; Z_{c_A}\right\}$ | | |
| | $\bigcup_{p=1}^{t\in 1...5}\left\{З_{\Pi \Pi_A}; RZ_{\Pi_A}; Z_{\Pi_A}\right\}$ | | | $\bigcup_{p=2}^{t\in 1...5}\left\{З_{\Pi \Pi_A}; RZ_{\Pi_A}; Z_{\Pi_A}\right\}$ ... | | | $\bigcup_{p=n}^{t\in 1...5}\left\{З_{\Pi \Pi_A}; RZ_{\Pi_A}; Z_{\Pi_A}\right\}$ | | |

The offered tools allow to set various parameters of target function for various modifications of one type of products for sale them in various markets. The data of demand in target function of product and its parameters, predicted for each temporary stage, are reflected in the top part of each cell of the matrix, whereas data of parameters of target function of offering product, which are planned according to demand - in the bottom half of each cell of matrix. At transformation of the offered target function of a product according to demand it is necessary to find the most optimal variant, which provides the best balance between supply and demand not only over data of the target function, but also over separate parameters its. Optimum interval of data of target function of a product and the parameters is established for a certain temporary cycle and for each local market, but at the same time optimum range of fluctuations of data of target function of product and its parameters on various local markets during certain time period has to be established. Thereby, similar matrixes are the instrument of multiple optimization, what allows to establish over each product the range of fluctuations of data of its target function and its parameters, and also various quality indicators according to dynamics of demand, as on one, so and in various markets, on which the firm has or wants to receive an exit in the planned long-term period. Use of the matrixes for definition of ranges of data of target function, of qualitative parameters of products in strategic program will allow to receive higher technical result than at analogs from process of management of data, also to increase competitiveness, efficiency of products and benefit of firm. Similar matrixes will be used also at the 6th stage for situational transformation of qualitative parameters of products.

Summary columns of matrix in vertical position and in horizontal position have to be balanced and correspond with each other. The final column of a matrix characterizes aggregate useful effect from implementation of all offer of firm at the planned set of parameters of target function of each product on all plurality of markets, during full life cycle. Matrix mechanism of installation of ranges of ratios of parameters of target function, of qualitative parameters of products allows to receive higher the technical result by means of increase of data accuracy and opportunities of their balancing, what increase the effectiveness, reliability of the forming documents of the strategic program of firm. Similar matrixes will be used also at the 6th stage for current adjustment of the parameters of target function and quality of products;

5.4.3 - to carry out a comparative assessment of different options of possible range of data of target function, of its parameters by means of calculation of indicators of target function of its parameters of effectiveness and cumulative costs and indicators of efficiency of product for consumers and producer, of national economy in general for finding the best options, which provide synergetic result and increase in competitiveness of products.

5.5.3 - to choose the optimal variant of strategic range of fluctuations of data of target function and its parameters for various types of products on various markets and temporary stages of their offer during the long-term period by means of creation of an algorithm of consecutive choice, to generate the output data of target function, qualitative parameters of the strategic program of the offer of products.

**Example of an algorithm of the choice of variant of the strategic program over data of effectiveness and cumulative cost of target function of product [Fig.5.3].**

**The list of symbols** to [Fig.5.3]:

ΔΠЭ - increment of useful effect; Δ(∇) - addition (decrease);

$RZ_A^{В1}$; $RZ_A^{В2}$;$RZ_A^{В3}$ - respectively first, second and third version of the strategic program over indicator of effectiveness of target function of a product;

$З_A^{В1}$; $З_A^{В2}$;$З_A^{В3}$ - respectively first, second and third version of the strategic program over indicator of cumulative cost of target function of a product;

↑(↓) - respectively increase (decrease); →- - brings (follows); *opt* - optimum.

The algorithm of the choice of an optimal variant [Fig.5.3] is illustrating the optimization process of effectiveness and of cumulative cost of target function of product, i.e. of two parts of one whole. Therefore, combinations of a ratio of these parameters have to be considered. The target function defines the relation of effectiveness of target function of product to cumulative consumer costs for its embodiment. Therefore, at planning of strategic range of data of target function of product are equally important as indicator of the effectiveness of target function of product, which defines it quality, consumer properties, so and indicator of cumulative cost of product, which on the one hand, characterizes the price of product, expenses of consumers for exploitation of product, and on the other hand, characterizes its qualitative parameters more and more. The indicator of cumulative cost of product includes not only costs of production and sale of a product, but and expenses of consumers at exploitation of product, but these consumer expenses depend from quality, consumer properties of a product all more. It is important to consider all possible options. The optimum variant of strategic range of data of target function in the different local markets during the planned long-term period consistently is chosen in a matrix among all possible options of matrix combinations.

As an example, it is accepted that there are three versions of the strategic program over data of indicators of effectiveness and cumulative cost of target function of certain type of product, it is necessary to choose data, which are the most optimum among them or to find the new options of data of effectiveness and cumulative cost of product, their new optimum ratio, which will lead to increase of target function of product during the planned long-term period. Assessment begins with the second option, which is characterized by average values of indicators of effectiveness and cumulative cost of product between two extreme values:

[Form. 5.5.3.1– 5.5.3.2] $RZ_A^{B1} < RZ_A^{B2} < RZ_A^{B3};\ 3_A^{B1} < 3_A^{B2} < 3_A^{B3}$ .

If the effect can be increased by decrease and of effectiveness, and of cumulative cost of target function of product below the minimum level of data over second option, then it is the beginning of assessment of the first variant, but if by increase of data of these indicators above the maximum level of their values over second option, then it leads to assessment of the third option. The range of values is established for each variant.

Maximum level of data of effectiveness, and of cumulative cost of target function of product over first variant is established till minimum level of values their over second variant, and the minimum level of these indicators at third option begins after achievement of the maximum values of these parameters at second option.

In turn, if the effect can be increased by means of the growth or decrease of data of parameters of target function, as well as in result of changes of their proportional ratio, respectively at first and third variant of the strategic program, then it is the beginning of search of new options of data of the strategic program over these parameters. It is necessary to execute consecutive assessment of all possible combinations of change of effectiveness of target function and the cumulative cost of product, which consist in increase or decrease of both parameters, or in increase of value of one parameter and decrease of value of other parameter of target function of product, taking into account the above-named restrictions of their change at various strategic directions of development of firm. At each of three conditionally accepted variants of the strategic program it is necessary to define not only the directions of changes of these indicators, but the admissible interval of their change at different situations on the market and tendencies of change of consumer demand. The combination of growth of effectiveness of target function of a product at decrease of expenses, namely of the exploitation costs and the prices of product for consumers is the most preferable from the point of view of increase in efficiency of a product, but it not always corresponds to real changes of the market and consumer demand. The most frequent are situations, when other proportions between data of effectiveness and cumulative cost of target function of product are required. It can be reached or by means of decrease of both indicators in certain proportions to each other, or by means of their increase. Combinations of growth of expenses at decrease of effectiveness of product cannot be excluded from consideration. As such situations are possible, when demand exceeds the offer, and other proportions between the prices and quality of products are required.

The scheme allows to choose an interval and the direction of the required change of parameters of target function of product. Then the variants correct for creation of new data and proportions between parameters of target function of a product. If at realization of first, second or third option of change of indicators of effectiveness and cumulative cost of target function of product are not required, then the optimal variant of strategic range of data of target function and optimum proportions between them is found. The range of data of target function has to be established separately for each type of product and each temporary stage of its positioning on market and placed in a matrix;

5.6.3 -to place in the bottom half of each cell of a matrix the strategic output data (the strategic range of the output data) of target function, qualitative parameters of the offer of each type of products in different markets and stages of life cycle during the long-term period; to synthesize total cells of a matrix.

**4th step - «The way of formation of a synergistic plurality of data of the strategic program over parameters of quality, volume, price of the offer of products»** includes the following operations:

5.1.4 - to form matrices for multi-objective optimization; to reflect temporary parameters of stages of life cycle of demand and offer for each type of a product in vertical position of a matrix, whereas the spatial parameters (strategic zones of positioning of products of firm in the markets) and indicators of the offer of products in them, namely: data of effectiveness of target function, volume, price - in horizontal position; also to divide each cage in half; to reflect data of parameters of demand in the top part of each cell of a matrix, whereas the planned data of effectiveness of target function, volume, price of the offer of products - at the bottom part;

5.2.4 - to place data of demand of different markets, which were predicted on the basis of graphic and economic-mathematical forecast of data of effectiveness of target function, volumes, prices of different types products during stages of a long-term period in the top half of each cell of a matrix;

5.3.4 - to generate possible variants of a data plurality of effectiveness of target function, volume, price of the offer of different types products according demand of different markets, conditions, scenarios of development, resource base opportunities of firm during the long-term period on the basis of use of «set theory», economic-mathematical planning of graphic multidimensional modeling, multi-purpose optimization; to construct models of multidimensional image of data.

**The example of a matrix of optimization of the strategic program over data plurality of indicators of offering products of firm is given in [Tab. 5.5].**

**The list of symbols to [Tab. 5.5]**

$\text{Ц}^1_{\text{т}A_{\text{п}_1}}; \text{Ц}^2_{\text{т}A_{\text{п}_1}}; \text{Ц}^3_{\text{т}A_{\text{п}_1}}, \text{Ц}^4_{\text{т}A_{\text{п}_1}}, \text{Ц}^5_{\text{т}A_{\text{п}_1}}; \ldots; \text{Ц}^1_{\text{т}A_{\text{п}_n}}, \text{Ц}^2_{\text{т}A_{\text{п}_n}}, \text{Ц}^3_{\text{т}A_{\text{п}_n}}, \text{Ц}^4_{\text{т}A_{\text{п}_n}}, \text{Ц}^5_{\text{т}A_{\text{п}_n}}$ - price of offering product «*A*» on the 1st, 2nd, 3rd, 4th, 5th stage of life cycle of positioning him in market 1,2, ... *n*, respectively;

$\text{Ц}^1_{\text{т}A_{c_1}}, \text{Ц}^2_{\text{т}A_{c_1}}, \text{Ц}^3_{\text{т}A_{c_1}}, \text{Ц}^4_{\text{т}A_{c_1}}, \text{Ц}^5_{\text{т}A_{c_1}}; \ldots; \text{Ц}^1_{\text{т}A_{c_n}}, \text{Ц}^2_{\text{т}A_{c_n}}, \text{Ц}^3_{\text{т}A_{c_n}}, \text{Ц}^4_{\text{т}A_{c_n}}, \text{Ц}^5_{\text{т}A_{c_n}}$ - price of demand in product «*A*» on the 1st, 2nd, 3rd, 4th, 5th stage of life cycle of demand on market 1, ..., *n*, respectively;

t- life cycle, includes five stages: 1, 2, 3, 4, 5;

$Q^1_{\text{т}A_{\text{п}_1}}, Q^2_{\text{т}A_{\text{п}_1}}, Q^3_{\text{т}A_{\text{п}_1}}, Q^4_{\text{т}A_{\text{п}_1}}, Q^5_{\text{т}A_{\text{п}_1}}; \ldots; Q^1_{\text{т}A_{\text{п}_n}}, Q^2_{\text{т}A_{\text{п}_n}}, Q^3_{\text{т}A_{\text{п}_n}}, Q^4_{\text{т}A_{\text{п}_n}}, Q^5_{\text{т}A_{\text{п}_n}}$ - volume of offering product «*A*» on the 1st, 2nd, 3rd, 4th, 5th stage of life cycle of positioning him in market 1, 2, ... *n*, respectively;

$Q^1_{\text{т}A_{c_1}}, Q^2_{\text{т}A_{c_1}}, Q^3_{\text{т}A_{c_1}}, Q^4_{\text{т}A_{c_1}}, Q^5_{\text{т}A_{c_1}}; \ldots; Q^1_{\text{т}A_{c_n}}, Q^2_{\text{т}A_{c_n}}, Q^3_{\text{т}A_{c_n}}, Q^4_{\text{т}A_{c_n}}, Q^5_{\text{т}A_{c_n}}$ - volume of demand in product «*A*» on the 1st, 2nd, 3rd, 4th, 5th stage of life cycle of demand on market 1 ,..., *n*, respectively;

$RZ^1_{\text{т}A_{\text{п}_1}}, RZ^2_{\text{т}A_{\text{п}_1}}, RZ^3_{\text{т}A_{\text{п}_1}}, RZ^4_{\text{т}A_{\text{п}_1}}, RZ^5_{\text{т}A_{\text{п}_1}}; \ldots; RZ^1_{\text{т}A_{\text{п}_n}}, RZ^2_{\text{т}A_{\text{п}_n}}, RZ^3_{\text{т}A_{\text{п}_n}}, RZ^4_{\text{т}A_{\text{п}_n}}, RZ^5_{\text{т}A_{\text{п}_n}}$ ...; - effectiveness of target function of offering product «*A*» on the 1st, 2nd, 3rd, 4th, 5th stage of life cycle of positioning him in market 1,2, ... *n*, respectively;

$RZ^1_{\text{т}A_{c_1}}, RZ^2_{\text{т}A_{c_1}}, RZ^3_{\text{т}A_{c_1}}, RZ^4_{\text{т}A_{c_1}}, RZ^5_{\text{т}A_{c_1}}; \ldots; RZ^1_{\text{т}A_{c_n}}, RZ^2_{\text{т}A_{c_n}}, RZ^3_{\text{т}A_{c_n}}, RZ^4_{\text{т}A_{c_n}}, RZ^5_{\text{т}A_{c_n}}$ - demand in effectiveness of target function of product «*A*» on the 1st, 2nd, 3rd, 4th, 5th stage of life cycle of demand on market 1 ,..., *n*, respectively;

$$\bigcup_{p\in 1\ldots n}^{t\in 1\ldots 5} \left\{\text{Ц}_{\text{т}A_c}; Q_{\text{т}A_c}; RZ_{\text{т}A_c}\right\}$$

- cumulative data plurality of demand of all markets in the prices, volumes, and effectiveness of target function of product «*A*» during full life cycle;

$$\bigcup_{p\in 1..n}^{t\in 1\ldots 5} \left\{\text{Ц}_{\text{т}A_\text{п}}; Q_{\text{т}A_\text{п}}; RZ_{\text{т}A_\text{п}}\right\}$$

- cumulative data plurality of indicators of effectiveness of target function, volumes, and prices of offering product «*A*» during its full life cycle on all markets (in SZM of firm);

$$\bigcup_{p=1}^{t\in 1\ldots 5} \left\{\text{Ц}_{\text{т}A_c}; Q_{\text{т}A_c}; RZ_{\text{т}A_c}\right\}; \ldots; \bigcup_{p=n}^{t\in 1\ldots 5} \left\{\text{Ц}_{\text{т}A_c}; Q_{\text{т}A_c}; RZ_{\text{т}A_c}\right\}$$

- cumulative data plurality of demand in price, volume, effectiveness of target function of product «*A*» during life cycle of demand on market 1, ..., *n*, respectively;

$$\bigcup_{p=1}^{t\in 1...5}\left\{Ц_{\text{т}A_{\text{п}}};Q_{\text{т}A_{\text{п}}};RZ_{\text{т}A_{\text{п}}}\right\};\dots;\bigcup_{p=n}^{t\in 1...5}\left\{Ц_{\text{т}A_{\text{п}}};Q_{\text{т}A_{\text{п}}};RZ_{\text{т}A_{\text{п}}}\right\}$$

- cumulative data plurality of effectiveness of target function, volumes, prices of offering product «*A*» during its full life cycle on market 1, ..., *n*, respectively;

$$\bigcup_{p\in 1..n}^{t=1}\left\{Ц_{\text{т}A_c};Q_{\text{т}A_c};RZ_{\text{т}A_c}\right\};\bigcup_{p\in 1..n}^{t=2}\left\{Ц_{\text{т}A_c};Q_{\text{т}A_c};RZ_{\text{т}A_c}\right\};\bigcup_{p\in 1..n}^{t=3}\left\{Ц_{\text{т}A_c};Q_{\text{т}A_c};RZ_{\text{т}A_c}\right\};\bigcup_{p\in 1..n}^{t=4}\left\{Ц_{\text{т}A_c};Q_{\text{т}A_c};RZ_{\text{т}A_c}\right\};$$

$$\bigcup_{p\in 1..n}^{t=5}\left\{Ц_{\text{т}A_c};Q_{\text{т}A_c};RZ_{\text{т}A_c}\right\}$$

- cumulative data plurality of demand of all markets from the 1st to *n* in the price, volume, effectiveness of target function of product «*A*», respectively on the 1st, 2nd, 3rd, 4th, 5th stage of its life cycle;

$$\bigcup_{p\in 1..n}^{t=1}\left\{Ц_{\text{т}A_{\text{п}}};Q_{\text{т}A_{\text{п}}};RZ_{\text{т}A_{\text{п}}}\right\};\bigcup_{p\in 1..n}^{t=2}\left\{Ц_{\text{т}A_{\text{п}}};Q_{\text{т}A_{\text{п}}};RZ_{\text{т}A_{\text{п}}}\right\};\bigcup_{p\in 1..n}^{t=3}\left\{Ц_{\text{т}A_{\text{п}}};Q_{\text{т}A_{\text{п}}};RZ_{\text{т}A_{\text{п}}}\right\};\bigcup_{p\in 1..n}^{t=4}\left\{Ц_{\text{т}A_{\text{п}}};Q_{\text{т}A_{\text{п}}};RZ_{\text{т}A_{\text{п}}}\right\};$$

$$\bigcup_{p\in 1..n}^{t=5}\left\{Ц_{\text{т}A_{\text{п}}};Q_{\text{т}A_{\text{п}}};RZ_{\text{т}A_{\text{п}}}\right\}$$

- cumulative data plurality of effectivenessof target function, volumes, proce of offering product «*A*», respectively on the 1st, 2nd, 3rd, 4th, 5th stage of its life cycle on all markets from the 1 to *n*;

**Table 5.5**

| Matrix of optimization of the strategic program over plurality of data of the indicators of the offer of products of firm | | | | | | | |
|---|---|---|---|---|---|---|---|
| **Stages of offering products «A»** | **Market** 1 ... | | | **Market n** | | | **Cumulative demand / offer** $\{\text{Ц}_\text{Т}; Q_\text{Т}; RZ_\text{Т}\}$ |
| | $\text{Ц}_\text{Т}$ | $Q_\text{Т}$ | $RZ_\text{Т}$ | $\text{Ц}_\text{Т}$ | $Q_\text{Т}$ | $RZ_\text{Т}$ | |
| **1** | **2** | **3** | **4** | **5** | **6** | **7** | **8** |
| **1. Emergence** | $\text{Ц}^{1}_{\text{Т}A_{\text{с}1}}$ | $Q^{1}_{\text{Т}A_{\text{с}1}}$ | $RZ^{1}_{\text{Т}A_{\text{с}1}}$ | $\text{Ц}^{1}_{\text{Т}A_{\text{с}n}}$ | $Q^{1}_{\text{Т}A_{\text{с}n}}$ | $RZ^{1}_{\text{Т}A_{\text{с}n}}$ | $\bigcup_{p\in 1..n}^{t=1}\{\text{Ц}_{\text{Т}A_\text{с}}; Q_{\text{Т}A_\text{с}}; RZ_{\text{Т}A_\text{с}}\}$ |
| **1.Introduction** | $\text{Ц}^{1}_{\text{Т}A_{\text{п}1}}$ | $Q^{1}_{\text{Т}A_{\text{п}1}}$ | $RZ^{1}_{\text{Т}A_{\text{п}1}}$ | $\text{Ц}^{1}_{\text{Т}A_{\text{п}n}}$ | $Q^{1}_{\text{Т}A_{\text{п}n}}$ | $RZ^{1}_{\text{Т}A_{\text{п}n}}$ | $\bigcup_{p\in 1..n}^{t=1}\{\text{Ц}_{\text{Т}A_\text{п}}; Q_{\text{Т}A_\text{п}}; RZ_{\text{Т}A_\text{п}}\}$ |
| **2. Acceleration** | $\text{Ц}^{2}_{\text{Т}A_{\text{с}1}}$ | $Q^{2}_{\text{Т}A_{\text{с}1}}$ | $RZ^{2}_{\text{Т}A_{\text{с}1}}$ | $\text{Ц}^{2}_{\text{Т}A_{\text{с}n}}$ | $Q^{2}_{\text{Т}A_{\text{с}n}}$ | $RZ^{2}_{\text{Т}A_{\text{с}n}}$ | $\bigcup_{p\in 1..n}^{t=2}\{\text{Ц}_{\text{Т}A_\text{с}}; Q_{\text{Т}A_\text{с}}; RZ_{\text{Т}A_\text{с}}\}$ |
| **2. Growth** | $\text{Ц}^{2}_{\text{Т}A_{\text{п}1}}$ | $Q^{2}_{\text{Т}A_{\text{п}1}}$ | $RZ^{2}_{\text{Т}A_{\text{п}1}}$ | $\text{Ц}^{2}_{\text{Т}A_{\text{п}n}}$ | $Q^{2}_{\text{Т}A_{\text{п}n}}$ | $RZ^{2}_{\text{Т}A_{\text{п}n}}$ | $\bigcup_{p\in 1..n}^{t=2}\{\text{Ц}_{\text{Т}A_\text{п}}; Q_{\text{Т}A_\text{п}}; RZ_{\text{Т}A_\text{п}}\}$ |
| **3. Stabilization** | $\text{Ц}^{3}_{\text{Т}A_{\text{с}1}}$ | $Q^{3}_{\text{Т}A_{\text{с}1}}$ | $RZ^{3}_{\text{Т}A_{\text{с}1}}$ | $\text{Ц}^{3}_{\text{Т}A_{\text{с}n}}$ | $Q^{3}_{\text{Т}A_{\text{с}n}}$ | $RZ^{3}_{\text{Т}A_{\text{с}n}}$ | $\bigcup_{p\in 1..n}^{t=3}\{\text{Ц}_{\text{Т}A_\text{с}}; Q_{\text{Т}A_\text{с}}; RZ_{\text{Т}A_\text{с}}\}$ |
| **3. Maturity** | $\text{Ц}^{3}_{\text{Т}A_{\text{п}1}}$ | $Q^{3}_{\text{Т}A_{\text{п}1}}$ | $RZ^{3}_{\text{Т}A_{\text{п}1}}$ | $\text{Ц}^{3}_{\text{Т}A_{\text{п}n}}$ | $Q^{3}_{\text{Т}A_{\text{п}n}}$ | $RZ^{3}_{\text{Т}A_{\text{п}n}}$ | $\bigcup_{p\in 1..n}^{t=3}\{\text{Ц}_{\text{Т}A_\text{п}}; Q_{\text{Т}A_\text{п}}; RZ_{\text{Т}A_\text{п}}\}$ |
| **1.Decrease** | $\text{Ц}^{4}_{\text{Т}A_{\text{с}1}}$ | $Q^{4}_{\text{Т}A_{\text{с}1}}$ | $RZ^{4}_{\text{Т}A_{\text{с}1}}$ | $\text{Ц}^{4}_{\text{Т}A_{\text{с}n}}$ | $Q^{4}_{\text{Т}A_{\text{с}n}}$ | $RZ^{4}_{\text{Т}A_{\text{с}n}}$ | $\bigcup_{p\in 1..n}^{t=4}\{\text{Ц}_{\text{Т}A_\text{с}}; Q_{\text{Т}A_\text{с}}; RZ_{\text{Т}A_\text{с}}\}$ |

(continued)

| Matrix of optimization of the strategic program over plurality of data of the indicators of the offer of products of firm | | | | | | | |
|---|---|---|---|---|---|---|---|
| Stages of offering products «A» | Market 1 ... | | | Market n | | | Cumulative demand / offer $\{Ц_т; Q_T; RZ_T\}$ |
| | $Ц_т$ | $Q_T$ | $RZ_T$ | $Ц_т$ | $Q_T$ | $RZ_T$ | |
| 1 | 2 | 3 | 4 | 5 | 6 | 7 | 8 |
| 1.Decrease | $Ц^4_{т\,A_{п_1}}$ | $Q^4_{т\,A_{п_1}}$ | $RZ^4_{т\,A_{п_1}}$ | $Ц^4_{т\,A_{п_n}}$ | $Q^4_{т\,A_{п_n}}$ | $RZ^4_{т\,A_{п_n}}$ | $\bigcup_{p\in 1..n}^{t=4}\{Ц_{т_{A_п}}; Q_{т_{A_п}}; RZ_{т_{A_п}}\}$ |
| 2. Fading | $Ц^5_{т\,A_{c_1}}$ | $Q^5_{т\,A_{c_1}}$ | $RZ^5_{т\,A_{c_1}}$ | $Ц^5_{т\,A_{c_n}}$ | $Q^5_{т\,A_{c_n}}$ | $RZ^5_{т\,A_{c_n}}$ | $\bigcup_{p\in 1..n}^{t=5}\{Ц_{т_{A_c}}; Q_{т_{A_c}}; RZ_{т_{A_c}}\}$ |
| 2. Removal | $Ц^5_{т\,A_{п_1}}$ | $Q^5_{т\,A_{п_1}}$ | $RZ^5_{т\,A_{п_1}}$ | $Ц^5_{т\,A_{п_n}}$ | $Q^5_{т\,A_{п_n}}$ | $RZ^5_{т\,A_{п_n}}$ | $\bigcup_{p\in 1..n}^{t=5}\{Ц_{т_{A_п}}; Q_{т_{A_п}}; RZ_{т_{A_п}}\}$ |
| И ТОГО: | $\bigcup_{p=1}^{t\in 1...5}\{Ц_{т_{A_c}}; Q_{т_{A_c}}; RZ_{т_{A_c}}\}$ ... | | | $\bigcup_{p=n}^{t\in 1...5}\{Ц_{т_{A_c}}; Q_{т_{A_c}}; RZ_{т_{A_c}}\}$ | | | $\bigcup_{p\in 1..n}^{t\in 1...5}\{Ц_{т_{A_c}}; Q_{т_{A_c}}; RZ_{т_{A_c}}\}$ |
| | $\bigcup_{p=1}^{t\in 1...5}\{Ц_{т_{A_п}}; Q_{т_{A_п}}; RZ_{т_{A_п}}\}$ ... | | | $\bigcup_{p=n}^{t\in 1...5}\{Ц_{т_{A_п}}; Q_{т_{A_п}}; RZ_{т_{A_п}}\}$ | | | $\bigcup_{p\in 1..n}^{t\in 1...5}\{Ц_{т_{A_п}}; Q_{т_{A_п}}; RZ_{т_{A_п}}\}$ |

Thus, the best synergetic plurality of data of positioning of each product has to be defined, taking into account not only temporary parameters and spatial reference points, but also its contribution in composition of all plurality of products of firm, which the firm is positioning in the different markets during a certain period of time.

Matrices are tools of generating of dynamic rows of key data and strategic planning. Matrixes are tools for drawing up optimum strategic programs which can establish potentially possible range of data plurality of various indicators of the offer of different types of products according to demand of various markets in certain stages of their life cycle. For this purpose, the solution of the whole complex of tasks of multi-purpose optimization is required.

Matrixes are constructed thus, what they become tools, which allow to find a complex of optimal solutions, namely: first, they establish according to demand not only a main indicator of positioning of each product on the market, but also define the optimal plurality of data of the quality, price, and volume of the offer of each product for best compatibility of all data with each other and for achievement of the highest synergetic effect; secondly, they define the strategic range of data of the offer of product as from the point of view of different stages of life cycle of demand in it, so and from the point of view of increase of effect during full life cycle in the market; thirdly, they form decisions over balance of supply and demand not only in a certain local market over each type of a product, but also take into account the contribution of each product in satisfaction of cumulative demand of all markets; fourthly, they establish balance of the cumulative proposal of various producers with cumulative demand of buyers and are define the optimal variants of a combination of their interests; fifthly, they generate the strategic range of data of the main indicators of the offer of product, taking into account not only consumer demand, but also contribution of product into effect of all commodity offer of firm in general.

Summary cells of a matrix in vertical position in the top part reflect plurality of the predicted data during full life cycle of demand of each market in effectiveness of target function, in volume and price of product, and in the bottom part of summary cells - the plurality of coordinated with each other of data of indicators of offering products, which are planned in according with data of demand.

Summary cells of a matrix in horizontal position in the top part reflect the plurality of data of demand of all markets, but on each stage of life cycle of demand in products, and in the bottom part of summary cells - the plurality of data of effectiveness of target function, volume, p0rice of products on each stage of life cycle of their offer in all markets. Thus, the best synergetic plurality of data of positioning of each product has to be defined, taking into account its contribution in composition of all plurality of products of firm, which the firm is positioning in the different markets during a certain period of time. It is basis for definition of interval of a strategic data of each of indicators of positioning of a certain type of a product during its full life cycle in a certain market. All data of summary vertical and horizontal cells of matrix are synthesized in the general total cell of a matrix, which reflects an optimal variant of the strategic program of firm over the coordinated set of data of indicators of positioning of the cumulative offer of products of firm in all markets (in strategic segments of firm) during their full life cycles.

The matrix of optimization of the strategic program over plurality of these indicators of the offer of products is the effective tool of planning and data management. Embodying the mechanism of multi-purpose optimization, matrixes allow to achieve of higher technical result over comparison with all known analogs. Output data of the offer on each product is optimized comprehensively, to provide the best compatibility of volume, price, and qualitative parameters of offering product as between themselves, so and with the corresponding parameters of demand, when determining the best option of spatial positioning of products over markets into different temporary phases during the long-term period. It increases the accuracy, reliability, effectiveness of documents of strategic program. Such multilateral optimization of data of the offer of products leads to significant increase of consumer properties of products at optimization of costs of their production and sale, and as a result, to growth of effect from products not only for producer, but and for consumers. All matrixes of multi-purpose optimization, which are constructed on the $5^{th}$ stage, are intended for use on 6th stage as base for implementation of situational updating of data of volume, effectiveness of target function, price of offering products, taking into account the current data of demand;

5.4.4 - to carry out a comparative assessment of different options of a data plurality of effectiveness of target function, volume, price of offering products by means of calculations of their influence on indicators of efficiency of product for consumers and producer and for national economy in general, taking into account full life cycle of product on different markets (form. 2.1.6.1 - 2.1.6.11). At assessment it is necessary to consider that the contribution of data of effectiveness of target function, volume, price of the offer of products, namely contribution of each concrete indicator into efficiency of a product is not equal to a cumulative contribution of a plurality of all indicators of the offer of product. Therefore, comparative assessment has to be carried out over data plurality of effectiveness of target function, volume, price of offering products for finding synergetic result and increase in competitiveness of products. For this purpose, it is necessary to use models of multidimensional influence of data on efficiency of a product.

**The list of symbols to [Fig.5.4]:**

$\Delta П Э$ - increment of useful effect; $\Delta(\nabla)$ - respectively addition (decrease);

$Ц_A^{в1};Ц_A^{в2};Ц_A^{в3}$ - respectively first, second and third version of the strategic program over indicator of price of offering product «*A*»;

$Q_A^{в1};Q_A^{в2};Q_A^{в3}$ - respectively first, second and third version of the strategic program over indicator of volume of offering product «*A*».

5.5.4 - to choose the optimal variant of data plurality of offer of a product, which allows to reach the best balance with demand, of increase of efficiency of a product both for the producer, and for consumers by means of creation of algorithms of the choice of strategic range of data the main indicators of the offer of products; to generate a plurality of the output data of effectiveness of target function, volume, price of the strategic program of the offer of products.

**Example of an algorithm for** choice of optimum variant of plurality of the coordinated data of the price and volume of the offer of product [Fig.5.4].

For example, three variants of the strategic program over indicators of the volume and price of offering certain types of products are considered, among them the one is chosen, which is the most optimum from them. If optimum variant is not found, then search of new options of data of the price and volumes of the offer of products begins. Assessment begins with the second option, i.e. with of average values of the price and volumes of offering product:

$$[\text{Form. 5.5.4.1– 5.5.4.2}] \qquad Ц_A^{в1} < Ц_A^{в2} < Ц_A^{в3};\ Q_A^{в1} < Q_A^{в2} < Q_A^{в3}.$$

The second option is characterized by average values of indicators of price and volume of offering product between two extreme values. If the effect can be increased by means of decrease of the price and volume of offering product below the minimum level of data over second option, then it is the beginning of assessment of the first variant, but if by means of increase of data of these indicators above the maximum level of their values over second option, then it leads to assessment of the third option. The range of values of indicators is established for each variant. Maximum level of price and of volume of offering product over first variant is established till minimum level of values their over second variant, and respectively the minimum level of these indicators at third option begins after achievement of the maximum values of these parameters at second option.

In turn, if the effect can be increased by means of the growth or decrease of price and volume of offering products, respectively at the first and third variant of the strategic program, as well as in result of change of proportions between the price and volume, namely: by means of growth or decrease of values of both indicators, or by means of the growth of one and decrease of other indicator, then it is necessary to begin the search of new options of the strategic program over optimum price and volume of offering product. If at realization of first, second or third option of change of indicators of price, quality and volume of the offer of a product is not required, then the optimal variant of strategic range of data of offering product and optimum proportions between them is found. For additional economic justification of the optimum choice of data of volume, of quality and price of positioning product on market build the digital models, which allow to implement the comparison and system assessment of effect of each variant.

**Example of an algorithm of the choice of variant of the strategic program on the basis of comprehensive and comparative assessment of coefficients of efficiency of offered products [Fig. 5.5].**

**The list of symbols to [Fig.5.5]:**

$K_{эф_{х/р_{ТП}}}^{в1(2,3)}$ - coefficient of efficiency of the commodity offer for producer, which characterizes respectively first, second, third version of the strategic program of firm;

$K_{эф_{п_{ТП}}}^{в1(2,3)}$ - coefficient of consumer efficiency of the commodity offer, which characterizes respectively first, second, third version of the strategic program of firm;

$В_{ТП_1}$; $В_{ТП_2}$; $В_{ТП_3}$ - options of data of the main indicators of the commodity offer, which characterizes respectively first, second, third version of the strategic program of firm.

The drawing [Fig.5.5] illustrates the scheme of the choice of an optimal variant of plurality of data of the main indicators of the strategic program of the offer of products.

As an example, three options are considered. At each option coefficients of efficiency for the producer and consumer are estimated. If over both indicators of efficiency growth are observed, and they are higher, than actually reached values, then this variant is possible.

The choice of the best variant among all possible is executed by means of comparative assessment them with each other. The variant, which surpasses other options as over data of efficiency for producer, so and over consumer efficiency has to be chosen. However, if there is no such coincidence, namely at one option the coefficients of efficiency of product for the producer is higher, and at another - above for consumers, then for the strategic program of development it is necessary to choose the perspective variant, at which the coefficient of consumer efficiency is higher, because from it depends level of satisfaction of requirements of consumers;

5.6.4 - to place in the bottom half of each cell of a matrix the strategic output data (the strategic range of the output data) of effectiveness of target function, volume and price of the offer of each type of product on planned markets (in strategic zones of positioning of products of the firm) on stages of life cycle of the offer of products during the long-term period; to synthesize total cells of a matrix.

**List of designations [Fig.6]**

**The 6th stage - «The way of situational transformation of data of consumer indicators of products, by using matrices of multi-purpose optimization, which function by means of the interactive display»** consists of the following steps:

6.1-8.1 - «The way of situational transformation of breadth, depth and composition of commodity assortments»;
6.1-8.2 - «The way of situational transformation of a data plurality of temporal parameters of the offer of products»;
6.1-8.3 - «The way of situational transformation of a data plurality of target function, quality of the offer of products»;
6.1-8.4 - «The way of situational transformation of a data plurality of effectiveness of target function, volume, price of the offer of products».

The model [Fig.6] illustrates that steps of the sixth stage of situational transformation of consumer indicators of products have to be carried out consistently, each subsequent stage begins only after the termination of previous. Each step includes consecutive operations.

**List of operations of the 6th stage [Fig. 6]:**

6.1 - to represent a matrix for multi-purpose optimization of data by means of the interactive display;
6.2 - to replace reference data of the predicted demand by the current data of demand in each type of a product in the top half of each cell of a matrix by means of the interactive display;
6.3 - to determine with the help of a visual image on the interactive display such cells in a matrix, in which the current actual data of demand do not correspond to the planned data of the offer, and to establish the direction of discrepancies with « plus» or «minus»;
6.4 - to develop variants over situational transformation of a data plurality of offer of products in real-time according data of demand of different markets in the current period with help of the interactive display and on the basis of «set theory», multi-purpose optimization, economic-mathematical and graphic multidimensional modeling;
6.5 - to analyze impact of the changed data of offering one type of products in one cells of a matrix on data of supply and demand of other types of products in the other cells of a matrix, to find in real-time the interrelated decisions, to create options of multi-purpose optimization of data of the cumulative offer of products of firm on the basis of «set theory», multi-purpose optimization, economic-mathematical and graphic multidimensional modeling;
6.6 - to construct algorithms for transformation of data and to find optimal solutions by means of interactive displays with removable panels;
6.7 -to estimate options of transformation of data of the offer of each type of a product by means of calculation of indicators of effectiveness them for the producer and consumers and to choose the optimal variant, which provides bigger effect, the best satisfaction of consumer demand, the increase of competitiveness of products; to change data in cages of a matrix with help of the interactive display;
6.8 - to generate the output data of indicators of offer of products in the current period on the basis of situational transformation of data; to synthesize summary cells of a matrix by means of the interactive display.

**1st step - «The way of situational transformation of breadth, depth and composition of the commodity**

**assortments»** includes the following operations.

6.1.1 - to represent a matrix of optimization of assortments with the predicted data of demand with the planned data of the offer of commodity nomenclature and assortments in different markets and stages of life cycle on the interactive display. Examples of assortments matrices are reflected in [Tab. 5.1, Tab. 5.2];

6.2.1 - to replace reference data of the predicted demand by the current data of demand in breadth, depth and composition of different commodity assortments on different markets in the top half of each cell of a matrix by means of the interactive display;

6.3.1 - to determine with the help of a visual image on the interactive display such cells in a matrix, in which the current demand in breadth, depth and composition of the commodity assortment does not correspond to the planned data of offer of commodity assortments; as a result, to determine the direction of mismatches;

6.4.1 - to develop variants over situational transformation of a data plurality of breadth, depth and composition of the offer of commodity assortments in real-time according to data of demand of different markets in the current period with help of interactive display and on the basis of «set theory», multi-purpose optimization, economic-mathematical and graphic multidimensional modeling;

6.5.1 - to analyze impact of influence of the changed data of breadth, depth, and composition of the commodity assortment in one cells of a matrix on data of supply and demand of commodity assortment in other cells of a matrix; to create different options of optimization of data of breadth, depth, and composition of commodity assortments in the current period on the basis of «set theory», multi-purpose optimization, economic-mathematical and graphic multidimensional modeling and by means of interactive displays;

6.6.1 - to construct algorithms for consecutive transformation of the offered assortments by means of interactive display; to define the optimum offer over breadth of the commodity nomenclature, breadth, depth, structure of commodity assortments for different markets (in strategic zones of firm in the market) during the current period;

6.7.1 - to estimate options of transformation of data of the offer of commodity nomenclature and assortments in the markets in the current period by means of calculation of indicators of effectiveness them for the producer and consumers and to choose the optimal variant, which provides bigger effect, the best satisfaction of consumer demand; to change data in cages of a matrix of assortments with help of the interactive display;

**Example of an algorithm of transformation of data plurality of offering assortments [Fig.6.1].**

**The list of symbols to [Figs. 6.1].**

*E* - conditions; *S* - strategy of firm; *C* - possibilities of firm;

$Д_{ТП_A}$ -income of firm from realization of the commodity assortment «*A*»;

$\overline{Д}_{Тс/с_A}$ - potentially possible income of firm from realization of the commodity assortment *«A»* in average, weighed over markets;

$Д_{Т\,с/л_A}$ - potentially possible income of firm in the local market rom realization of the commodity assortment «*A*» at correction of the assortment according to demand of the local market;

$S_{кор_{l_{ТН}}}$ - strategy of adjustment of breadth and structure of the commodity nomenclature;

$S_{кор_{b_{ТА}}}$ - strategy of adjustment of breadth and structure of commodity assortments;

$S_{кор_{h_Т}}$ - strategy of adjustment of depth of assortments and composition of modifications of the offer of a certain type of products;

$С_{рез_{l_{ТН}}}$ - opportunities of firm for adjustment of breadth and structure of the commodity nomenclature;

$С_{рез_{b_{ТА}}}$- opportunities of firm for adjustment of breadth and structure of commodity assortments;

$С_{рез_{h_Т}}$- opportunities of firm for adjustment of depth of commodity assortments and composition of modifications of the offer of a certain type of products;

$l_c$; $b_c$; $h_c$ - demand in breadth and structure of the commodity nomenclature, in breadth, depth of the commodity assortment;

$l_П$; $b_П$; $h_П$ - offer of breadth and of structure of the commodity nomenclature, breadth and depth of the commodity assortment and composition of modifications of products;

$l_{\text{ТП}A}$ - breadth of offering commodity nomenclature «*A*»;

$l_{c/\pi A}$ - demand of the local market in breadth of the commodity nomenclature «*A*»;

$\Delta l$; $\nabla l$; $l^3$ - number respectively of the additions (of the expansions), of the reductions (of the narrowings), of the replacements of commodity assortments in commodity nomenclature;

$l_{\text{кор}}$ - breadth of offering commodity nomenclature after adjustment it over all indicators;

$\Delta b$; $\nabla b$; $b^3$ - number respectively of the additions (of the expansions), of the reductions (of the narrowing), of the replacements of types of products in commodity assortments;

$b_{\text{кор}}$ - breadth of the commodity assortment after its adjustment over all indicators;

$\Delta h$; $\nabla h$; $h^3$ - indicators respectively of the increase, of the decrease of number of modifications and change of structure of the offer of certain types of products;

$h_{\text{кор}}$ - depth of the commodity assortment after its adjustment over all indicators;

Designations: $l_{\text{кор}}$, $b_{\text{кор}}$, $h_{\text{кор}}$ are shown, that the commodity assortments from the commodity nomenclature were corrected not only over breadth, depth, but also over structure, respectively types of products- over number and structure of modifications;

$\Delta\Pi\ni_{l_{\text{кор}}}$; $\Delta\Pi\ni_{b_{\text{кор}}}$; $\Delta\Pi\ni_{h_{\text{кор}}}$ - increment of useful effect from adjustment respectively of the indicators of the commodity nomenclature and assortments, number and structure of modifications of the offer of certain types of products;

—··► - communications between the indicators transformation of breadth of the commodity nomenclature, of breadth, depth, composition of commodity assortments and by opportunities of firm which are not equal by desirable;

—·—·► - communications between the sufficient opportunities of resource base of firm and by transformation of breadth, of composition of the commodity nomenclature, the breadth, depth and composition of assortments;

·········► - communications between the strategies of transformation of data plurality of the commodity nomenclature, assortments and by transformation indicators of breadth, of composition of the commodity nomenclature, the breadth, depth, composition of commodity assortments;

----► - feedbacks to transformation of strategies, when as a result of transformation of the breadth and composition of the commodity nomenclature, the breadth, depth and composition of commodity assortments the optimum result is not achieved;

——► - communications between the reached indicators of the breadth of the commodity nomenclature, the breadth, depth, composition of commodity assortments after transformation and by indicators of increment of useful effect.

If effect from commodity nomenclature is less, than potentially possible, and also the researches of market demand demonstrate, what there are essential distinctions between demand and offer over composition of commodity nomenclature and assortments, then it is necessary to develop strategies of transformation of composition of the commodity nomenclature, the commodity assortments. With this purpose it is necessary to estimate as external factors of success: development of the markets, consumer demand, trade and marketing network, the intensity of competition, so and internal reserves: the technological, material resources, financial capabilities, personnel composition of firm. All set of external and of internal factors has to be considered in dynamics. Current strategies and options of situational transformation of offering the commodity assortments it is necessary to define according them.

Algorithm [Fig. 6.1] allows to establish in form of dot arrows the connections between all indicators and strategies of transformation of the breadth of the commodity nomenclature, the breadth, depth, composition of the commodity assortments and composition of modifications of the offer of separate types of products, as well as to establish interrelations in form of straight and feedbacks between conditions, opportunities of resource base, and the strategies of firm. The communications between opportunities of resource base of firm for optimization of the commodity nomenclature and commodity assortments and by problem indicators are illustrated by dash-dotted shooters, whereas the operations of the choice of the optimal variants of their adjustment, which lead to the highest increment of effect - by continuous shooters. The communications, which are return to elaboration of new strategies of optimization of the commodity nomenclature and commodity assortments, when in result of the executed transformation of indicators of the commodity nomenclature and commodity assortments, the optimal variant is not found are illustrated by dotted shooters.

Thus, algorithm allows to find: first, the transformation options of the composition of the commodity assortments, which correspond to dynamics of demand, change of conditions, markets and the business environment of firm, to generate the updating of the assortments offer for each temporary stage of demand and each market; secondly, the agreed decisions on addition, reduction or replacements in structure of the commodity nomenclature and commodity assortments, namely the optimum between quantitative and qualitative parameters of updating of the assortments offer; thirdly, such combined pluralities after transformation of breadth and structure of the commodity nomenclature, as well as of breadth, of depth and structure of the commodity assortments on different markets, which organically correspond with each other and provide the best synergetic result.

6.8.1 - to generate the output data of breadth, depth, and compositions of commodity assortments of firm in the current period on the basis of situational transformation of data; to synthesize summary cells of a matrix by means of the interactive display.

**2nd step - «The way of situational transformation of data plurality of temporal parameters of offering products»** includes the following operations:

6.1.2 - to represent a matrix of optimization of temporary parameters with the predicted data of demand and planned data of the offer of certain types of products in various markets during their life cycle on the interactive display. The example of the temporary matrix is reflected in [Tab. 5.3];

6.2.2 - to replace reference data of the predicted demand by the current data of temporary cycles of demand of the markets in each type of a product in the top half of each cell of a matrix by means of the interactive display;

6.3.2 - to determine with the help of a visual image on the interactive display such cells in a matrix, in which the current demand in parameters of temporary cycles does not correspond to the planned temporal parameters of the offer of different types of products in certain market; as a result, to determine the direction of mismatches;

6.4.2 - to develop variants over synchronization of temporal parameters of the offer of different products in real-time according to duration of demand of different markets in the current period, namely achievement of synchronization over time of the beginning, duration of separate stages and completion of life cycle of the offer of products with help of interactive display and on the basis of multi-purpose optimization, graphic multidimensional modeling.

The following options of achievement of balance between supply and demand over temporary parameters can be generated: 1) lengthening of duration of one and shortening of others of stages of life cycle of a product; 2) changes of time of introduction of a product on market and its removal from market; 3) changes of duration (lengthening or shortening) of life cycle of the offer of a product, as a result, of change of duration of all or only separate stages;

6.5.2 - to analyze impact of the changed data of temporal parameters of the offer of products in one cells of a matrix on data of temporary cycles of demand and offer in other cells of a matrix; to create in real-time options of optimization of data of temporal parameters of the offer of products on the basis of multi-purpose optimization, graphic multidimensional modeling and by means of interactive displays.

The change of duration of life cycle of the offer of products of one type can influence on change of duration of life cycle of demand in other types of products. The decision on extension of release of one products can be followed by the decision on reduction of release of other products, because both the producer, and the consumer have restrictions in resources and make the choice of product, which is more favorable for them.

The process of adjustment of temporary parameters of the offer of products is connected with the solution of problems of the connected optimization. It is necessary to estimate synergetic effect of cumulative adjustment of data of temporary parameters of the offer of products of firm in certain markets.

6.6.2 - to construct algorithms for consecutive transformation of temporal parameters of the offer of each type of a product by means of interactive displays; to define the optimum duration of stages of life cycle of offer of each type of a product positioned in a certain market in the current period;

6.7.2 - to estimate options of transformation of temporal parameters by means of calculation of coefficients of synchronization with demand and to choose an optimal variant, which provides the best balance of life cycle of demand and the offer of products in different market in the current period, also the best satisfaction of consumer demand and achievement of effect; to change data in cages of matrix of temporal parameters by means of the interactive display;

**Example of an algorithm of transformation of temporary parameters of life cycle of the offer of product [Fig.6.2].**

**The list of symbols to [Fig.6.2]:**

$t^1_{c_A}; t^2_{c_A}; t^3_{c_A}; t^4_{c_A}; t^5_{c_A}$ - demand in duration of first, second, third, fourth and fifth stage of life cycle of a product;

$t^1_{\text{П}_A}; t^2_{\text{П}_A}; t^3_{\text{П}_A}; t^4_{\text{П}_A}; t^5_{\text{П}_A}$ - duration of the offer of a product on first, second, third, fourth, fifth stage of its life cycle;

$t^1_{\text{П}_{A\text{кор}}}; t^2_{\text{П}_{A\text{кор}}}; t^3_{\text{П}_{A\text{кор}}}; t^4_{\text{П}_{A\text{кор}}}; t^5_{\text{П}_{A\text{кор}}}$ - adjustment of duration of first, second, third, fourth, fifth stage of offering product;

$\Delta t^1_{\text{П}_A}; \Delta t^2_{\text{П}_A}; \Delta t^3_{\text{П}_A}; \Delta t^4_{\text{П}_A}; \Delta t^5_{\text{П}_A}$ - time of increase of 1, 2nd, 3rd, 4th, 5th stage of the offer of a product;

$\nabla t^1_{\text{П}_A}; \nabla t^2_{\text{П}_A}; \nabla t^3_{\text{П}_A}; \nabla t^4_{\text{П}_A}; \nabla t^5_{\text{П}_A}$ - time of decrease of 1, 2nd, 3rd, 4th, 5th stage of the offer of a product;

$\Delta t^1_{\text{П}_{A\text{кор}}}; \Delta t^2_{\text{П}_{A\text{кор}}}; \Delta t^3_{\text{П}_{A\text{кор}}}; \Delta t^4_{\text{П}_{A\text{кор}}}; \Delta t^5_{\text{П}_{A\text{кор}}}$ - the duration of the 1st, 2nd, 3rd, 4th, 5th stage of the offer of product after their lengthenings during adjustment of the temporary parameters;
«$A$» - product symbol; $\Delta(\nabla)$ - lengthening (shortening) of time;

$\nabla t^1_{\text{П}_{A\text{кор}}}; \nabla t^2_{\text{П}_{A\text{кор}}}; \nabla t^3_{\text{П}_{A\text{кор}}}; \nabla t^4_{\text{П}_{A\text{кор}}}; \nabla t^5_{\text{П}_{A\text{кор}}}$ - the duration of the 1st, 2nd, 3rd, 4th, 5th stage of the offer of product after their shortening during adjustment of the temporary parameters;

$t^{\text{жц}}_{\text{с}_A}$ - demand for the general duration of life cycle of a product;

$t^{\text{жц}}_{\text{П}_A}$ - the general duration of life cycle of the offer of a product in the market.

When the general duration of life cycle and duration of separate stages of life cycle of the offer of product in the market does not coincide with the corresponding temporary parameters of life cycle of demand in it, it is necessary to begin consecutive transformation of duration of life cycle of a product for achievement of temporary balance with stages of life cycle of demand. If after transformation of duration of the first stage the temporary balance between a full cycle of demand and of offering product is not reached, then the transformation of duration of the subsequent stages continue, what consists in consecutive consideration of temporary parameters of second, third, fourth and fifth stage of life cycle of the offer of a product for their synchronization with demand. If the general duration of life cycle has to be changed, then it is necessary to define stages, which should be extended or shortened. The transformation of duration of one phase can change the duration of other phases of life cycle of offering product, it is not always possible to achieve full coincidence. For example, if demand in product arose earlier or later of emergence of a product on the market, then the stage of introduction of product on the market, respectively decreases or increases, i.e. stage of introduction of product on the market and stage of emergence of demand are synchronized not over duration, but over time of termination them, in order to achieve the best temporary synchronization of supply and demand on other stages of life cycle.
Often coordination of duration of life cycles of various products, also the connected transformation of temporary parameters of separate stages is required for finding of optimum balance between them. It demands machine processing of the big array of information. Therefore, it is necessary to estimate synergetic effect from cumulative adjustment of temporary parameters of the offer of a product in market, also their influence on effect of the producer and consumers, namely results of transformation have to be estimated from the point of view of increase in consumer properties of a product. Consecutive assessment on achievement of timeliness of beginning and the termination of each stage, of the optimum duration of life cycle by means of an algorithm will allow to find optimal variants of balance of life cycles of the offer of each concrete product with demand of the local market.

6.8.2 - to generate the output data of temporal parameters of the offer of products in the current period on the basis of situational transformation of data, to synthesize summary cells of a matrix by means of the interactive display.

Summary columns of this matrix characterize duration of full life cycle according to supply and demand of each product. При этом учитывают, что any product can be positioned both on one, and in the different markets, and duration of stages of its offer on them can differ. The general duration of life cycle of the offer of a product is determined by the earliest point of its introduction on the markets and by the latest point of its leaving from the market.
**3rd step - «The way of situational transformation of data plurality of the target function, of quality of offering products»** includes the following operations:

6.1.3 - to represent a matrix of multi-purpose optimization of target function, quality of a product with the predicted data of demand and with the planned data of qualitative parameters of offering product on different markets and stages of life cycle on the interactive display. The example of a matrix is reflected in [Tab. 5.4];
6.2.3 - to replace reference data of the predicted demand by the current data of demand in target function and quality of various types of products on the different markets in the top half of each cell of a matrix by means of the interactive display;

6.3.3 - to determine with the help of a visual image on the interactive display such cells in matrix, in which the current demand in parameters of target function and quality of products does not correspond to the planned data of target function, of quality of the offer of products; as a result, to determine the direction of mismatches with of the «plus» or «minus» respectively;
6.4.3 - to develop variants over situational transformation of target function, of qualitative parameters of the offer of products in real-time according to data of demand of different markets in the current period by means of interactive displays and on the basis of «set theory», multi-purpose optimization, economic-mathematical and graphic multidimensional modeling.

Decisions about volumes and the directions of change of target function, of quality of products are based not only on current data of demand, but also depend from opportunities of resource base of firm. Transformation can be required not over all, and only over separate indicators of quality of products, but it is necessary to consider influence of the updated data in change of data of other indicators of quality. Situational transformation of data in matrix is based on principle of the «set theory» and multidimensional modeling. As a result, options of transformation of quality of each product are forming in the form of combinations of data of various parameters, what allows to establish their influence on the corrected parameters of target function of a product. Development of options of transformation of target function is carried out over each type of product of firm for its best compliance with demand of a certain market;

6.5.3 - to analyze impact of the changed data of target function and quality of offering products in the one cells of matrix on data of supply and demand of these indicators in the other cells of the matrix; to create in real-time different options of optimization of data of target function, of quality of the offer of products in the current period on the basis of «set theory», multi-purpose optimization, economic-mathematical and graphic multidimensional modeling and by means of interactive displays. For example, it is important to estimate influence of improvement of quality of one products on change of demand in other products and to predict chain reaction of transformation of qualitative parameters of different types of products for increase of demand in them;
6.6.3 - to construct algorithms for situational transformation of data of qualitative parameters by means of interactive display; to define optimum data of target function, of various indicators of quality for each type of a product positioned in a certain market in the current period ([Fig.6.3]);
6.7.3 - to estimate options of situational transformation of target function, quality of the offer of each type of product in different markets in the current period by means of calculation of indicators of effectiveness them for the producer and consumers and to choose the optimal variant, which provides bigger effect, increase of consumer properties of products, also the best satisfaction of consumer demand; to change data in cages of matrix of qualitative parameters with help of the interactive display;

**Example of an algorithm of transformation of range of data of target function of offer of product [Fig.6.3].**

**The list of symbols to [Fig. 6.3]:**

$Z^{с}_{A_{min}}$ - minimum border of range of demand in target function of product «*A*»;

$Z^{с}_{A_{max}}$ - maximum border of range of demand in target function of product «*A*»;

$\Delta(\nabla)$ - to add (to reduce);

$Z^{п}_{A}$ - target function of the offer of a product «*A*»;

$Ц^{п}_{A}$ - price of offer of a product;

$RZ^{п}_{A}$ - effectiveness of target function of the offered product;

$Ц^{с}_{A_{min}}$ - minimum border of range of demand in the product price;

$Ц^{с}_{A_{max}}$ - maximum border of range of demand in the product price;

$RZ^{с}_{A_{min}}$ - minimum border of range of demand in effectiveness of target function of product;

$RZ^{с}_{A_{max}}$ - maximum border of range of demand in effectiveness of target function of a product.

If supply and demand are not balanced over target function of product, then it is necessary to begin transformation of components of the target function. In the beginning all possible options of change of effectiveness of target function of product in the direction of their increase or decrease are established. Minimum and maximum admissible data of this parameter are defined according to demand of buyers of various markets. At each of the chosen directions of changes of indicators of effectiveness of target function of a product define admissible values of the price. All possible variants of combinations of data of indicators of effectiveness of target function and the price have to be formed consistently: admissible maximum, average or minimum values of one indicator can be equally combined with admissible maximum, average or minimum values of other indicator. In the different markets, during the certain temporary periods and at different situations different combinations of data of these parameters can be optimum.

[Fig. 6.3] illustrates process of the choice of optimal variants of situational transformations of data of effectiveness of target function and the price, which provide an admissible interval of data of target function of product for buyers of various markets at different stages of demand in it. The option which provides the highest synergetic effect is optimum. Existence of a large number of modifications of the offer of the same type of product allows to increase competitiveness of product, to achieve significant increase in useful effect from it at the expense of the best satisfaction of public requirements;

6.8.3 - to generate the output data of target function, of qualitative parameters of the offer of products in the current period on the basis of situational transformation of data, to synthesize summary cells of a matrix by means of the interactive display. Data of target function of each product can fluctuate in intervals from an admissible minimum to an admissible maximum of values on different markets in different stages of life cycle. Summary columns of this matrix synthesize a cumulative set of values of target function of a product for full life cycle of its offer. Intervals of fluctuations of data of target function and its parameters for the current period are established for each concrete type of products in borders of strategic range of their fluctuations for this type of products.

**4th step - «The way of the situational transformation of data plurality of effectiveness of the target function, volume, price of offering products»** includes the following operations:

6.1.4 - to represent a matrix of multi-purpose optimization after its updating over assortment, temporary and qualitative parameters of the current program of offering product for the subsequent situational interconnected transformation of the planned data of effectiveness of target function, volume, price of offering products according to data of the current demand on the interactive display ([Tab. 5.5]).
6.2.4 - to replace reference data of the predicted demand by the current data of demand in effectiveness of target function, in volume and price of products in different markets in the top half of each cell of a matrix by means of the interactive display;
6.3.4 - to determine with the help of a visual image on the interactive display such cells in matrix, in which the current demand in effectiveness of target function, in volume and price of products does not correspond to the planned data of offering products; as a result, to determine the directions of mismatches with of the «plus» or «minus», respectively;
6.4.4 - to develop variants over situational interconnected transformation of a data plurality of effectiveness of target function, volumes and prices of the offer of each type of a product in real-time according to data of demand of different markets in the current period with help of interactive display and on the basis of «set theory», multi-purpose optimization, economic-mathematical and graphic multidimensional modeling.

Key parameter often is defined during transformation of plurality of data, then the changes of all other parameters are additional and depend on it.

**Examples** of graphic modeling of transformation of data of indicators of offering products in three-dimensional system of coordinates at realization of various product-markets strategies and choice of the key indicators of offering products corresponding to them are presented in form of graphic models [Fig. 6.4, Fig.6.5].

The list of symbols to [Fig.6.5] and [Fig.6.6]:

$Ц_{т_П}/Ц_{т_С}$ - volume of the offer of product and demand in a product of firm;

$f_{Ц_С}; f_{Ц_П}$ - quality (effectiveness of target function) of the offered product and demand in quality of a product;

$т_П/т_С$ - price of offering product and demand in price of product;

$f_С; f_П$ - functions of price, respectively of demand and of the offer of product;

$f_{RZ_С}; f_{RZ_П}$ - functions of effectiveness of target function, respectively of demand and of the offer of product;

$f_{Q_С}; f_{Q_П}$ - functions of volume, respectively of demand and of the offer of product.

**Example of three-dimensional situational modeling of data of main indicators of the offer of a product at realization of strategy of improvement of its quality** [Fig. 6.4].

The idealized curves of change of functions of volume and price of demand and offer of product are presented in three-dimensional system of coordinates of graphic model [Fig.6.4], but at the same time, it is defined that effectiveness of target function of product is priority indicator, which is displayed on a vertical axis of coordinates. The graphic model [Fig. 6.4] illustrates changes of functions of all indicators on market, which are characteristic for the strategy of improvement of product. There are taking into account that data of quality of demand and quality of the offer lie on one vertical axis and can change in the certain range of values in process of transformation of data. The tendencies of change of volume and price of supply and demand are investigated concerning of optimum data of target function of a product. If at optimum value of quality of product, the price of offer considerably above of prices of the demand, the volume is below of demand, then the chosen strategy of improvement of quality of products is not justified, it is necessary to develop new strategy over offering products in other zone of market.

In the reviewed example, the functions of volume and of price of demand and of offering product are changing in one direction, and on rather big piece of curves they are close or correspond with each other. The volume and price of demand are mobile, flexible to quality of product, but in certain borders. The tendencies of change of these indicators are investigated in three-dimensional system of coordinates. Price demand is flexible, elastic to quality change only to a certain border when with improvement of quality of a product the prices grow, volumes both demand, and the offer grow too. In three-dimensional system of coordinates tendencies of change of these indicators. in three-dimensional system of coordinates are studied.

The critical point of effectiveness of target function of product sets a limit, having reached his, the price of demand becomes below of prices of offer, and the volume of demand is less, than the firm can and wants to sell. Further improvement of quality of a product is not effective for firm any more, as it is connected with big expenses and leads to considerable rise in price, which does not pay off by price of demand, because the demand to the further growth of quality of products becomes inelastic, and the volume of demand actually does not change or sharply falls, because of the increasing prices of offering product.

The graphic model illustrates the idealized situation, at which not only functions of the price of demand and offer, but also functions of volume of offering product and demand in it are crossed with each other in a point of optimum quality. Therefore, optimum data of volume and of price of offering product are defined in dependence from the planned optimum level of quality of the offer of a product. At the same time, the projection on vertical the axis of the optimum ratio of the price and volume allows to check fidelity of the forecast over quality of a product and the correctness of the chosen strategy. As a result, the optimum data of each indicator are defined, first, according to demand, and secondly, according of their optimum compatibility with each other.

Thus, procedures of the direct and reciprocal forecast over updating of variable data are performed by means of graphic multidimensional models. It increases the effectiveness and accuracy not only of strategic programs, but also situational decisions in process of correction of data of the offer of products according to demand.

In the course of multidimensional modeling it is necessary to consider that even at the same key indicator, but at other strategy there will be already absolutely other dependences and tendencies of change of functions of supply and demand. The example is given over modeling of tendencies of change of the indicators of the offer of a product, when the key indicator is volume of offer of product.

The volume of the offer is a main indicator at realization of many strategies. Among them the strategies of broad capture of the market or deep penetration into market are the most widespread, but in the course of their realization the sales volumes of products can be increased by different ways: or by priority reduction of prices of goods at preservation of quality at the good level, or by priority improvement of quality at preservation of reasonable prices.

**Example of three-dimensional situational modeling of data of main indicators of the offer of a product at realization of the strategy of broad penetration into the market** [Fig. 6.5].

The schedule illustrates a situation, when increase in sales volumes is reached due to reduction of prices at slight increase or an invariance of quality of the offer of products. Curves of supply and demand are idealized because reflect only one of possible options of a ratio and tendencies of consideration of supply and demand.

Main indicator is the offer volume, which is defined on a vertical axis of the schedule according to demand and the chosen strategy of broad penetration into the market. The volume of demand is not enough flexible (elastic) to increase of quality of products, but is very flexible (elastic) to the change in price of the offer. Schedules of supply and demand in qualitative parameter coincide on a big piece of curves. However, only that value of qualitative parameter is established, at which the optimum point of volume of sale of product is chosen, and function of the offer price is crossed with function of the price of demand.

The graphic model [Fig. 6.5] illustrates tendencies of growth of volumes of supply and demand at drop of prices of the offer. The prices of demand and the prices of offer change in one direction. In the reviewed example the reduction of prices is reached improvement of designs and manufacturing techniques of a product and increase in its effectiveness in exploitation, what is followed by decrease of cost of each product for consumer at improvement of its quality. Improvement of quality of a product coincided with reduction of price of it only to a certain limit; over achievement of limit the quality of a product ceased to change and remained invariable until reduction of price of a product did not begin to lead to decrease in its quality.

Thus, only that level of reduction of price of the offer is optimum, if quality of the offer is closest to quality of demand, and the volume of the offer is balanced with a volume of demand and is optimum. At the same time, there is also feedback, when over optimum combination of indicators of the price and quality of the offer it is checked the fidelity of the chosen strategy over volume of the offer of a product. If at realization of strategy of broad penetration on the market the optimum ratio of data of the price and quality is not reached, which would lead to growth of sales volumes of products, then strategy change is necessary.

The graphic multidimensional models allow not only to establish balances between data of demand and offer over separate indicators, but and to find the coordinated optimum plurality of data of various indicators of the offer of products providing the highest synergetic effect. The reviewed examples of transformation and multi-purpose optimization of variable data illustrate process of achievement of result in three-dimensional system of coordinates, when one from indicators of the offer of product is chosen as the main.

Examples of display of three-dimensional space are given. It is very important, because without three-dimensional space it is impossible to solve any modern problem of multiple optimization of variable data. Spatial modeling allows to solve also more complex problems and to find optimum values over plurality of variable data.

Use of interactive display with replaceable panels opens technical capabilities for realization of graphic multidimensional models in the course of situational updating of data in matrixes of multi-purpose optimization. By means of graphic modeling and machine processing of information will become possible to consider many options of decisions, without leaving the program of process of updating of data;

6.5.4 - to analyze impact of the changed data of effectiveness of target function, volume, and price of the offer of products in one cells of matrix on plurality of data of demand and offer in other cells of a matrix; to create in real-time options of multi-purpose optimization of cumulative offer of products of firm on the basis of «set theory», multi-purpose optimization, economic-mathematical and graphic multidimensional modeling and by means of interactive displays. It is important to consider not only influence of data of indicators of the offer on each other (for example, reduction of prices leads to increase of demand and volume of offer of product), but and influence of data of offer of one type of products on of data of offer of other type of products, also on parameters of demand in different products. For example, saturation of demand by products of better quality leads to reduction of prices and of volumes of demand other products, consequently, and to decreases of volumes of offering them. The release of novelties can be followed by reduction in production of earlier models of production as any firm has restrictions on resources. The options of multiple updating of the cumulative offer of firm have to be created on the basis of «set theory» and multidimensional modeling;

6.6.4 - to construct algorithms for situational transformation of data of target function, volume, price of the offer of each type of a product; to define optimum data of the offer of each type of a product, taking into account spatial and temporary parameters of its positioning in markets in the current period [Fig. 6.1].

6.7.4 - to estimate options of situational transformation of data of the offer of products in the markets by means of calculation of indicators of effectiveness them for the producer and consumers and to choose the optimal variant of effectiveness of target function, volume, price of the offer of products, which provides bigger effect, increase of consumer properties of products, also the best satisfaction of consumer demand in the current period; to change data in cages of a matrix by means of the interactive display;

**Example of an algorithm of cumulative correction of plurality of data of the offer of product [Fig.6.6].**

**The list of symbols to [Fig.6.6]:**

$RZ_{\Pi A}$ - effectiveness of target function of offering product;

$Q_{\Pi A}$ - volume of offering product;

$Ц_{пA}$ - price of offering product; «*A*» - product symbol;

$S_{кор1}$; $S_{кор2}$; $S_{кор3}$; $S_{кор4}$; $S_{кор5}$; $S_{кор6}$; $S_{кор7}$; $S_{кор8}$ - the strategies of the direction of correction of the main indicators of the offer of product respectively from 1 to 8 (are determined by change of plurality of indicators: of volume, of price, quality of product);

$В_{1.1}$,..., $В_{1.n}$ - options of situational, cumulative correction of data of quality, volume, price of the offer of product respectively from 1.1 to 1.*n* (similar symbols are used and for other options);

$K_{В\ 1.1}^{п.эф}$ - coefficient of consumer efficiency of correction of data of the main indicators of the offer of product, for example, at option 1.1;

$K_{В\ 1.1}^{х/рэф}$ - coefficient of efficiency for producer from correction of data of the main indicators of the offer of product, for example, at option 1.1;
↑(↓) - increase (decrease); ~*opt* - the approach to optimum data.

Similar symbols apply also to other options of adjustment.

The graphic model [Fig.6.6] shows the procedure of cumulative transformation of plurality of data of indicators of the offer of product according to demand. The various options of the directions of transformation data of quality and volume of offering product are considered at situations, respectively of increase and drop of prices on a product. Each variant of change of price needs to be united with variant, respectively of increase and decrease of qualitative parameters (of effectiveness of target function) of product and then with variants, respectively of increase and of decrease of volumes of its sales. It allows to define the directions of the transformation of data of offering product, and develop strategies. The different combinations of the change in price, quality and volume of the offer of a product allow to generate eight main strategy. Ranges of change of data of each indicator have to be established depending on the directions of its change and possible combinations with data of other indicators. The options of combination of data of different indicators of offering products can be generated in a large number at any strategy of the development. Therefore, it is necessary to carry out consecutive assessment of effect of producer and consumers from different options of transformation of data plurality of offering product and define the most optimal variant among them. If at assessment of variants the optimum between effect for the producer and consumers is not reached, that it is the beginning for assessment of other options. Comparison of options with each other is admissible.

6.8.4 - to generate the output data of effectiveness of target function, volume, price of the offer of products in the current period on the basis of situational transformation of data; to synthesize summary cells of a matrix by means of the interactive display.

**Devices, necessary for implementation of system**

All operations of system carry out by means of machine processing of data. In purposes of implementation of invention use the following devices:

IBM PC;
СУБД: : FoxPro for Windows;
OC: Window 8.1 and above;
WiFi the router (a router with the dynamic protocol BGP-4);
the computer read-out carrier CD-ROM$;
the systems supporting multidimensional models: Cache (InterSystems) - the post-relational object DBMS giving opportunities for development Web-decisions and client-server appendices without restrictions. **Caché** provides possibilities of scaling, a clustering, mirroring and management, the analysis of data in real time, it is characterized by fault tolerance and reliability;
interactive displays. **Interactive displays «SMART»** are recommended for use. Interactive devices «SMART» for business are connecting to PC are create to users of an opportunity: works of several people on one surface, works by finger (mouse), by marker (writing), and by palm (deleting) without the need of the choice of the tool in the control panel. For example, **the interactive Smart 8084i-G4 display with a key of activation of "SMART Meeting Pro"** are recommended for use. Thanks to the size in 84" (213,36 cm) over the diagonal and ultrahigh permission **of 3840x2160**(UltraHD) of «SMART Board» 8084i the new level of work with data, because its working surface (board) allows to move the image to the right, to the left, up, down, making entries on big documents. Function of reduction and increase in a working surface is the tool for work with drawings, schemes, schedules. The several interactive SMART devices can be connected to one personal computer. Therefore, in one and the same time, several working groups can work on the project together, but independently from each other;
«SMART GoWire» - it is an USB cable, combined with «flash-store», which intend for work with interactive SMART devices for business in the accelerated regime, without preliminary preparation. On «flash-store» drivers and the software are already installed «SMART Meeting Pro Personal Edition». Thanks to this decision anyone can be connected by means of cable «GoWire» with board, interactive panel or with «podium» of SMART, and can work with an electronic flipchart of SMART;
«SMART Meeting Pro 4.0» - new software, which allows to increase overall performance of the interactive display «SMART 8084i-G4»;
«SMART Meeting Pro PE (Personal Edition)» - software, which is delivered complete with interactive displays «SMART» on a cable «SMART GoWire», what allows users to prepare and process results of work out of the meeting room on their personal devices. The software of «SMART Meeting Pro PE (Personal Edition)» is available to the Microsoft Windows, and thanks to integration with software for remote collaboration of «SMART Bridgit» opens opportunities for communication without restrictions. «SMART Bridgit» is simple and convenient in installation, service and work. It is the software, which allows to hold sessions, to establish of the communication with a possibility of interaction with remote content, with removed audio-video in real time, thanks to which the borders are erased between departments, companies, cities, and even by countries.

**Increase of technical result in result of use of devices**

The devices recommended for use, including interactive displays «SMART» for business together with hardware decisions «SMART», will allow to increase effectiveness of system of management of plurality of variable data of consumer indicators of products, and also to carry out operations and to carry out stages of the declared process more quickly and effectively, and with saving of means. The offered devices «SMART» will raise the speed of data management, as well as will allow to receive more optimal solutions and high useful effect from products, than analogs and prototype are provide. Devices will allow to save expenses and time due to acceleration and simplification of search process of optimal solutions, transformations of data and of drawing up programs, and also carry out adjustment by data plurality in real time. These devices correspond to essence of invention, because they will allow to carry out necessary temporary dynamics and spatial orientation, to find agreed decisions over set of parameters, what will increase efficiency and effectiveness of process of management of data. The technical devices will allow to increase technical result, because increase of the speed and of effectiveness of process of transformation of data, as well as of the accuracy, reliability, of useful effect of documents of the situational-strategic program will provide growth of industrial applicability of invention.

**Free text of the list of the sequences**

The final scheme of a way is provided on the drawing (fig.7) and shows that the declared way consists of six stages which are characterized by the number and the sequence of stages; each stage includes the number of consecutive operations which logically follow one by one. The system of management of plurality of variable data of consumer indicators of product consists in implementation of digital model, which consists of consistently carried out 6 stages, their steps and operations. Each stage is dynamic system, in which the processes proceed. Therefore, each stage is described by the digital model presented [Fig. 1 - Fig.6]. The digital model of all process of management of data is reflected by the final model [Fig. 7], into which all stages, steps and operations are connected with each other in uniform dynamic system, into uniform process. The system of the sequences and interrelations between stages, steps and operations is installed by means of model, as each subsequent stage can be made only after end of the previous stage, in the same way as all steps of each stage and operations of each step.

**List of stages of system of the sequences [Fig.7]:**

1st stage -«The way of formation of databases (DB) for drawing up plans and programs over products»;

2st stage - «The way of formation of object-relational models for databases management in the process of drawing up plans on the products»;

3st stage - «The way of formation of dynamic rows of reference data of the plan on products, taking into account temporal and spatial parameters»;

4st stage - «The way of formation of the situational-strategic plan of products development of firm»;

5st stage - «The way of formation a plurality of the output data of the strategic program of offering products, taking into account temporary and spatial parameters on the basis of matrices of multi-purpose optimization»;

6st stage - «The way of situational transformation of data of consumer indicators of products, by using matrices of multi-purpose optimization, which function by means of the interactive display».

Implementation of the declared way does not require establishment of exact duration of stages, steps and operations, but it is important to establish the temporary sequence of their implementation. All stages of a way are carried out consistently, because each subsequent stage follows after previous. Each of stages of a way is characterized by different duration that is caused by different character and different complexity of tasks of each of stages. Besides, each of stages includes the steps which have the different temporary duration and the sequence of implementation too. The first stage includes six steps, which carry out parallel-consistently, because different databases can be formed in parallel each other. However, each step consists in formation of the database and includes six consecutive operations.

The second stage includes six steps, each of which characterizes a way of formation of an analog-digital model and of a databases management system. The first three operations of each of steps of the second stage can be carried out in parallel each other and only on the last operation dependence has to be established between them, it is important for creation of object-relational models. The parallel-serial nature of dependences between steps remains also at the third stage of a way, which includes six steps, on each of which five operations are consistently carried out. Separate operations for forecasting of various indicators of demand can be carried out in parallel each other, but steps of the third stage are carried out only consistently one by one. For example, only precisely knowing strategic zones of positioning of products in the market, it is possible to define data of demand in different types of products, or only knowing demand in commodity assortments, it is possible to determine of parameters of quality, volume, price of demand in different types of products. Only the consecutive nature of dependences between steps is observed with the fourth stage of a way, because formation of strategy of managing begins with the choice of the local markets and strategic zones of positioning of products in the markets. The general directions of strategic development of firm which are consistently concretized according to each concrete section of the plan logically follow one by one. The fourth stage includes six steps, each of which begins only after termination of the previous steps and consists in performance of six consecutive operations. The similar temporary sequence remains at the fifth and sixth stage of a way, because process begins with planning of different indicators of the offer of commodity assortments, further it is necessary to define temporary parameters of positioning of each product in various markets, and only further it is necessary to define target function, quality, volumes, prices of the offer of products in various markets. The fifth stage includes four steps, each of which consists in consecutive implementation of six operations. The sixth stage consists of four steps, each of which consists in consecutive performance of eight operations.

**List of steps of the 1st stage «The way of formation of databases (DB) for drawing up plans and programs over products» [Fig.7]:**

1.1-6.1 - «The way of formation of the database for the planning of a business environment of firm in the commodity markets»;
1.1-6.2 - «The way of formation of the database for planning of development strategies of firm»;
1.1-6.3 - «The way of formation of the database for planning indicators of the commodity nomenclature and commodity assortment»;
1.1-6.4 - «The way of formation of the database for planning of cumulative life cycle of product»;
1.1-6.5 - «The way of formation of the database for planning of parameters of target function and quality of product»;
1.1-6.6 - «The way of formation of the database for planning of the main indicators of the offer and effectiveness of product».

**List of operations of the 1st stage:**

**1.1 -** to collect data about indicators and categories for planning; **1.2** - to systematize and analyze collected data of constant character; **1.3** - to construct the scheme of classification of the database or group of databases;
**1.4** -to define the list of fields of the database or group of databases; **1.5** - to define keys for identifying data of the database or group of databases; **1.6** -to generate the analog-to-digital database or group of databases in the form of tables (table), in which assign for each text line of each text column the digital code.

**List of steps of the 2nd stage «The way of formation of object-relational models for databases management in the process of drawing up plans on the products» [Fig.7]:**

2.1-4.1 - «The way of formation of object-relational databases management system for planning of a business environment of the firm»;
2.1-4.2 - «The way of formation of object-relational databases management system for planning of long-term and current strategies of the offer of products of firm»;
2.1-4.3 - «The way of formation of object-relational databases management system for planning of indicators of commodity assortments of firm»;
2.1-4.4 - «The way of formation of object-relational databases management system for planning of temporary parameters of the offer of products of firm»;
2.1-4.5 - «The way of formation of object-relational databases management system for planning of quality indicators of products»;
2.1-4.6 - «The way of formation of object-relational databases management system for planning of indicators of the offer of products, taking into account the temporal and spatial parameters».

**List of operations of the 2nd stages:**

**2.1** - to determine formulas for calculating the main indicators of planning; **2.2** - to carry out the system analysis of interrelations between the data within a specific database, generated on the first stage; **2.3** - to define relationships between different databases, generated on the first stage; **2.4** - to generate object-relational analog-to-digital models for establishment of relationships between data of different databases of the situational-strategic system of planning.

**List of steps of the 3rd stage «The way of formation of dynamic rows of reference data of the plan on products, taking into account temporal and spatial parameters» [Fig.7]:**

3.1-5.1 - «The way of formation of dynamic rows of reference data of the plan about markets and business environment of firm»;
3.1-5.2 - «The way of formation of dynamic rows of reference data of the plan about development strategies and efficiency of firm»;
3.1-5.3 - «The way of formation of dynamic rows of reference data of the plan on indicators of the commodity nomenclature and commodity assortment»;
3.1-5.4 - «The way of formation of dynamic rows of reference data of temporary parameters of the plan on products»;
3.1-5.5 - «The way of formation of dynamic rows of reference data of the plan on parameters of target function, quality of products»;
3.1-5.6 - «The way of formation of dynamic rows of reference data of the plan on parameters of positioning products».

**List of operations of the 3rd stage:**

3.1 - to collect and analyze data about achieved data of development of markets, enterprises, products; 3.2 - to carry out the cluster analysis for choice and systematization over probability degree of a set of the predicted variable data about possible tendencies of development of the markets, business environment, competition, consumer demand of different markets during the planned long-term period; 3.3 - to carry out the graphic analysis of change of consumer indicators of products, the markets, the competition, consumer demand under the influence of conditions and various factors; 3.4 - to carry out the dynamic forecast of the most probable tendencies of change in prospect (on stages of life cycle of demand) and at space (on the local markets) of variable data of demand for different types of products on the base of tools of multidimensional modeling and economic-mathematical forecasting; 3.5 - to define the dynamic rows of a plurality of reference data of different indicators of demand in products in the planned strategic zones of each local market during certain periods of time.

**List of steps of the 4th stage «The way of formation of the situational-strategic plan of products development of firm» [Fig.7]:**

4.1-6.1 - «The way of formation of business environment and of the strategic areas of positioning products on markets in situational-strategic plan of development of the firm»;
4.1-6.2 - «The way of formation of product-markets strategies of situational-strategic plan of development of firm»;
4.1-6.3 - «The way of formation of strategies on assortment of firm»;
4.1-6.4 - «The way of formation of strategies on temporary parameters of offering products»;
4.1-6.5 - «The way of formation of strategies on parameters of target function, quality of products»;
4.1-6.6 - «The way of formation of strategies of positioning products in strategic areas of different markets».

**List of operations of the 4th stage:**

4.1 - to choose possible options of strategies of firm for realization of the purposes and tasks of the strategic development plan, and also estimate their potential profitability and prospects during the planned long-term period; 4.2 - to choose perspective strategies among all possible for the most probable development of the situation and consumer demand in different markets during the long-term period; 4.3 - to evaluate the predicted possibilities of potential of the resource base for realization of the selected strategies of development during the planned long-term period; 4.4 - to establish priority product-markets strategies and profiling development indicators; 4.5 - to determine the optimal long-term product-markets strategies of development in the planned strategic zones of firm in the markets; 4.6 - to generate a set of current product-markets strategies for different markets in accordance with perspective development strategies.

**List of steps of the 5th stage «The way of formation a plurality of the output data of the strategic program of offering products, taking into account temporary and spatial parameters on the basis of matrices of multi-purpose optimization» [Fig.7]:**

5.1-6.1 - «The way of formation of a data plurality of the strategic program over parameters of the commodity nomenclature and commodity assortments»;
5.1-6.2 - «The way of formation of data of the strategic program over temporal parameters of offering products»;
5.1-6.3 - «The way of formation of a data plurality of the strategic program over qualitative parameters of offering products»;
5.1-6.4 - «The way of formation of a synergistic plurality of data of the strategic program over parameters of quality, volume, price of offering products».

**List of operations of the 5th stage]:**

5.1 - to build matrices for multi-objective optimization; to reflect temporary parameters in vertical position of matrix, whereas spatial parameters (strategic zones of positioning of products of firm in the markets) and indicators of the offer of products in them - in horizontal position, also to divide each cage in half; to reflect data of indicators of demand in the top part of each cell of a matrix, whereas the planned data of indicators of offering products - at the bottom part; 5.2 - to place the predicted data of demand of different markets in the top half of each cell of a matrix, which were predicted on basis of «set theory» and of economic-mathematical forecasting for each type of product during of a long-term period; 5.3 - to generate possible variants of a data plurality of the offer of different types of products for different markets and temporary stages of a long-term period on the basis of predicted data of demand by means of «set theory», economic-mathematical forecasting, of graphic multidimensional modeling; 5.4 - to carry out a comparative assessment of different options by means of calculation of effectiveness of options, of their influence on indicators of efficiency of product for consumers and producer; to find among different variants the best options, which provide synergetic result and increase in competitiveness of products at the predicted situation of development of the markets and demand in the long term; 5.5 - to choose an optimal variant of the strategic range of data of indicators of the offer of products by means of creation of algorithms of the choice of optimal solutions; to generate the output data of the strategic program; 5.6 - to place in the bottom half of each cell of a matrix the strategic output data (the strategic range of the output data) of the offer of products in different markets (in strategic zones of positioning of products of firm) during of planned long-term period, to synthesize total cells of a matrix.

**List of steps of the 6th stage «The way of situational transformation of data of consumer indicators of products, by using matrices of multi-purpose optimization, which function by means of the interactive display» [Fig.7]:**

6.1-8.1 - «The way of situational transformation of breadth, depth and composition of commodity assortments»;
6.1-8.2 - «The way of situational transformation of a data plurality of temporal parameters of the offer of products»;
6.1-8.3 - «The way of situational transformation of a data plurality of target function, quality of the offer of products»;

6.1-8.4 - «The way of situational transformation of a data plurality of effectiveness of target function, volume, price of the offer of products».

**List of operations of the 6th stage:**

6.1 - to represent a matrix for multi-purpose optimization of data by means of the interactive display; 6.2 - to replace reference data of the predicted demand by the current data of demand in each type of a product in the top half of each cell of a matrix by means of the interactive display; 6.3 - to determine with the help of a visual image on the interactive display such cells in a matrix, in which the current actual data of demand do not correspond to the planned data of the offer, and to establish the direction of discrepancies with « plus» or «minus»; 6.4 - to develop variants over situational transformation of a data plurality of offer of products in real-time according data of demand of different markets in the current period with help of the interactive display and on the basis of «set theory», multi-purpose optimization, economic-mathematical and graphic multidimensional modeling; 6.5 - to analyze impact of the changed data of offering one type of products in one cells of a matrix on data of supply and demand of other types of products in the other cells of a matrix, to find in real-time the interrelated decisions, to create options of multi-purpose optimization of data of the cumulative offer of products of firm on the basis of «set theory», multi-purpose optimization, economic-mathematical and graphic multidimensional modeling; 6.6 - to construct algorithms for transformation of data and to find optimal solutions by means of interactive displays with removable panels; 6.7 -to estimate options of transformation of data of the offer of each type of a product by means of calculation of indicators of effectiveness them for the producer and consumers and to choose the optimal variant, which provides bigger effect, the best satisfaction of consumer demand, the increase of competitiveness of products; to change data in cages of a matrix with help of the interactive display; 6.8 - to generate the output data of indicators of offer of products in the current period on the basis of situational transformation of data; to synthesize summary cells of a matrix by means of the interactive display.

**Claims**

1. **[Item 1] «The way of management of a plurality of variable data of consumer indexes of products for their optimization, taking into account temporary and spatial parameters»** consists by analogy with a prototype not only in creation of analytical tools and in use of databases, of the cluster analysis, in creation of set of numerical key data, multidimensional matrixes for management of transformation, but also in creation of new special tools and modeling of process of management of data that is expressed in formation of databases management systems, object-relational models, dynamic rows of a set of key data of the plan, multidimensional models of a plurality of data, the block of strategies on products of the situational-strategic plan, strategic programs with the output data of the offer of products of firm during the long term, made on the basis of matrixes of multi-purpose optimization, also in creation of mechanisms of situational adjustment in the form of matrixes of multi-purpose optimization of data by means of use of the interactive display for situational updating of the output data of the situational-strategic program and obtaining a plurality of the output data of the offer of products during the current period, and also differs by essentially new set, contents and temporary sequence of performance of stages, steps and operations of the simulated process of management of a plurality of data, namely the way includes:

   **«First stage - «The way of formation of databases for drawing up plans and programs over products»** consists of parallel-serial realization of the following steps: consists of the following steps: **first step** - «The way of formation of the database for the planning of a business environment of firm in the commodity markets»; **second step** - «The way of formation of the database for planning of development strategies of firm»; **third step** - «The way of formation of the database for planning indicators of the commodity nomenclature and commodity assortment»; **fourth step** - «The way of formation of the database for planning of cumulative life cycle of product»; **fifth step** - «The way of formation of the database for planning of parameters of target function and quality of product»; **sixth step** - «The way of formation of the database for planning of the main indicators of the offer and effectiveness of product», each of which consists in performance of the following typical consecutive operations: **first operation** - to collect data about indicators and categories for planning; **second operation** - to systematize and analyze collected data of constant character; **third operation** - to construct the scheme of classification of the database or group of databases; **fourth operation** - to define the list of fields of the database or group of databases; **fifth operation** - to define keys for identifying data of the database or group of databases; **sixth operation** - to generate the analog-to-digital database or group of databases in the form of tables (table), in which assign for each text line of each text column the digital code;

**«Second stage - «The way of formation of object-relational models for databases management in the process of drawing up plans on the products»** consists of parallel-serial realization of the following steps: **first step** - «The way of formation of object-relational databases management system for planning of a business environment of the firm»; **second step** - «The way of formation of object-relational databases management system for planning of long-term and current strategies of the offer of products of firm»; **third step** - «The way of formation of object-relational databases management system for planning of indicators of commodity assortments of firm»; **fourth step** - «The way of formation of object-relational databases management system for planning of temporary parameters of the offer of products of firm»; **fifth step** - «The way of formation of object-relational databases management system for planning of quality indicators of products»; **sixth step** - «The way of formation of object-relational databases management system for planning of indicators of the offer of products, taking into account the temporal and spatial parameters», each of which consists in performance of the following typical consecutive operations: **first operation** - to determine formulas for calculating the main indicators of planning; **second operation** - to carry out the system analysis of interrelations between the data within a specific database, generated on the first stage; **third operation** - to define relationships between different databases, generated on the first stage; **fourth operation** - to generate object-relational analog-to-digital models for establishment of relationships between data of different databases of the situational-strategic system of planning;

**«Third stage - «The way of formation of dynamic rows of reference data of the plan on products, taking into account temporal and spatial parameters»** consists of parallel-serial realization of the following steps: **first step** -«The way of formation of dynamic rows of reference data of the plan about markets and business environment of firm»; **second step** - «The way of formation of dynamic rows of reference data of the plan about development strategies and efficiency of firm»; **third step** - «The way of formation of dynamic rows of reference data of the plan on indicators of the commodity nomenclature and commodity assortment»; **fourth step -** «The way of formation of dynamic rows of reference data of temporary parameters of the plan on products»; **fifth step** - «The way of formation of dynamic rows of reference data of the plan on parameters of target function, quality of products»; **sixth step** - «The way of formation of dynamic rows of reference data of the plan on parameters of positioning products», each of which consists in performance of the following typical consecutive operations: **first operation** - to collect and analyze data about achieved data of development of markets, enterprises, products; **second operation** - to carry out the cluster analysis for choice and systematization over probability degree of a set of the predicted variable data about possible tendencies of development of the markets, business environment, competition, consumer demand of different markets during the planned long-term period; **third operation** - to carry out the graphic analysis of change of consumer indicators of products, the markets, the competition, consumer demand under the influence of conditions and various factors; **fourth operation** - to carry out the dynamic forecast of the most probable tendencies of change in prospect (on stages of life cycle of demand) and at space (on the local markets) of variable data of demand for different types of products on the base of tools of multidimensional modeling and economic-mathematical forecasting; **fifth operation** - to define the dynamic rows of a plurality of reference data of different indicators of demand in products in the planned strategic zones of each local market during certain periods of time;

**«Fourth stage - «The way of formation of the situational-strategic plan of products development of firm»** consists of consecutive realization of the following steps: **first step** - «The way of formation of business environment and of the strategic areas of positioning products on markets in situational-strategic plan of development of the firm»; **second step** - «The way of formation of product-markets strategies of situational-strategic plan of development of firm»; **third step** - «The way of formation of strategies on assortment of firm»; **fourth step -** «The way of formation of strategies on temporary parameters of offering products»; **fifth step** - «The way of formation of strategies on parameters of target function, quality of products»; **sixth step** - «The way of formation of strategies of positioning products in strategic areas of different markets», each of which consists in performance of the following typical consecutive operations: **first operation** - to choose possible options of strategies of firm for realization of the purposes and tasks of the strategic development plan, and also estimate their potential profitability and prospects during the planned long-term period; **second operation** - to choose perspective strategies among all possible for the most probable development of the situation and consumer demand in different markets during the long-term period; **third operation** - to evaluate the predicted possibilities of potential of the resource base for realization of the selected strategies of development during the planned long-term period; **fourth operation** - to establish priority product-markets strategies and profiling development indicators; **fifth operation -** to determine the optimal long-term product-markets strategies of development in the planned strategic zones of firm in the markets; **sixth operation** - to generate a set of the current product-markets strategies for different markets in accordance with perspective development strategies;

**«Fifth stage - «The way of formation a plurality of the output data of the strategic program of offering products, taking into account temporary and spatial parameters on the basis of matrices of multi-pur-**

**pose optimization»** consists of consecutive realization of the following steps: first step - «The way of formation of a data plurality of the strategic program over parameters of the commodity nomenclature and commodity assortments»; **second step** - «The way of formation of data of the strategic program over temporal parameters of offering products»; **third step** - «The way of formation of a data plurality of the strategic program over qualitative parameters of offering products»; **fourth step** - «The way of formation of a synergistic plurality of data of the strategic program over parameters of quality, volume, price of offering products», each of which consists in performance of the following typical consecutive operations: **first operation** - to build matrices for multi-objective optimization; to reflect temporary parameters in vertical position of matrix, whereas spatial parameters (strategic zones of positioning of products of firm in the markets) and indicators of the offer of products in them - in horizontal position, also to divide each cage in half; to reflect data of indicators of demand in the top part of each cell of a matrix, whereas the planned data of indicators of offering products - at the bottom part; **second operation** - to place the predicted data of demand of different markets in the top half of each cell of a matrix, which were predicted on basis of «set theory» and of economic-mathematical forecasting for each type of product during of a long-term period; **third operation** - to generate possible variants of a data plurality of the offer of different types of products for different markets and temporary stages of a long-term period on the basis of predicted data of demand by means of «set theory», economic-mathematical forecasting, of graphic multidimensional modeling; **fourth operation** - to carry out a comparative assessment of different options by means of calculation of effectiveness of options, of their influence on indicators of efficiency of product for consumers and producer; to find among different variants the best options, which provide synergetic result and increase in competitiveness of products at the predicted situation of development of the markets and demand in the long term; **fifth operation** - to choose an optimal variant of the strategic range of data of indicators of the offer of products by means of creation of algorithms of the choice of optimal solutions; to generate the output data of the strategic program; **sixth operation** - to place in the bottom half of each cell of a matrix the strategic output data (the strategic range of the output data) of the offer of products in different markets (in strategic zones of positioning of products of firm) during of planned long-term period, to synthesize total cells of a matrix;

**«Sixth stage - «The way of situational transformation of data of consumer indicators of products, by using matrices of multi-purpose optimization, which function by means of the interactive display»** consists of consecutive realization of the following steps: **first step -** «The way of situational transformation of breadth, depth and composition of commodity assortments»; **second step -** «The way of situational transformation of a data plurality of temporal parameters of the offer of products»; **third step** - «The way of situational transformation of a data plurality of target function, quality of the offer of products»; **fourth step** - «The way of situational transformation of a data plurality of effectiveness of target function, volume, price of the offer of products», each of which consists in performance of the following typical consecutive operations: **first operation** - to represent a matrix for multi-purpose optimization of data by means of the interactive display; **second operation** - to replace reference data of the predicted demand by the current data of demand in each type of a product in the top half of each cell of a matrix by means of the interactive display; **third operation** - to determine with the help of a visual image on the interactive display such cells in a matrix, in which the current actual data of demand do not correspond to the planned data of the offer, and to establish the direction of discrepancies with « plus» or «minus»; **fourth operation** - to develop variants over situational transformation of a data plurality of offer of products in real-time according data of demand of different markets in the current period with help of the interactive display and on the basis of «set theory», multi-purpose optimization, economic-mathematical and graphic multidimensional modeling; **fifth operation** - to analyze impact of the changed data of offering one type of products in one cells of a matrix on data of supply and demand of other types of products in the other cells of a matrix, to find in real-time the interrelated decisions, to create options of multi-purpose optimization of data of the cumulative offer of products of firm on the basis of «set theory», multi-purpose optimization, economic-mathematical and graphic multidimensional modeling; **sixth operation** - to construct algorithms for transformation of data and to find optimal solutions by means of interactive displays with removable panels; **seventh operation** - to estimate options of transformation of data of the offer of each type of a product by means of calculation of indicators of effectiveness them for the producer and consumers and to choose the optimal variant, which provides bigger effect, the best satisfaction of consumer demand, the increase of competitiveness of products; to change data in cages of a matrix with help of the interactive display; **eighth operation** - to generate the output data of indicators of offer of products in the current period on the basis of situational transformation of data; to synthesize summary cells of a matrix by means of the interactive display.

2. **[Item 2] to item 1,** which characterizes the processes of the first step of the first stage, namely:

first step - **«The way of formation of the database for the planning of a business environment of firm in the commodity markets»** includes the following operations: **first operation** - to collect constant data about stages and indicators of planning of a business environment of firm in the commodity markets (about indicators of planning of consumer demand, about buyers, resellers, capacity of the market, intensity of the competition in the commodity markets between buyers and sellers); **second operation** - to carry out the system analysis, systematize data about stages and indicators of planning, about categories of the market and a business environment of firm in the commodity markets; **third operation** - to construct the scheme of classification for systematization of constant data about categories, stages and indicators of planning of a business environment of firm in the commodity markets; **fourth operation** - to define the list of fields of the database or group of databases: «Databases about stages and indicators of planning of firm and its business environment in the commodity markets»; **fifth operation** - to define keys for identifying data of the database or group of databases: «Databases about stages and indicators of planning of firm and its business environment in the commodity markets»; **sixth operation** - to generate the analog-to-digital database or group of databases in the form of tables, namely: «Database about stages and indicators of planning of firm and its business environment in the commodity markets», this group of databases includes: «Database about structure and maintenance of system of planning of the enterprise»; «Database about indicators of planning of a business environment of firm in the commodity markets».

3. **[Item 3] to item 1,** which characterizes the processes of the second step of the first stage, namely:

**second step - «The way of formation of the database for planning of development strategies of firm»** includes the following operations: **first operation** - to collect constant data about main content of marketing and process of business management, about strategies of long-term development and current strategies of firm; second **operation** - to carry out the system analysis, systematize data about the purposes, tasks, motivation, stages of implementation of long-term and current strategies of the producer; **third operation** - to construct the scheme of classification of the databases; **fourth operation** - to define the list of fields of the database or group of databases: «Strategies of planning of firm»; **fifth operation** - to define keys for identifying data of the database or group of databases about strategies of firm»; **sixth operation** - to generate the analog-to-digital database or group of databases in the form of tables, namely: «The strategies of planning of firm» includes: «Database about the main indicators of the strategic development plan of the firm».

4. **[Item 4] to item 1,** which characterizes the processes of the third step of the first stage, namely:

**third step - «The way of formation of the database for planning indicators of the commodity nomenclature and commodity assortment»** includes the following operations: **first operation** - to collect constant data about indicators of the assortment plan (a saturation, the width of the product range, width, depth, a harmony, elasticity of the commodity assortment), and also about structure of the commodity nomenclature and commodity assortment; **second operation** - to carry out the system analysis, systematize data for planning of the commodity nomenclature and commodity assortment; **third operation** - to construct the scheme of classification of database about structure and indicators of the commodity nomenclature and commodity assortment; **fourth operation** - to define the list of fields of the database for planning indicators of the commodity nomenclature and commodity assortment; **fifth operation** - to define keys for identifying data of the database for planning of indicators of the commodity nomenclature and commodity assortment; **sixth operation** - to generate the analog-to-digital database for planning of indicators of the commodity assortment, taking into account factor of time and strategic zones of positioning of the commodity assortment of firm in the market.

5. **[Item 5] to item 1,** which characterizes the processes of the fourth step of the first stage, namely:

**fourth step - «The way of formation of database for planning of cumulative life cycle of a product»** includes the following operations: **first operation** - to collect constant data about structure and contents of cumulative life cycle of a product; **second operation -** to carry out the system analysis, systematize data about stages of production, positioning and practical use of a product, and also about stages of its supply and demand in the market; **third operation** - to construct the scheme of classification of the database about structure of cumulative life cycle of a product; **fourth operation** - to define a list of fields of the database for planning of cumulative life cycle of different products; **fifth operation** - to define keys for identifying data of the database for planning of cumulative life cycle of different products; **sixth operation** - to generate the analog-to-digital database for planning of cumulative life cycle of a product in the form of tables.

6. **[Item 6] to item 1,** which characterizes the processes of the fifth step of the first stage, namely:

**fifth step - «The way of formation of database for planning of parameters of target function and quality of product»** includes the following operations: **first operation** - to collect constant data about the main services, quality indicators and functional purpose of the final product; **second operation** - to carry out the system analysis, systematize data about the main, auxiliary, serving functions of the products, about indicators of quality and set of their services; **third operation** - to construct the scheme of classification of the functional structure of a product, indicators of its quality and set of services, rendered to them, of aimed at realization of its target function; **fourth operation** - to define the list of fields of database for planning of parameters of target function and quality of product; **fifth operation** - to define keys for identifying data of database for planning the parameters of target function and quality of product; **sixth operation** - to generate the analog-to-digital database or group of databases for planning of target function and quality of a product in the form of tables, namely: «Database for planning of the main indicators of quality of products, taking into account a factor of time and SZM of firm»; «Database for planning of influence of demand on data of offer of the target function of a product».

**7. [Item 7] to item 1,** which characterizes the processes of the sixth step of the first stage, namely:

**sixth step - «The way of formation of the database for planning of the main indicators of the offer and effectiveness of products»** includes the following operations: **first operation** - to collect constant data about the main indicators of the offer of products in the market, about the indicators characterizing efficiency of products; **second operation** - to carry out the system analysis, systematize data for planning of the main indicators of supply and demand of products; **third operation** - to construct the scheme of classification for systematization of constant data about main indicators of positioning of products at stages of life cycle them of offer, and stages of life cycle of demand in product on markets; **fourth operation** - to define the list of fields of databases group: «Planning of indicators of offering products, taking into account temporary and spatial parameters»; **fifth operation** - to define keys for identifying data of database group: «Planning of indicators of offering products, taking into account temporary and spatial parameters»; **sixth operation** - to generate analog-to-digital databases «Planning of indicators of offering products, taking into account temporary and spatial parameters» in the form of tables, namely: «Database for planning of the main indicators of the commodity offer of firm»; «Database for definition of a role of functional divisions of firm in the course of planning of offering products»; «Database about indicators of efficiency of the products».

**8. [Item 8] to item 1,** which characterizes the processes of the first step of the second stage, namely:

**first step - «The way of formation of object-relational database management system for planning of a business environment of firm»** includes the following operations: **first operation -** to define formulas of calculation of the main indicators of planning of a business environment of firm; **second operation** - to carry out the complex analysis of interrelations between indicators of a business environment of firm, namely: between data of a line and columns in one database; **third operation** - to establish interrelations between indicator of a business environment of firm and product-markets strategies, various indicators of the plan, i.e. between lines and columns of the database for planning of a business environment of firm and lines and columns of other databases defining strategy and indicators of the plan over product; **fourth operation** - to generate an object-relational analog-to-digital model, which establishes relationships between indicators of a business environment of firm and by product-markets strategies.

**9. [Item 9] to item 1,** which characterizes the processes of the second step of the second stage, namely:

**second step - «The way of formation of object-relational database management system for planning of long-term and current strategies of the offer of products of firm»** includes the following operations: **first operation** - to define typical long-term strategies of growth and interrelation between them; **second operation** - to define current strategies over product and market and interrelation between them; **third operation** - to establish interrelations between long-term and current products-markets strategies; **fourth operation** - to generate an object-relational analog-to-digital model, which establishes relationships between long-term and current strategies of the firm, between indicators of the situational-strategic plan characterizing them.

**10. [Item 10] to item 1,** which characterizes the processes of the third step of the second stage, namely:

**third step - «The way of formation of object-relational database management system for planning of the assortment indicators of the firm»** includes the following operations: **first operation** - to define indicators for assessment of width, depth, harmony, elasticity of the commodity nomenclature and commodity assortment, also formulas for calculation of efficiency of their correction, taking into account temporary cycles of demand; second **operation** - to establish interrelations between lines and columns in the database for planning of the commodity nomenclature and commodity assortment; **third operation** - to establish interrelations between data of different databases for planning of the commodity nomenclature, assortment and data of the database for planning product-markets strategies of firm; **fourth operation** - to generate an object-relational analog-to-digital model, which establishes relationships between indicators of the commodity nomenclature, of commodity assortment and product-markets strategies, taking into account temporary and spatial parameters.

11. **[Item 11] to item 1,** which characterizes the processes of the fourth step of the second stage, namely:

**fourth step - «The way of formation of object-relational database management system for planning of the temporary parameters of offering products of the firm»** includes the following operations: **first operation** - to determine formulas of calculation of temporary stability of supply and demand, including temporary stability by volume, price, quality indicators of supply and demand of products. Indicators of log of temporary stability of supply and demand estimate over each of main indicator of positioning of product in the market; **second operation** - to establish interrelations between lines and columns in borders of the made database, namely: between stages of production, positioning and practical use of end products, and also between stages of life cycle of supply and demand of product; **third operation** - to establish interrelations between data of different databases, namely: between the database for planning of temporary parameters of supply and demand and the database for planning of product-markets strategies and the main indicators of offering products; **fourth operation** - to generate an object-relational analog-to-digital model of interrelations - of the relations between stages of life cycle of demand and offer, and also between the temporary parameters and product-markets strategies, by plan indicators corresponding to them.

12. **[Item 12] to item 1,** which characterizes the processes of the fifth step of the second stage, namely:

**fifth step - «The way of formation of object-relational database management system for planning of quality indicators of products»** includes the following operations: **first operation** - to define formulas for calculation of target function of products and its parameters, namely: of effectiveness of target function and cumulative expenses; **second operation** - to establish interrelations between lines and columns in borders of the made database, namely: are carry out the system analysis and define influence of parameters of quality on each other and on target function of product; **third operation -** to establish interrelations between data of different databases, namely: between the database for planning target function, quality of the product and the database for planning of product-markets strategies and stages of life cycle of offering products; **fourth operation** - to generate an object-relational analog-to-digital model of interrelations - of the relations between qualitative parameters of strategy, the target function of products and by needs in them, taking into account temporary and spatial parameters of demand.

13. **[Item 13] to item 1,** which characterizes the processes of the sixth step of the second stage, namely:

**sixth step - «The way of formation of object-relational database management system for planning of indicators of offering products, taking into account the temporal and spatial parameters»** includes the following operations: **first operation** - to define formulas for calculation of efficiency of products for producers, consumers, marketers, financiers, as well for the national economy in general; **second operation** - to establish interrelations between lines and columns in borders of the made database, namely: between the main planned indicators of the offer of products and indicators them of efficiency, taking into account temporary and spatial parameters; **third operation** - to establish interrelations between data of different databases, namely: between by database for planning of indicators of the offer, efficiency of products and by database for planning of product-markets strategies, temporary and spatial parameters of positioning of products; **fourth operation** - to generate an object-relational analog-to-digital model of interrelations - of the relations between indicators of efficiency of products and by product-markets strategies, by main indicators of offering products in the market, taking into account influence on them of temporary and spatial parameters.

14. **[Item 14] to item 1,** which characterizes the processes of the first step of the third stage, namely:

**first step - «The way of formation of dynamic rows of reference data of the plan about markets and business environment of firm»** includes the following operations: **first operation** - to collect and analyze actual data about markets capacity, segments of market, number and list of buyers, intensity of the competition, degree of satisfaction of consumer demand, about business environment of firm and share of capture of the markets by firm; **second operation** - to carry out the cluster analysis, for choice and systematization over probability degree of a set of the predicted variable data about possible tendencies of development of the markets, a business environment, the competition, consumer demand in different markets during the planned long-term period; **third operation** - to carry out the graphic analysis of change of data of a business environment of firm under the influence of conditions and of tendencies of development of the markets, the competition during the planned long-term period; **fourth operation** - to carry out dynamic forecast of the most probable tendencies of change in prospect (on stages of life cycle of demand) and at space (on local markets) of data about indicators of a business environment of firm, the competition, markets on the base of tools economic-mathematical forecasting; **fifth operation** - to define dynamic rows of reference data of the plan on predicted indicators of a business environment of firm, capacity and segmentation of the markets, intensity of the competition on them during certain periods of time.

15. **[Item 15] to item 1,** which characterizes the processes of the second step of the third stage, namely:

**second step - «The way of formation of dynamic rows of reference data of the plan about development strategies and efficiency of firm»** includes the following operations: **first operation** - to collect and analyze actual data about efficiency of firm and motivation of a producer (about level of capitalization, profits, profitability of firm, about volumes of production, capital investments); **second operation** - to carry out the cluster analysis of a plurality of the predicted variable data about change of financial opportunities, about profits, profitability of firm at different strategies of development of firm on different markets during certain period of time; **third operation** - to carry out the graphic analysis of the influence of conditions, various factors and a contribution of functional divisions of firm (the scientific research; the construction working; the technological and organizational preparation for production; the process of production) into realization of product-markets strategies of firm, taking into account temporary and spatial parameters; **fourth operation** - to define the main indicators for each product-market strategy and carry out the dynamic analysis of the most probable tendencies of change in prospect and at space (on local markets) of product-markets strategies of the firm, taking into account the change tendencies of opportunities of the resource base, the changing conditions of managing, a business environment of firm; **fifth operation** - to define dynamic rows of reference data of key indicators of demand in various type of products, which are positioned in planned strategic zones of different markets during certain period of time.

16. **[Item 16] to item 1,** which characterizes the processes of the third step of the third stage, namely:

**third step - «The way of formation of dynamic rows of reference data of the plan on indicators of the commodity nomenclature and commodity assortment»** includes the following operations: **first operation** - to analyze the actual data of indicators of the commodity nomenclature and commodity assortment; **second operation** - to carry out the cluster analysis (choice and systematization over probability degree) of a plurality of the predicted variable data about change of indicators of demand in breadth, depth, harmony, elasticity of the commodity assortment for the planned strategic zones of the different markets during certain period of time; **third operation** - to carry out the graphic analysis of the influence of various factors on data of breadth, depth, harmony, elasticity of commodity assortment in the planned strategic zones of the different markets during certain period of time; **fourth operation** - to carry out the dynamic forecast of tendencies of change of demand of various markets in assortment of firm at the most probable scenarios of development of demand during the planned time period; **fifth operation** - to define dynamic rows of reference data of demand in breadth, depth, harmony, elasticity of commodity assortment in the planned strategic zones of different markets during certain stage of life cycle.

17. **[Item 17] to item 1,** which characterizes the processes of the fourth step of the third stage, namely:

**fourth step - «The way of formation of dynamic rows of reference data of temporary parameters of the plan on products»** includes the following operations: **first operation** - to analyze actual data of duration of demand in different types of products, time of their production and offer in different markets; **second operation** - to carry out the cluster analysis (choice and systematization over probability degree) of a plurality of the predicted variable data about duration of demand in different types of products in the planned strategic zones of the different markets; **third operation** - to carry out the graphic analysis of change of duration of stages and life cycle of demand in different types of products under the influence of various factors in the planned strategic zones of the different markets; **fourth operation** - to carry out forecast during of planned period of tendencies of change of demand duration in different types of products at the most probable scenarios of development in the planned strategic zones of the different markets on the base of tools of multidimensional modeling; **fifth operation** - to define dynamic rows of reference data of stages duration of demand in different types of products in the planned strategic zones of different markets.

**18. [Item 18] to item 1,** which characterizes the processes of the fifth step of the third stage, namely:

**fifth step - «The way of formation of dynamic rows of reference data of the plan on parameters of target function, quality of products» includes the** following operations: **first operation -** to analyze actual data of indicators of quality and target function of different types of products; **second operation** - to carry out the cluster analysis for choice and systematization over probability degree of a set of the predicted variable data of demand in indicators of quality and the target function, of different types of products in the planned strategic zones of different markets during of certain period; **third operation** - to carry out the graphic analysis of tendencies of change of consumer demand in parameters of target function, quality of different types of products under the influence of various factors of different markets during certain period; **fourth operation** - to carry out forecast of tendencies of change of demand in parameters of target function, quality of different types of products at the most probable scenarios of development in the strategic zones of different markets during of planned period on base of tools of the economic-mathematical forecasting and multidimensional modeling; **fifth operation** - to define dynamic rows of reference data on stages of life cycle of demand in parameters of target function, quality of different types of products in the planned strategic zones of different markets.

**19. [Item 19] to item 1,** which characterizes the processes of the sixth step of the third stage, namely:

**sixth step - «The way of formation of dynamic rows of reference data of the plan on parameters of demand in products»** includes the following operations: **first operation** - to analyze actual data of effectiveness of target function, the price, volumes of the offer of different types of products in various markets and the reached data of profitability, efficiency of the products; **second operation** - to carry out the cluster analysis (choice and systematization over probability degree) of a plurality of the predicted variable data of volumes, of effectiveness of target function, the prices of demand in different types of products in the planned strategic zones of different markets during of certain period; **third operation** - to carry out the graphic analysis of change of consumer demand in parameters of effectiveness of target function, the price, volume of different types of products in various markets under the influence of various factors in the planned strategic zones of different markets during of certain period; **fourth operation** - to carry out forecast of tendencies of change of demand in parameters of effectiveness of target function, the price, volumes of different types of products at the most probable scenarios of development in the planned strategic zones of different markets during of certain period; **fifth operation** - to define dynamic rows of reference data on stages of life cycle of demand in parameters of effectiveness of target function, the price, volumes of different types of products in the planned strategic zones of different markets.

**20. [Item 20] to item 1,** which characterizes the processes of the first step of the fourth stage, namely:

**first step - «The way of formation of business environment and of the strategic areas of positioning products in the markets in the situational-strategic plan of development of firm»** includes the following operations: **first operation** - to evaluate potential profitability and prospects of various local markets for positioning of various type of products during the planned long-term period; **second operation** - to choose local markets, in which firm will position products during the long-term period; **third operation** - to investigate consumer segments of the chosen markets and a business environment of firm in these segments during the planned long-term period; **fourth operation** - to define a set of consumer segments, also share of expansion and depth of penetration into market segments during the planned long-term period; **fifth operation** - to define in the strategic development plan the optimum segments of market for realization of different types of products during the planned long-term period; **sixth operation** - to define market segments for positioning of different types of products in the current period, of but in borders of strategic zones, which are chosen for positioning of products in the markets during long term.

**21. [Item 21] to item 1,** which characterizes the processes of the second step of the fourth stage, namely:

**second step - «The way of formation of product-markets strategies of the situational-strategic plan of development of firm»** includes the following operations: **first operation** - to choose possible options of product-markets strategies according to the purposes and tasks of the strategic development plan, and also estimate their potential profitability and prospects in various markets during of long-term period; **second operation** - to choose the adequate, perspective strategies of development of firm among all possible for the most probable development of the situation and consumer demand in different markets during the long-term period; **third operation** - to evaluate the predicted possibilities of potential of the resource base for realization of the selected options of product-markets strategies during the long-term period; **fourth operation** - to establish priority among of different strategies of offering products and profiling development indicators of firm during the long-term period; **fifth operation** - to define optimum perspective product-markets strategies in various segments of the market during of long-term period; **sixth operation** - to generate a set of current strategies of offering products in various segments of the markets in accordance with perspective product-markets strategies.

**22. [Item 22] to item 1,** which characterizes the processes of the third step of the fourth stage, namely:

**third step - «The way of formation of strategies on assortment of firm»** includes the following operations: **first operation** - to choose possible options of strategies on the commodity assortment of firm according to the purposes and tasks of the strategic development plan, and also estimate their potential profitability and prospects in various segments of the markets during the long-term period; **second operation** - to choose the adequate, perspective strategies on commodity assortment among all possible for the most probable development of the situation and consumer demand in various segments of the markets during the long-term period; **third operation** - to evaluate the predicted possibilities of potential of the resource base for realization of the selected perspective strategies on the commodity assortment in various segments of the markets during the long-term period; **fourth operation** - to establish priority types of products in composition of the selected commodity assortment and for the define of indicators of a harmony, elasticity of commodity assortment for various segments of the markets during of long-term period; **fifth operation** - to define optimum perspective strategies of commodity assortments in different segments of the markets during the long-term period; **sixth operation** - to generate a set of current strategies of commodity assortments in different segments of the markets, according to perspective strategies on assortment.

**23. [Item 23] to item 1,** which characterizes the processes of the fourth step of the fourth stage, namely:

**fourth step - «The way of formation of strategies on temporary parameters of offering products»** includes the following operations: **first operation** - to choose possible options of the duration of the production of different types of products, according to the purposes and tasks of the strategic development plan, and also estimate their potential profitability and prospects in various segments of the markets during the planned long-term period; **second operation** - to choose perspective strategies of temporary parameters of production of different types of the products among all possible for the most probable development of the situation and consumer demand in various segments of the markets; **third operation** - to evaluate the predicted possibilities of potential of the resource base for realization of the selected temporary strategies of production of different types of the products during the planned long-term period; **fourth operation** - to establish priority stages of production of different types of products and priority stages of their positioning in the market during long-term period; **fifth operation** - to define optimum temporary strategies of production and positioning of different types of products in various segments of the markets during of long-term period; **sixth operation** - to generate a set of current temporary strategies of production and positioning of products in the markets, according to the temporary perspective strategies.

**24. [Item 24] to item 1,** which characterizes the processes of the fifth step of the fourth stage, namely:

**fifth step - «The way of formation of strategies on parameters of target function, quality of products»** includes the following operations: **first operation** - to choose possible options of strategies on target function, quality of products, according to the purposes and tasks of the strategic development plan, and also estimate their potential profitability and prospects in various segments of the markets during of planned long-term period; **second operation** - to choose the adequate, the perspective strategies on target function, quality of products among all possible for the most probable development of the situation and consumer demand in different segments of the markets during long-term period; **third operation** - to evaluate the predicted possibilities of potential of the resource base for realization of the selected strategies over quality, the target function of products during the long-term period; **fourth operation** - to establish priority indicators of quality, of target function of each type of product in different segments of the markets during long-term period; **fifth operation** - to define optimum perspective strategies on target function, quality of different types of products in various segments of the markets during the long-term period; **sixth operation** - to generate a set of current strategies on target function, quality of products in different segments of the markets, according to perspective strategies of development of firm.

**25. [Item 25] to item 1,** which characterizes the processes of the sixth step of the fourth stage, namely:

**sixth step - «The way of formation of strategies of positioning products in the strategic areas of different markets»** includes the following operations: **first operation** - to choose possible options of strategies of positioning of products, according to the purposes and tasks of the strategic development plan, and also estimate their potential profitability and prospects in various segments of the markets during of planned long-term period; **second operation** -to choose the adequate, perspective strategies of offering products in the markets among all possible for the most probable development of the situation and consumer demand in various segments of the markets during the long-term period; **third operation** - to evaluate the predicted possibilities of potential of the resource base for realization of the selected strategies of offering products in the markets during of the long-term period; **fourth operation** - to establish priorities of marketing policy of firm, priorities of positioning of products in various segments of the markets during of long-term period; **fifth operation** - to define optimum perspective strategies of positioning of different types of products in various segments of the markets during the long-term period; **sixth operation** - to generate a set of current strategies of positioning of various types of products in various segments of the markets, according to perspective strategies of positioning of products in the markets.

**26. [Item 26] to item 1,** which characterizes the processes of the first step of the fifth stage, namely:

**first step - «The way of formation of a data plurality of the strategic program over parameters of commodity nomenclature and assortments»** includes the following operations: **first operation** - to build matrices for multi-objective optimization; to reflect temporary parameters (stages of life cycle of supply and demand) in vertical position of a matrix, whereas spatial parameters (strategic zones of positioning of products of firm in the markets) and indicators of the offer of products in them, namely: data of breadth of nomenclature, a breadth, depth and composition of the commodity assortment - in horizontal position; also to divide each cage in half; to reflect data of demand in breadth, depth and composition of commodity assortments in the top part of each cell of a matrix, whereas the planned data of indicators of commodity assortments - at the bottom part; **second operation** - to place data of demand of different markets in parameters of commodity assortments, which were predicted on the basis of «set theory» and of economic-mathematical forecasting of indicators of commodity assortment during stages of a long-term period, in the top half of each cell of a matrix; **third operation** - to generate possible variants of a data plurality of offer of commodity assortments for different markets according to data of demand in different temporary stages of a long-term period, taking into account compatibility of different types of products in commodity assortment, interrelation between data their offering, as well as cumulative influence of commodity assortment on indicators of efficiency both for the producer and consumers; **fourth operation** - to carry out a comparative assessment of different options of strategic program of the offer of commodity assortments by means of calculation of a complex of indicators of commodity nomenclature and assortments for finding of the best balance with demand, also of the best harmony, of the elasticity of the commodity assortment, of optimum breadth of the commodity nomenclature and assortments, as well as depth of commodity assortments, of the optimum compatibility of different types of products and their modifications in composition of commodity assortment and to provide the maximum synergetic result and optimum costs; **fifth operation** - to choose the optimum variant of offer of each assortment, which provides the highest synergetic effect by means of creating algorithm of the consecutive choice; to generate the optimal integrated plurality of the output data of commodity nomenclature and assortments of the strategic program; **sixth operation** - to place in the bottom half of each cell of a matrix the strategic output data (the strategic range of the output data) of the offer of commodity nomenclature and assortments in different markets and stages of life cycle during the long-term period; to synthesize total cells of the matrix.

**27. [Item 27] to item 1,** which characterizes the processes of the second step of the fifth stage, namely:

**second step - «The way of formation of data of the strategic program over temporal parameters of offering products»** includes the following operations: **first operation** - to build matrices for multi-objective optimization, to reflect the markets and types of products in vertical position of a matrix, whereas the columns of time of the beginning and time of the termination of stages of life cycle of supply and demand of a product in each market - in horizontal position, also to divide each cage in half; to reflect data of temporal parameters of demand in the top part of each cell, whereas the planned data of temporal parameters of offering products - at the bottom part of a matrix; **second operation** - to place data of temporal parameters of demand of different markets in each type of products, which were predicted on the basis of economic-mathematical forecasting in the top half of each cell of a matrix; **third operation** - to generate possible variants of data range of temporal parameters of different stages of life cycle of offer of each type of product according to data of demand of different markets. For this purpose, it is necessary to use graphic models of balance of life cycles of supply and demand, to build models of multidimensional spatial image; **fourth operation** - to carry out a comparative assessment of options of potentially possible range of data of temporary parameters of different stages of life cycle of the offer of certain type of products by calculation of indicators of their stability, synchronization with the predicted temporary parameters of demand of the markets, compatibility with temporary parameters of stay in the same markets of other products from the commodity offer of firm for achievement of the best synergetic result and increase in competitiveness of products; **fifth operation** - to choose the optimal variant of strategic range of temporary parameters of different stages of life cycle of offer of different types of products on each local market by means of creation of an algorithm of consecutive choice; to generate the output data of temporary parameters of the strategic program of the offer of products; **sixth operation** - to place in the bottom half of each cell of the matrix the strategic the output data (the strategic range of the output data) of temporary parameters of stages of life cycle of the offer of products in strategic segments of the markets during of planned long-term period; to synthesize the summary cell of the matrix.

28. **[Item 28] to item 1,** which characterizes the processes of the third step of the fifth stage, namely:

**third step - «The way of formation of data plurality of the strategic program over qualitative parameters of offering products»** includes the following operations: **first operation** - to build matrix for multi-objective optimization, to reflect temporary parameters of stages of life cycle of supply and demand of each type of products in vertical position of a matrix, whereas spatial parameters (strategic zones of positioning of products of firm in the markets) and parameters of target function of products in them - in horizontal position; also to divide each cage in half; to reflect data of demand in parameters of target function of products in the top part of each cell of a matrix, whereas the planned data of parameters of the offer of target function of products - at the bottom part. The following parameters of target function are defined: effectiveness of target function of a product; cumulative consumer costs consisting of the price of acquisition of a product by the buyer and of the operational costs for its use, as well as take into account the parameters of esthetics, ergonomics and the guaranteed operation term of a product; **second operation** - to place data of demand of different markets, which were predicted on the basis of graphic and economic-mathematical forecasts relatively of parameters of target function, qualitative parameters of different types of products during stages of a long-term period in the top half of each cell of a matrix; **third operation** - to generate possible variants of a data plurality of quality parameters of offer of each type of product and to create possible variants of data range of target function of the offer of each type of a product for different markets and temporary stages of long-term period by means of calculation of coefficient of ponderability of contribution of quality parameters into target function of a product, into its effectiveness, cumulative consumer costs; to generate options on the basis of use of «set theory», economic-mathematical forecasting of graphic multidimensional modeling; **fourth operation** - to carry out a comparative assessment of different options of possible range of data of target function, of its parameters by means of calculation of indicators of target function of its parameters of effectiveness and cumulative costs and indicators of efficiency of product for consumers and producer, of national economy in general for finding the best options, which provide synergetic result and increase in competitiveness of products; **fifth operation** - to choose the optimal variant of strategic range of fluctuations of data of target function and its parameters for various types of products on various markets and temporary stages of their offer during the long-term period by means of creation of an algorithm of consecutive choice, to generate the output data of target function, qualitative parameters of the strategic program of the offer of products; **sixth operation** -to place in the bottom half of each cell of a matrix the strategic output data (the strategic range of the output data) of target function, qualitative parameters of the offer of each type of products in different markets and stages of life cycle during the long-term period; to synthesize total cells of a matrix.

29. **[Item 29] to item 1, which** characterizes the processes of the fourth step of the fifth stage, namely:

**fourth step - «The way of formation of a synergistic plurality of data of the strategic program over parameters of quality, volume, price of the offer of products»** includes the following operations: **first operation-**to form matrices for multi-objective optimization; to reflect temporary parameters of stages of life cycle of demand and offer for each type of a product in vertical position of a matrix, whereas the spatial parameters (strategic zones of positioning of products of firm in the markets) and indicators of the offer of products in them, namely: data of effectiveness of target function, volume, price - in horizontal position; also to divide each cage in half; to reflect data of parameters of demand in the top part of each cell of a matrix, whereas the planned data of effectiveness of target function, volume, price of the offer of products - at the bottom part; **second operation** - to place data of demand of different markets, which were predicted on the basis of graphic and economic-mathematical forecast of data of effectiveness of target function, volumes, prices of different types products during stages of a long-term period in the top half of each cell of a matrix; **third operation** - to generate possible variants of a data plurality of effectiveness of target function, volume, price of the offer of different types products according demand of different markets, conditions, scenarios of development, resource base opportunities of firm during the long-term period on the basis of use of «set theory», economic-mathematical planning of graphic multidimensional modeling, multi-purpose optimization; to construct models of multidimensional image of data; **fourth operation** - to carry out a comparative assessment of different options of a data plurality of effectiveness of target function, volume, price of offering products by means of calculations of their influence on indicators of efficiency of product for consumers and producer and for national economy in general, taking into account full life cycle of product on different markets; **fifth operation** - to choose the optimal variant of data plurality of offer of a product, which allows to reach the best balance with demand, of increase of efficiency of a product both for the producer, and for consumers by means of creation of algorithms of the choice of strategic range of data the main indicators of the offer of products; to generate a plurality of the output data of effectiveness of target function, volume, price of the strategic program of the offer of products; **sixth operation** - to place in the bottom half of each cell of a matrix the strategic output data (the strategic range of the output data) of effectiveness of target function, volume and price of the offer of each type of product on planned markets (in strategic zones of positioning of products of the firm) on stages of life cycle of the offer of products during the long-term period; to synthesize total cells of a matrix.

**30. [Item 30] to item 1,** which characterizes the processes of the first step of the sixth stage, namely:

**first step - «The way of situational transformation of breadth, depth and composition of the commodity assortments»** includes the following operations: **first operation** - to represent a matrix of optimization of assortments with the predicted data of demand with the planned data of the offer of commodity nomenclature and assortments in different markets and stages of life cycle on the interactive display; **second operation - to replace reference data** of the predicted demand by the current data of demand in breadth, depth and composition of different commodity assortments on different markets in the top half of each cell of a matrix by means of the interactive display; **third operation** - to determine with the help of a visual image on the interactive display such cells in a matrix, in which the current demand in breadth, depth and composition of the commodity assortment does not correspond to the planned data of offer of commodity assortments; as a result, to determine the direction of mismatches; **fourth operation - to develop** variants over situational transformation of a data plurality of breadth, depth and composition of the offer of commodity assortments in real-time according to data of demand of different markets in the current period with help of interactive display and on the basis of «set theory», multi-purpose optimization, economic-mathematical and graphic multidimensional modeling; **fifth operation** - to analyze impact of influence of the changed data of breadth, depth, and composition of the commodity assortment in one cells of a matrix on data of supply and demand of commodity assortment in other cells of a matrix; to create different options of optimization of data of breadth, depth, and composition of commodity assortments in the current period on the basis of «set theory», multi-purpose optimization, economic-mathematical and graphic multidimensional modeling and by means of interactive displays; **sixth operation** - to construct algorithms for consecutive transformation of the offered assortments by means of interactive display; to define the optimum offer over breadth of the commodity nomenclature, breadth, depth, structure of commodity assortments for different markets (in strategic zones of firm in the market) during the current period; **seventhly operation** - to estimate options of transformation of data of the offer of commodity nomenclature and assortments in the markets in the current period by means of calculation of indicators of effectiveness them for the producer and consumers and to choose the optimal variant, which provides bigger effect, the best satisfaction of consumer demand; to change data in cages of a matrix of assortments with help of the interactive display; **eighthly operation** - to generate the output data of breadth, depth, and compositions of commodity assortments of firm in the current period on the basis of situational transformation of data; to synthesize summary cells of a matrix by means of the interactive display.

**31. [Item 31] to item 1,** which characterizes the processes of the second step of the sixth stage, namely:

**second step - «The way of situational transformation of data plurality of temporal parameters of offering products»** includes the following operations: **first operation** - to represent a matrix of optimization of temporary parameters with the predicted data of demand and planned data of the offer of certain types of products in various markets during their life cycle on the interactive display; **second operation** - to replace reference data of the predicted demand by the current data of temporary cycles of demand of the markets in each type of a product in the top half of each cell of a matrix by means of the interactive display; **third operation** - to determine with the help of a visual image on the interactive display such cells in a matrix, in which the current demand in parameters of temporary cycles does not correspond to the planned temporal parameters of the offer of different types of products in certain market; as a result, to determine the direction of mismatches; **fourth operation** - to develop variants over synchronization of temporal parameters of the offer of different products in real-time according to duration of demand of different markets in the current period, namely achievement of synchronization over time of the beginning, duration of separate stages and completion of life cycle of the offer of products with help of interactive display and on the basis of multi-purpose optimization, graphic multidimensional modeling; **fifth operation** - to analyze impact of the changed data of temporal parameters of the offer of products in one cells of a matrix on data of temporary cycles of demand and offer in other cells of a matrix; to create in real-time options of optimization of data of temporal parameters of the offer of products on the basis of multi-purpose optimization, graphic multidimensional modeling and by means of interactive displays; **sixth operation** - to construct algorithms for consecutive transformation of temporal parameters of the offer of each type of a product by means of interactive displays; to define the optimum duration of stages of life cycle of offer of each type of a product positioned in a certain market in the current period; **seventhly operation** - to estimate options of transformation of temporal parameters by means of calculation of coefficients of synchronization with demand and to choose an optimal variant, which provides the best balance of life cycle of demand and the offer of products in different market in the current period, also the best satisfaction of consumer demand and achievement of effect; to change data in cages of matrix of temporal parameters by means of the interactive display; **eighthly operation** - to generate the output data of temporal parameters of the offer of products in the current period on the basis of situational transformation of data, to synthesize summary cells of a matrix by means of the interactive display.

32. **[Item 32] to item 1,** which characterizes the processes of the third step of the sixth stage, namely:

**third step - «The way of situational transformation of data plurality of the target function, of quality of offering products»** includes the following operations: **first operation** - to represent a matrix of multi-purpose optimization of target function, quality of a product with the predicted data of demand and with the planned data of qualitative parameters of offering product on different markets and stages of life cycle on the interactive display; **second operation** - to replace reference data of the predicted demand by the current data of demand in target function and quality of various types of products on the different markets in the top half of each cell of a matrix by means of the interactive display; **third operation** - to determine with the help of a visual image on the interactive display such cells in matrix, in which the current demand in parameters of target function and quality of products does not correspond to the planned data of target function, of quality of the offer of products; as a result, to determine the direction of mismatches with of the «plus» or «minus» respectively; **fourth operation** - to develop variants over situational transformation of target function, of qualitative parameters of the offer of products in real-time according to data of demand of different markets in the current period by means of interactive displays and on the basis of «set theory», multi-purpose optimization, economic-mathematical and graphic multidimensional modeling; **fifth operation** - to analyze impact of the changed data of target function and quality of offering products in the one cells of matrix on data of supply and demand of these indicators in the other cells of the matrix; to create in real-time different options of optimization of data of target function, of quality of the offer of products in the current period on the basis of «set theory», multi-purpose optimization, economic-mathematical and graphic multidimensional modeling and by means of interactive displays; **sixth operation** - to construct algorithms for situational transformation of data of qualitative parameters by means of interactive display; to define optimum data of target function, of various indicators of quality for each type of a product positioned in a certain market in the current period; **seventhly operation** - to estimate options of situational transformation of target function, quality of the offer of each type of product in different markets in the current period by means of calculation of indicators of effectiveness them for the producer and consumers and to choose the optimal variant, which provides bigger effect, increase of consumer properties of products, also the best satisfaction of consumer demand; to change data in cages of matrix of qualitative parameters with help of the interactive display; **eighthly operation** - to generate the output data of target function, of qualitative parameters of the offer of products in the current period on the basis of situational transformation of data, to synthesize summary cells of a matrix by means of the interactive display.

33. **[I[Item 33] to item 1,** which characterizes the processes of the fourth step of the sixth stage, namely:

**fourth step - «The way of the situational transformation of data plurality of effectiveness of the target function, volume, price of offering products»** includes the following operations: **first operation** - to represent a matrix of multi-purpose optimization after its updating over assortment, temporary and qualitative parameters of the current program of offering product for the subsequent situational interconnected transformation of the planned data of effectiveness of target function, volume, price of offering products according to data of the current demand on the interactive display; **second operation** - to replace reference data of the predicted demand by the current data of demand in effectiveness of target function, in volume and price of products in different markets in the top half of each cell of a matrix by means of the interactive display; **third operation** - to determine with the help of a visual image on the interactive display such cells in matrix, in which the current demand in effectiveness of target function, in volume and price of products does not correspond to the planned data of offering products; as a result, to determine the directions of mismatches with of the «plus» or «minus», respectively; **fourth operation** - to develop variants over situational interconnected transformation of a data plurality of effectiveness of target function, volumes and prices of the offer of each type of a product in real-time according to data of demand of different markets in the current period with help of interactive display and on the basis of «set theory», multi-purpose optimization, economic-mathematical and graphic multidimensional modeling; **fifth operation** - to analyze impact of the changed data of effectiveness of target function, volume, and price of the offer of products in one cells of matrix on plurality of data of demand and offer in other cells of a matrix; to create in real-time options of multi-purpose optimization of cumulative offer of products of firm on the basis of «set theory», multi-purpose optimization, economic-mathematical and graphic multidimensional modeling and by means of interactive displays; **sixth operation** - to construct algorithms for situational transformation of data of target function, volume, price of the offer of each type of a product; to define optimum data of the offer of each type of a product, taking into account spatial and temporary parameters of its positioning in markets in the current period; **seventhly operation** - to estimate options of situational transformation of data of the offer of products in the markets by means of calculation of indicators of effectiveness them for the producer and consumers and to choose the optimal variant of effectiveness of target function, volume, price of the offer of products, which provides bigger effect, increase of consumer properties of products, also the best satisfaction of consumer demand in the current period; to change data in cages of a matrix by means of the interactive display; **eighthly operation** - to generate the output data of effectiveness of target function, volume, price of the offer of products in the current period on the basis of situational transformation of data; to synthesize summary cells of a matrix by means of the interactive display.

[Fig.1]

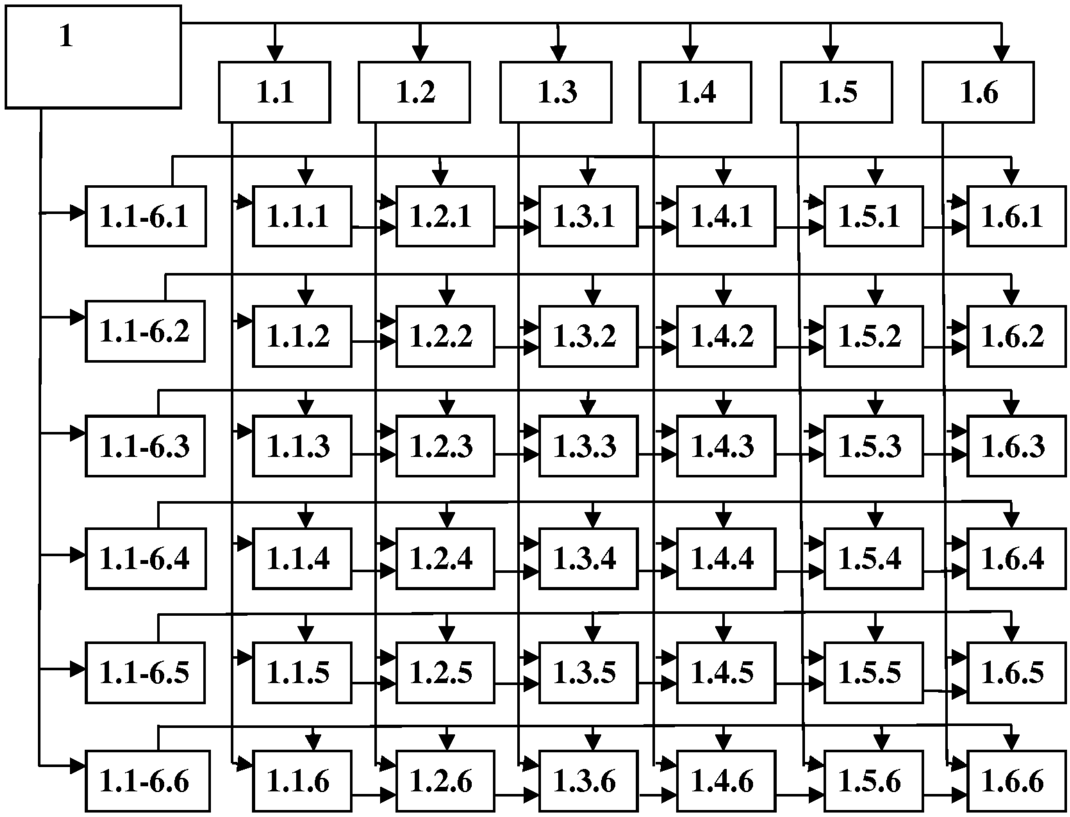
1
1.1
1.2
1.3
1.4
1.5
1.6
1.1-6.1
1.1.1
1.2.1
1.3.1
1.4.1
1.5.1
1.6.1
1.1-6.2
1.1.2
1.2.2
1.3.2
1.4.2
1.5.2
1.6.2
1.1-6.3
1.1.3
1.2.3
1.3.3
1.4.3
1.5.3
1.6.3
1.1-6.4
1.1.4
1.2.4
1.3.4
1.4.4
1.5.4
1.6.4
1.1-6.5
1.1.5
1.2.5
1.3.5
1.4.5
1.5.5
1.6.5
1.1-6.6
1.1.6
1.2.6
1.3.6
1.4.6
1.5.6
1.6.6

[Fig.2]

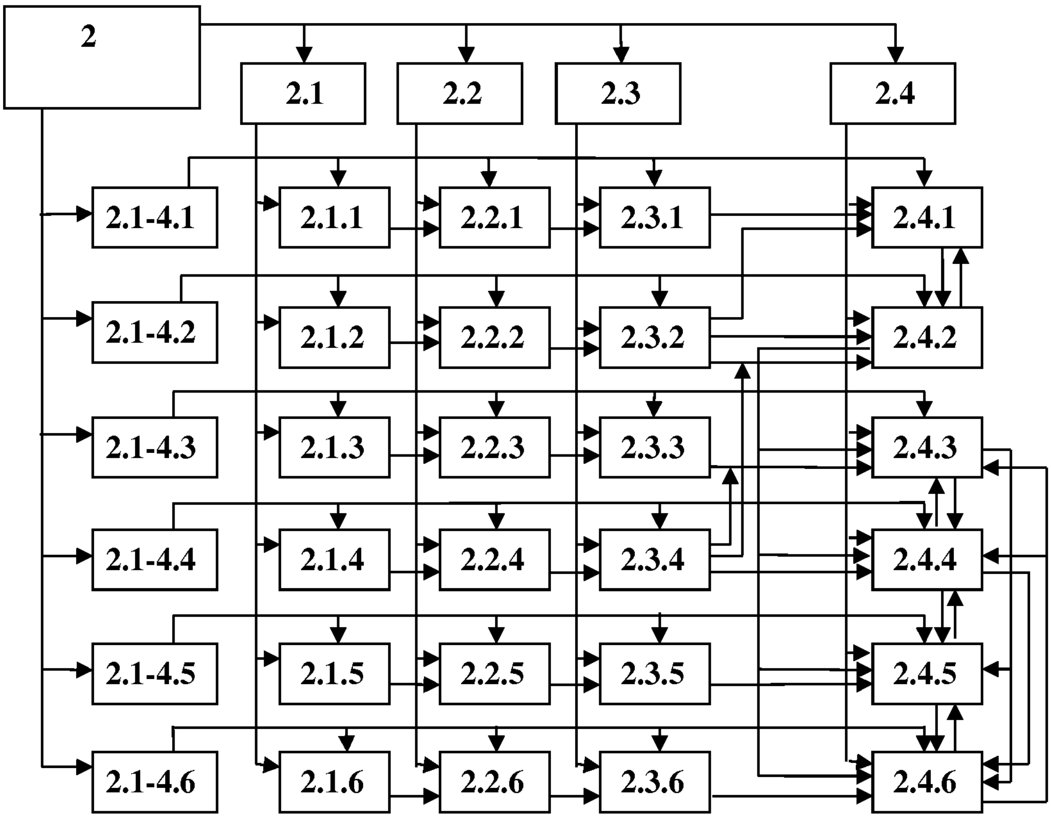
2
2.1
2.2
2.3
2.4
2.1-4.1
2.1.1
2.2.1
2.3.1
2.4.1
2.1-4.2
2.1.2
2.2.2
2.3.2
2.4.2
2.1-4.3
2.1.3
2.2.3
2.3.3
2.4.3
2.1-4.4
2.1.4
2.2.4
2.3.4
2.4.4
2.1-4.5
2.1.5
2.2.5
2.3.5
2.4.5
2.1-4.6
2.1.6
2.2.6
2.3.6
2.4.6

[Fig.2.1]

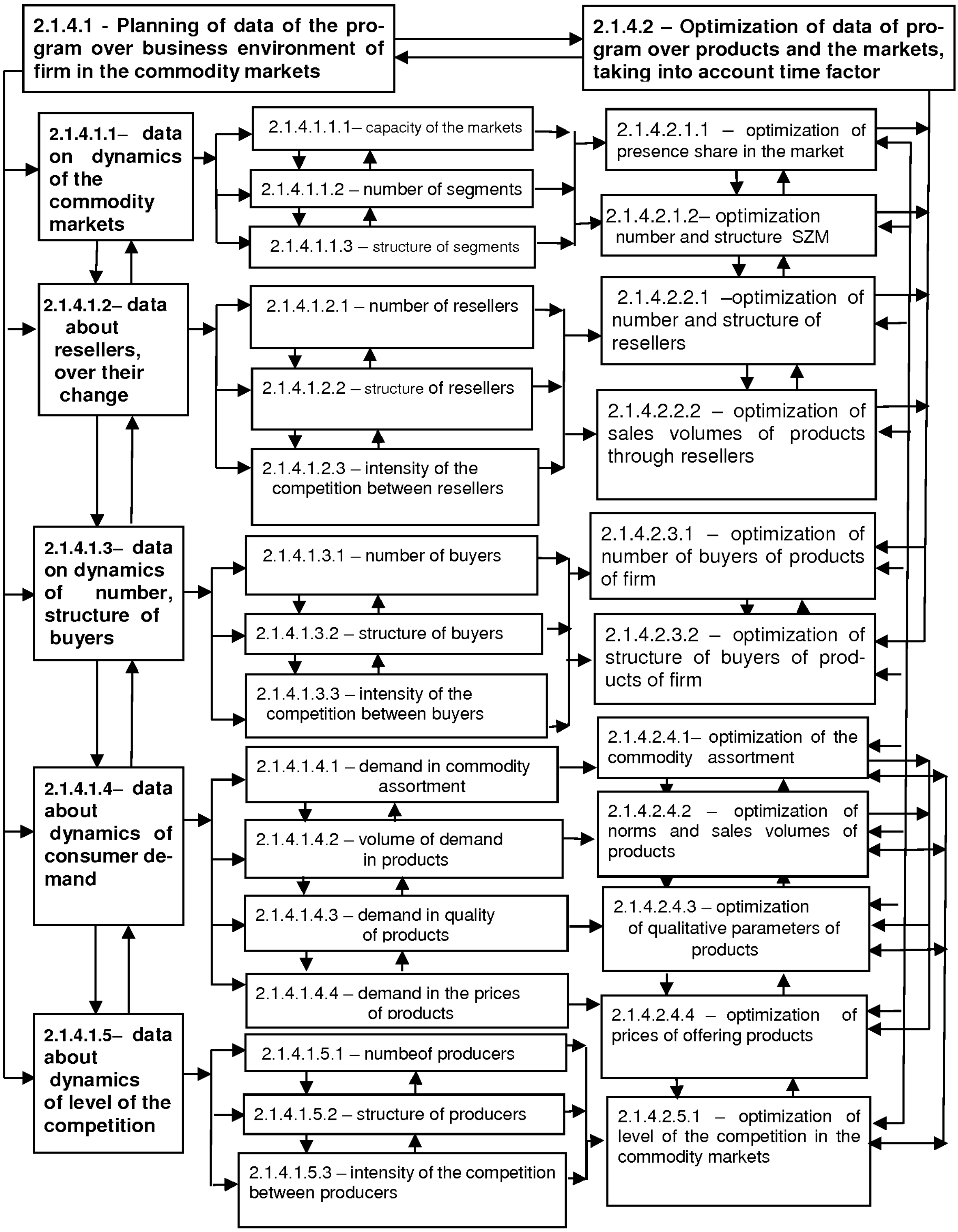
2.1.4.1 - Planning of data of the program over business environment of firm in the commodity markets
2.1.4.2 – Optimization of data of program over products and the markets, taking into account time factor
2.1.4.1.1– data on dynamics of the commodity markets
2.1.4.1.1.1– capacity of the markets
2.1.4.1.1.2 – number of segments
2.1.4.1.1.3 – structure of segments
2.1.4.2.1.1 – optimization of presence share in the market
2.1.4.2.1.2– optimization number and structure SZM
2.1.4.1.2– data about resellers, over their change
2.1.4.1.2.1 – number of resellers
2.1.4.1.2.2 – structure of resellers
2.1.4.1.2.3 – intensity of the competition between resellers
2.1.4.2.2.1 –optimization of number and structure of resellers
2.1.4.2.2.2 – optimization of sales volumes of products through resellers
2.1.4.1.3– data on dynamics of number, structure of buyers
2.1.4.1.3.1 – number of buyers
2.1.4.1.3.2 – structure of buyers
2.1.4.1.3.3 – intensity of the competition between buyers
2.1.4.2.3.1 – optimization of number of buyers of products of firm
2.1.4.2.3.2 – optimization of structure of buyers of products of firm
2.1.4.1.4– data about dynamics of consumer demand
2.1.4.1.4.1 – demand in commodity assortment
2.1.4.1.4.2 – volume of demand in products
2.1.4.1.4.3 – demand in quality of products
2.1.4.1.4.4 – demand in the prices of products
2.1.4.2.4.1– optimization of the commodity assortment
2.1.4.2.4.2 – optimization of norms and sales volumes of products
2.1.4.2.4.3 – optimization of qualitative parameters of products
2.1.4.2.4.4 – optimization of prices of offering products
2.1.4.1.5– data about dynamics of level of the competition
2.1.4.1.5.1 – numbeof producers
2.1.4.1.5.2 – structure of producers
2.1.4.1.5.3 – intensity of the competition between producers
2.1.4.2.5.1 – optimization of level of the competition in the commodity markets

[Fig.2.2]

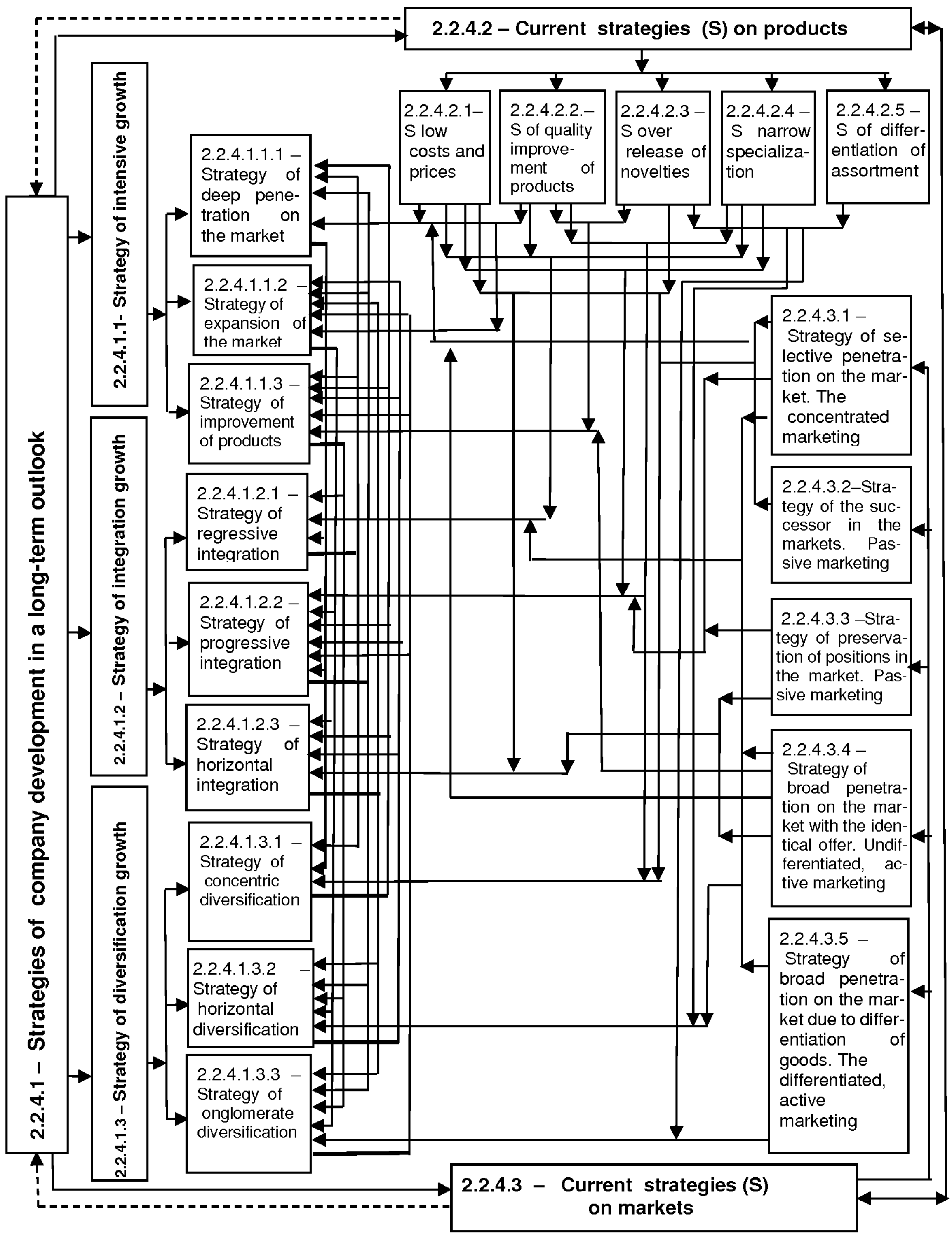
2.2.4.2 – Current strategies (S) on products
2.2.4.2.1– S low costs and prices
2.2.4.2.2.– S of quality improvement of products
2.2.4.2.3 – S over release of novelties
2.2.4.2.4 – S narrow specialization
2.2.4.2.5 – S of differentiation of assortment
2.2.4.1 – Strategies of company development in a long-term outlook
2.2.4.1.1- Strategy of intensive growth
2.2.4.1.2 – Strategy of integration growth
2.2.4.1.3 – Strategy of diversification growth
2.2.4.1.1.1 – Strategy of deep penetration on the market
2.2.4.1.1.2 – Strategy of expansion of the market
2.2.4.1.1.3 – Strategy of improvement of products
2.2.4.1.2.1 – Strategy of regressive integration
2.2.4.1.2.2 – Strategy of progressive integration
2.2.4.1.2.3 – Strategy of horizontal integration
2.2.4.1.3.1 – Strategy of concentric diversification
2.2.4.1.3.2 – Strategy of horizontal diversification
2.2.4.1.3.3 – Strategy of onglomerate diversification
2.2.4.3.1 – Strategy of selective penetration on the market. The concentrated marketing
2.2.4.3.2–Strategy of the successor in the markets. Passive marketing
2.2.4.3.3 –Strategy of preservation of positions in the market. Passive marketing
2.2.4.3.4 – Strategy of broad penetration on the market with the identical offer. Undifferentiated, active marketing
2.2.4.3.5 – Strategy of broad penetration on the market due to differentiation of goods. The differentiated, active marketing
2.2.4.3 – Current strategies (S) on markets

**[Fig.2.3]**

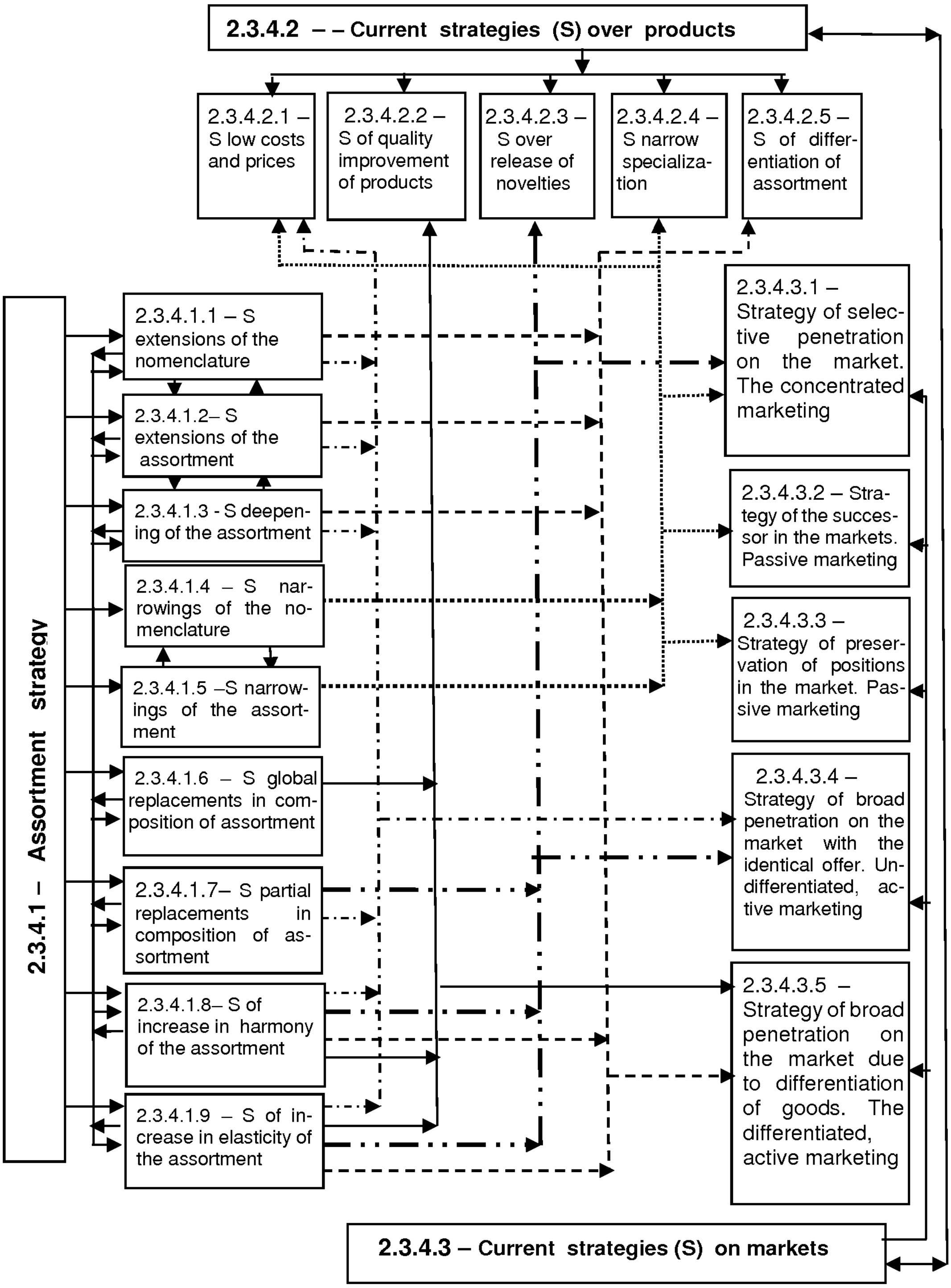
2.3.4.2 – – Current strategies (S) over products
2.3.4.2.1 – S low costs and prices
2.3.4.2.2 – S of quality improvement of products
2.3.4.2.3 – S over release of novelties
2.3.4.2.4 – S narrow specialization
2.3.4.2.5 – S of differentiation of assortment
2.3.4.1 – Assortment strategy
2.3.4.1.1 – S extensions of the nomenclature
2.3.4.1.2– S extensions of the assortment
2.3.4.1.3 - S deepening of the assortment
2.3.4.1.4 – S narrowings of the nomenclature
2.3.4.1.5 –S narrowings of the assortment
2.3.4.1.6 – S global replacements in composition of assortment
2.3.4.1.7– S partial replacements in composition of assortment
2.3.4.1.8– S of increase in harmony of the assortment
2.3.4.1.9 – S of increase in elasticity of the assortment
2.3.4.3.1 – Strategy of selective penetration on the market. The concentrated marketing
2.3.4.3.2 – Strategy of the successor in the markets. Passive marketing
2.3.4.3.3 – Strategy of preservation of positions in the market. Passive marketing
2.3.4.3.4 – Strategy of broad penetration on the market with the identical offer. Undifferentiated, active marketing
2.3.4.3.5 – Strategy of broad penetration on the market due to differentiation of goods. The differentiated, active marketing
2.3.4.3 – Current strategies (S) on markets

[Fig.2.4]

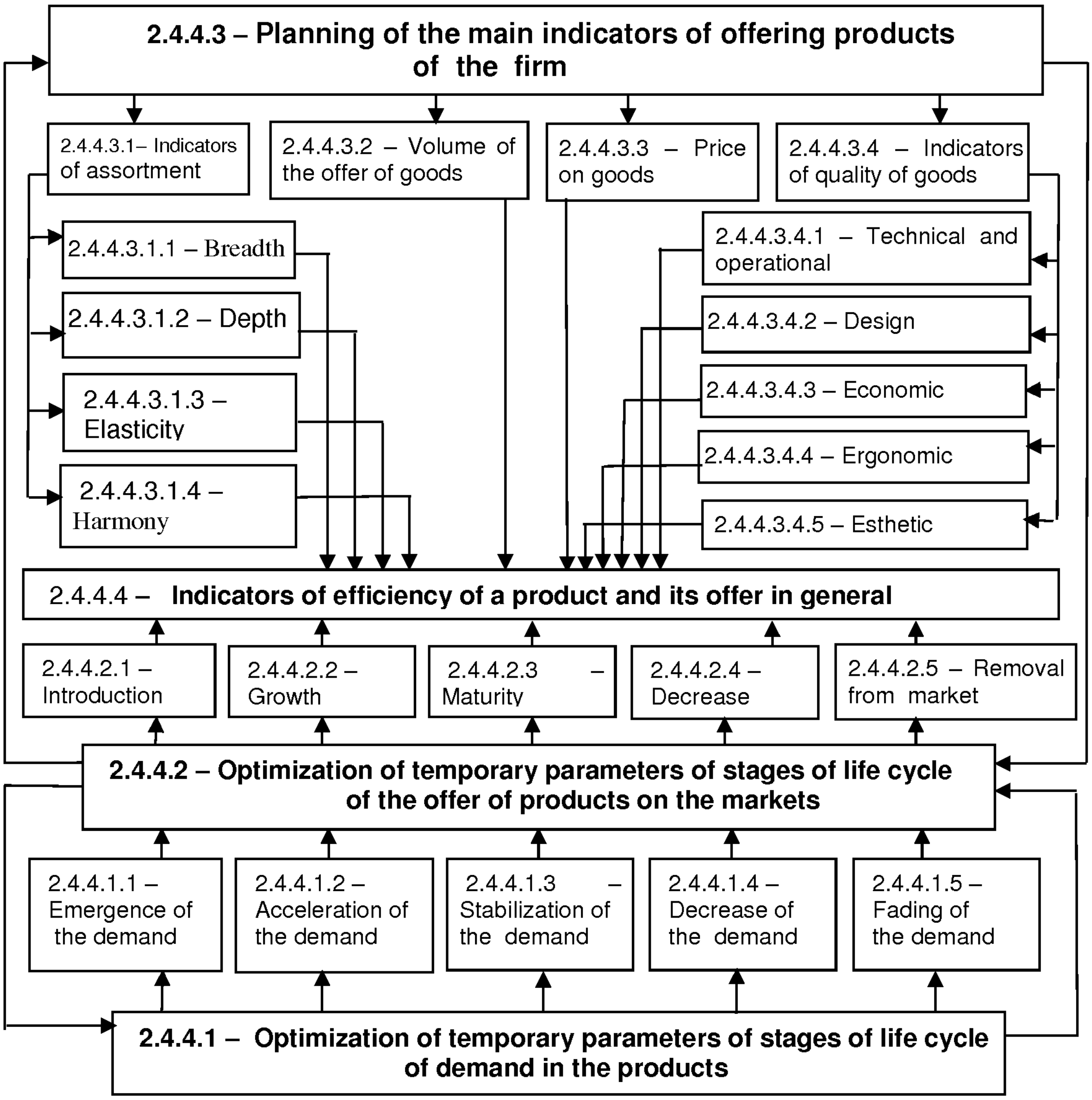
2.4.4.3 – Planning of the main indicators of offering products of the firm
2.4.4.3.1– Indicators of assortment
2.4.4.3.2 – Volume of the offer of goods
2.4.4.3.3 – Price on goods
2.4.4.3.4 – Indicators of quality of goods
2.4.4.3.1.1 – Breadth
2.4.4.3.1.2 – Depth
2.4.4.3.1.3 – Elasticity
2.4.4.3.1.4 – Harmony
2.4.4.3.4.1 – Technical and operational
2.4.4.3.4.2 – Design
2.4.4.3.4.3 – Economic
2.4.4.3.4.4 – Ergonomic
2.4.4.3.4.5 – Esthetic
2.4.4.4 – Indicators of efficiency of a product and its offer in general
2.4.4.2.1 – Introduction
2.4.4.2.2 – Growth
2.4.4.2.3 – Maturity
2.4.4.2.4 – Decrease
2.4.4.2.5 – Removal from market
2.4.4.2 – Optimization of temporary parameters of stages of life cycle of the offer of products on the markets
2.4.4.1.1 – Emergence of the demand
2.4.4.1.2 – Acceleration of the demand
2.4.4.1.3 – Stabilization of the demand
2.4.4.1.4 – Decrease of the demand
2.4.4.1.5 – Fading of the demand
2.4.4.1 – Optimization of temporary parameters of stages of life cycle of demand in the products

# [Fig.2.5]

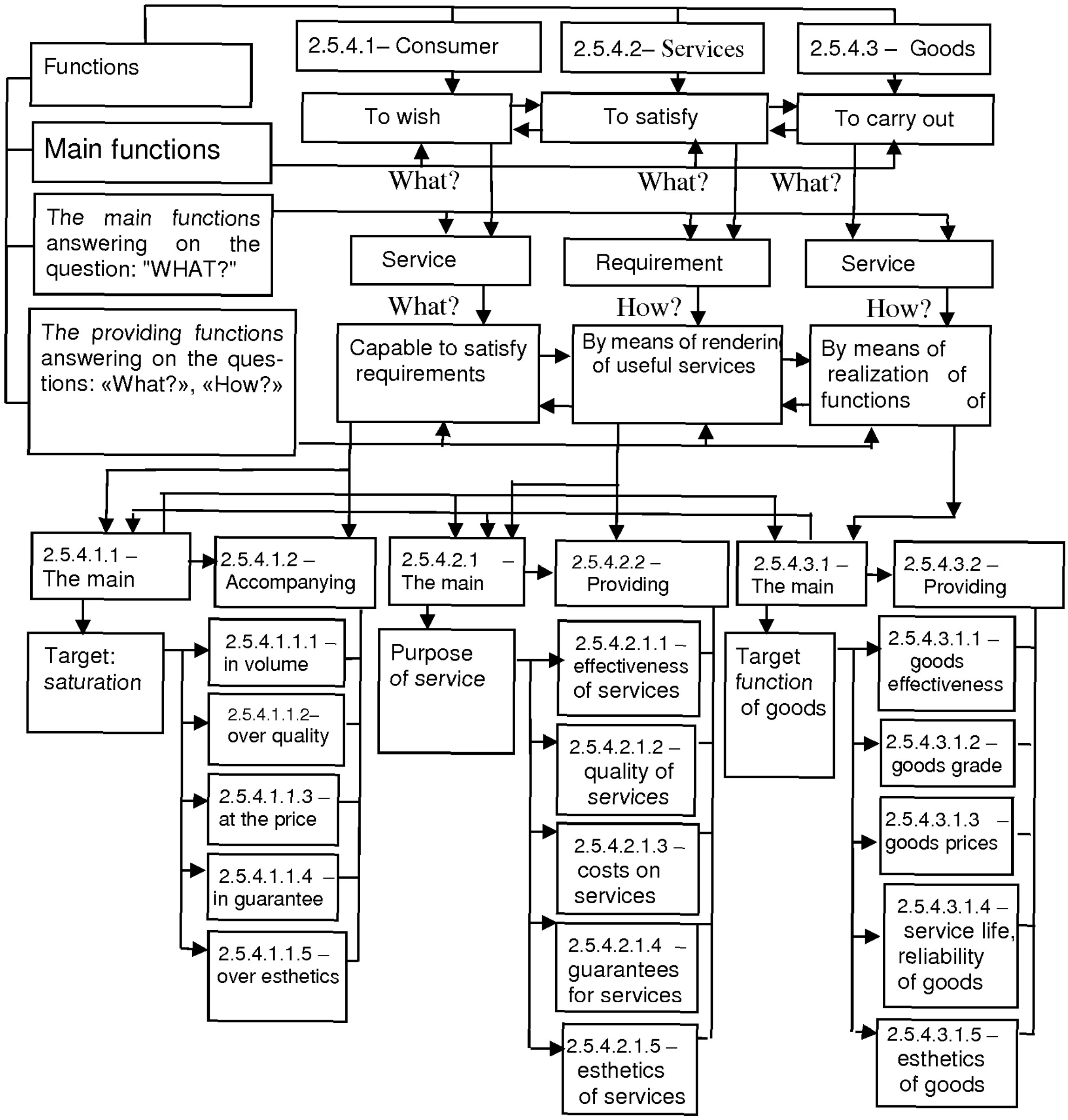
Functions
Main functions
The main functions answering on the question: "WHAT?"
The providing functions answering on the questions: «What?», «How?»
2.5.4.1– Consumer
2.5.4.2– Services
2.5.4.3 – Goods
To wish
To satisfy
To carry out
What?
What?
What?
Service
Requirement
Service
What?
How?
How?
Capable to satisfy requirements
By means of renderin of useful services
By means of realization of functions of
2.5.4.1.1 – The main
2.5.4.1.2 – Accompanying
2.5.4.2.1 – The main
2.5.4.2.2 – Providing
2.5.4.3.1 – The main
2.5.4.3.2 – Providing
Target: saturation
2.5.4.1.1.1 – in volume
2.5.4.1.1.2– over quality
2.5.4.1.1.3 – at the price
2.5.4.1.1.4 – in guarantee
2.5.4.1.1.5 – over esthetics
Purpose of service
2.5.4.2.1.1 – effectiveness of services
2.5.4.2.1.2 – quality of services
2.5.4.2.1.3 – costs on services
2.5.4.2.1.4 – guarantees for services
2.5.4.2.1.5 – esthetics of services
Target function of goods
2.5.4.3.1.1 – goods effectiveness
2.5.4.3.1.2 – goods grade
2.5.4.3.1.3 – goods prices
2.5.4.3.1.4 – service life, reliability of goods
2.5.4.3.1.5 – esthetics of goods

[Fig.2.6]

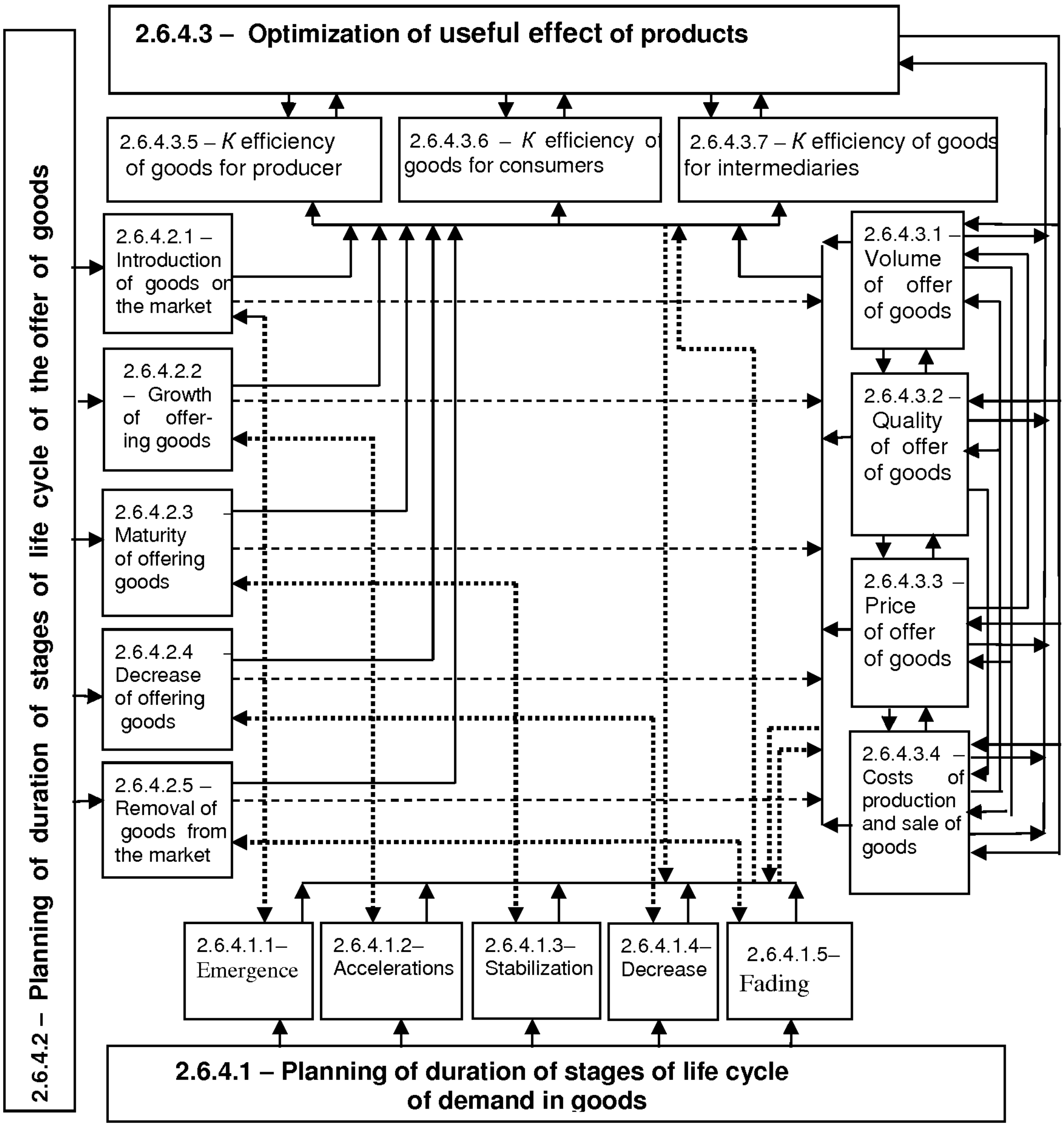
2.6.4.3 – Optimization of useful effect of products
2.6.4.3.5 – K efficiency of goods for producer
2.6.4.3.6 – K efficiency of goods for consumers
2.6.4.3.7 – K efficiency of goods for intermediaries
2.6.4.2.1 – Introduction of goods on the market
2.6.4.2.2 – Growth of offering goods
2.6.4.2.3 – Maturity of offering goods
2.6.4.2.4 – Decrease of offering goods
2.6.4.2.5 – Removal of goods from the market
2.6.4.3.1 – Volume of offer of goods
2.6.4.3.2 – Quality of offer of goods
2.6.4.3.3 – Price of offer of goods
2.6.4.3.4 – Costs of production and sale of goods
2.6.4.1.1– Emergence
2.6.4.1.2– Accelerations
2.6.4.1.3– Stabilization
2.6.4.1.4– Decrease
2.6.4.1.5– Fading
2.6.4.1 – Planning of duration of stages of life cycle of demand in goods
2.6.4.2 – Planning of duration of stages of life cycle of the offer of goods

[Fig.3]

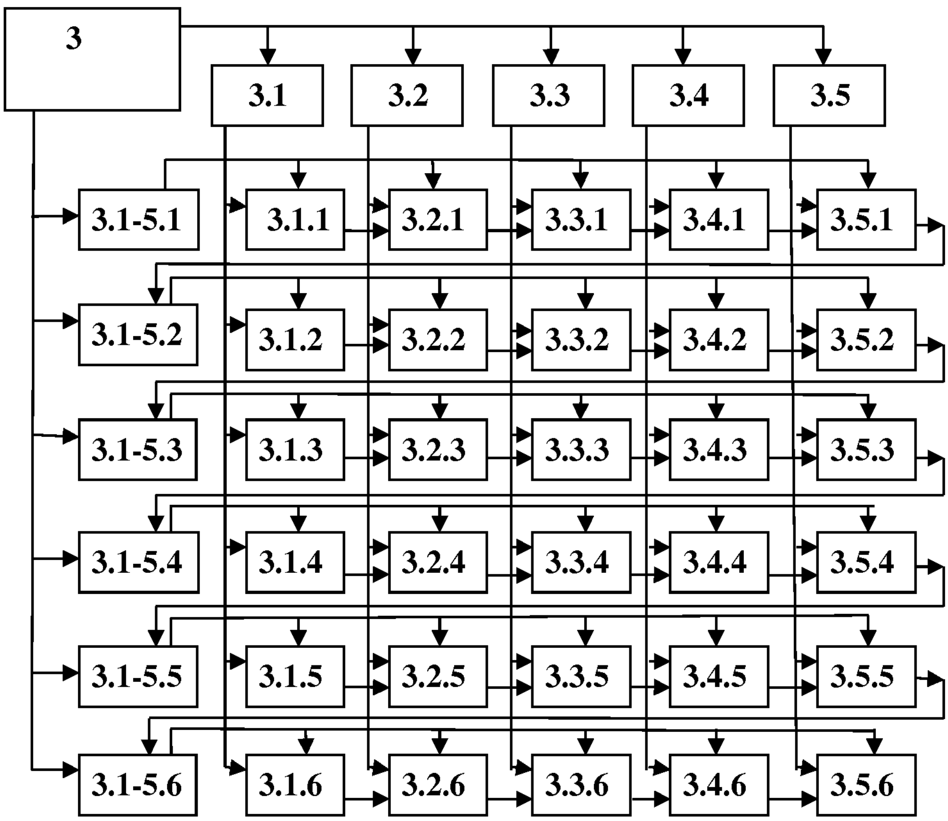
3
3.1
3.2
3.3
3.4
3.5
3.1-5.1
3.1.1
3.2.1
3.3.1
3.4.1
3.5.1
3.1-5.2
3.1.2
3.2.2
3.3.2
3.4.2
3.5.2
3.1-5.3
3.1.3
3.2.3
3.3.3
3.4.3
3.5.3
3.1-5.4
3.1.4
3.2.4
3.3.4
3.4.4
3.5.4
3.1-5.5
3.1.5
3.2.5
3.3.5
3.4.5
3.5.5
3.1-5.6
3.1.6
3.2.6
3.3.6
3.4.6
3.5.6

[Fig.4]

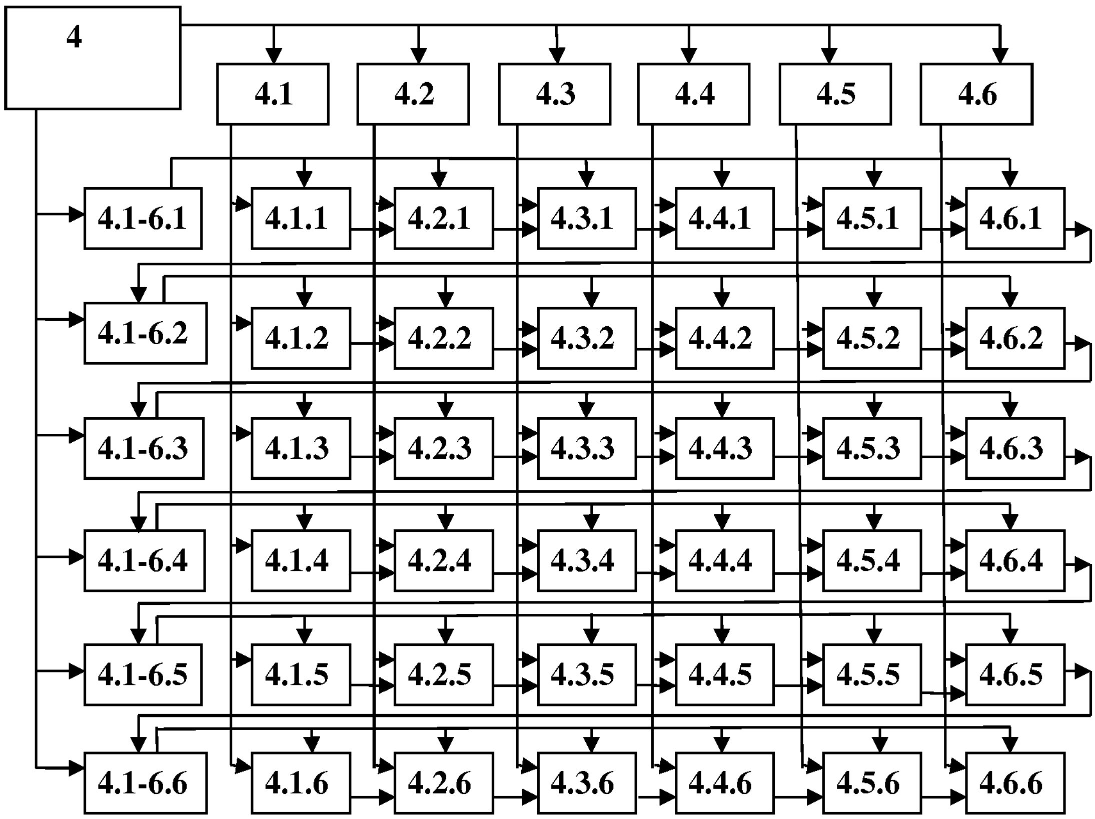
4
4.1
4.2
4.3
4.4
4.5
4.6
4.1-6.1
4.1.1
4.2.1
4.3.1
4.4.1
4.5.1
4.6.1
4.1-6.2
4.1.2
4.2.2
4.3.2
4.4.2
4.5.2
4.6.2
4.1-6.3
4.1.3
4.2.3
4.3.3
4.4.3
4.5.3
4.6.3
4.1-6.4
4.1.4
4.2.4
4.3.4
4.4.4
4.5.4
4.6.4
4.1-6.5
4.1.5
4.2.5
4.3.5
4.4.5
4.5.5
4.6.5
4.1-6.6
4.1.6
4.2.6
4.3.6
4.4.6
4.5.6
4.6.6

[Fig.5]

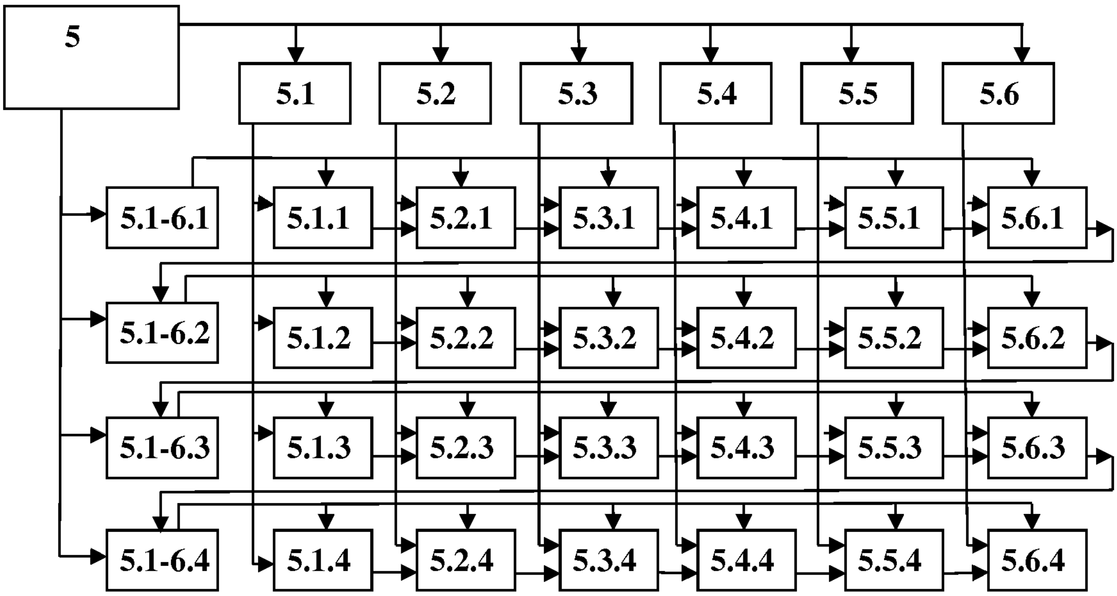
5
5.1
5.2
5.3
5.4
5.5
5.6
5.1-6.1
5.1.1
5.2.1
5.3.1
5.4.1
5.5.1
5.6.1
5.1-6.2
5.1.2
5.2.2
5.3.2
5.4.2
5.5.2
5.6.2
5.1-6.3
5.1.3
5.2.3
5.3.3
5.4.3
5.5.3
5.6.3
5.1-6.4
5.1.4
5.2.4
5.3.4
5.4.4
5.5.4
5.6.4

**[Fig.5.1]**

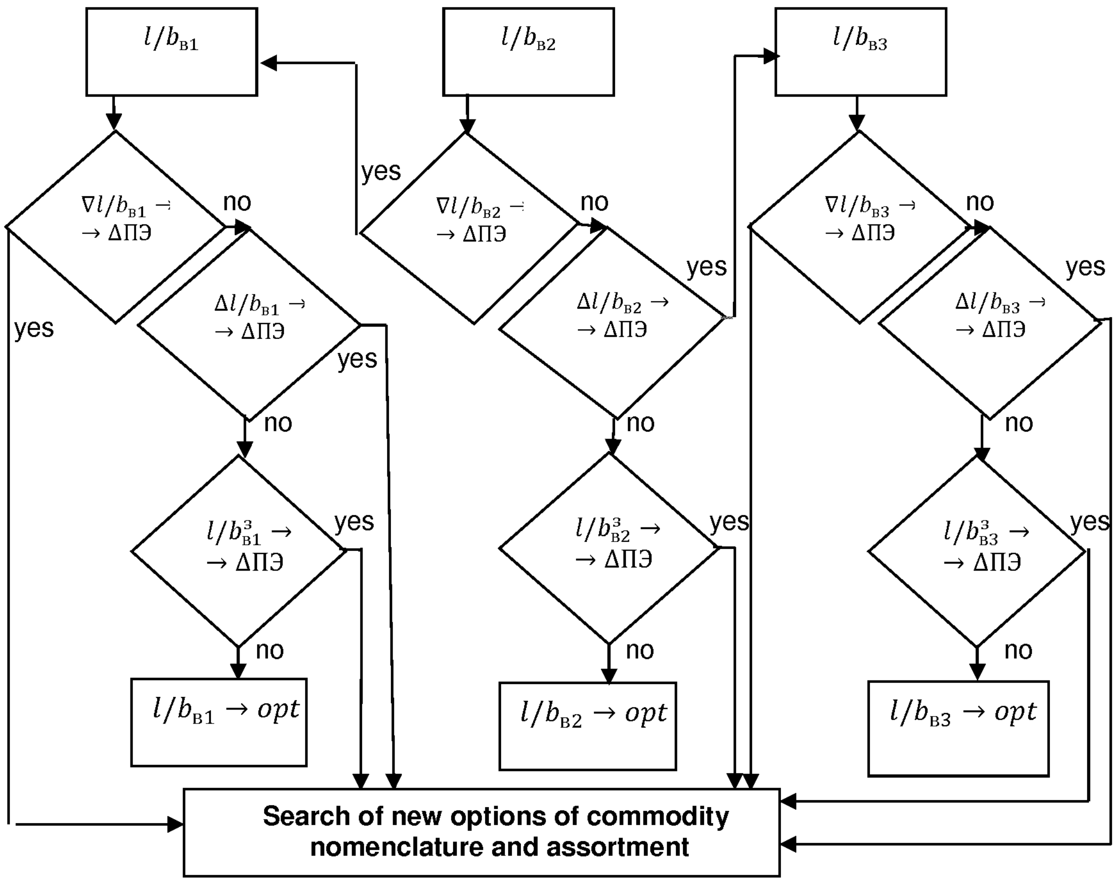
$l/b_{в1}$
$l/b_{в2}$
$l/b_{в3}$
$\nabla l/b_{в1} \rightarrow$ $\rightarrow \Delta ПЭ$
$\nabla l/b_{в2} \rightarrow$ $\rightarrow \Delta ПЭ$
$\nabla l/b_{в3} \rightarrow$ $\rightarrow \Delta ПЭ$
$\Delta l/b_{в1} \rightarrow$ $\rightarrow \Delta ПЭ$
$\Delta l/b_{в2} \rightarrow$ $\rightarrow \Delta ПЭ$
$\Delta l/b_{в3} \rightarrow$ $\rightarrow \Delta ПЭ$
$l/b^{з}_{в1} \rightarrow$ $\rightarrow \Delta ПЭ$
$l/b^{з}_{в2} \rightarrow$ $\rightarrow \Delta ПЭ$
$l/b^{з}_{в3} \rightarrow$ $\rightarrow \Delta ПЭ$
$l/b_{в1} \rightarrow opt$
$l/b_{в2} \rightarrow opt$
$l/b_{в3} \rightarrow opt$
yes
no
Search of new options of commodity nomenclature and assortment

[Fig.5.2]

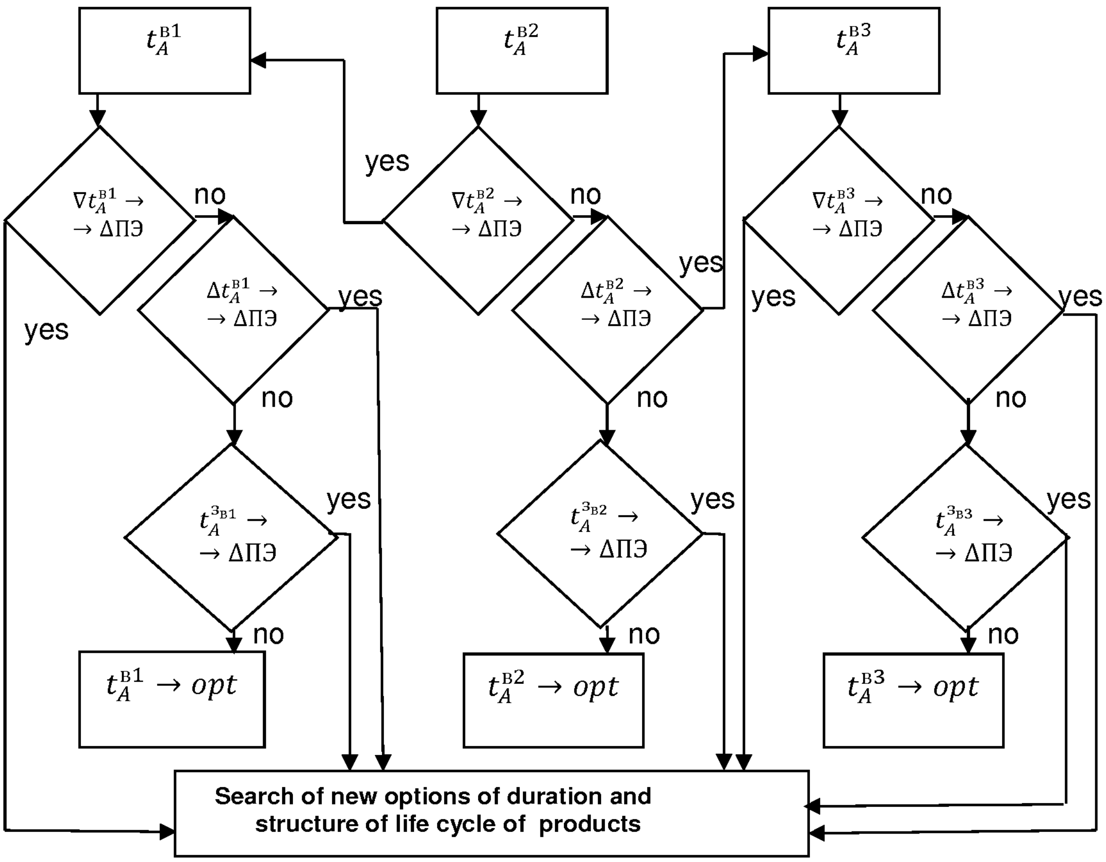
$t_A^{В1}$
$t_A^{В2}$
$t_A^{В3}$
$\nabla t_A^{В1} \rightarrow$ $\rightarrow \Delta ПЭ$
$\nabla t_A^{В2} \rightarrow$ $\rightarrow \Delta ПЭ$
$\nabla t_A^{В3} \rightarrow$ $\rightarrow \Delta ПЭ$
$\Delta t_A^{В1} \rightarrow$ $\rightarrow \Delta ПЭ$
$\Delta t_A^{В2} \rightarrow$ $\rightarrow \Delta ПЭ$
$\Delta t_A^{В3} \rightarrow$ $\rightarrow \Delta ПЭ$
$t_A^{ЗВ1} \rightarrow$ $\rightarrow \Delta ПЭ$
$t_A^{ЗВ2} \rightarrow$ $\rightarrow \Delta ПЭ$
$t_A^{ЗВ3} \rightarrow$ $\rightarrow \Delta ПЭ$
$t_A^{В1} \rightarrow opt$
$t_A^{В2} \rightarrow opt$
$t_A^{В3} \rightarrow opt$
yes
no
Search of new options of duration and structure of life cycle of products

**[Fig.5.3]**

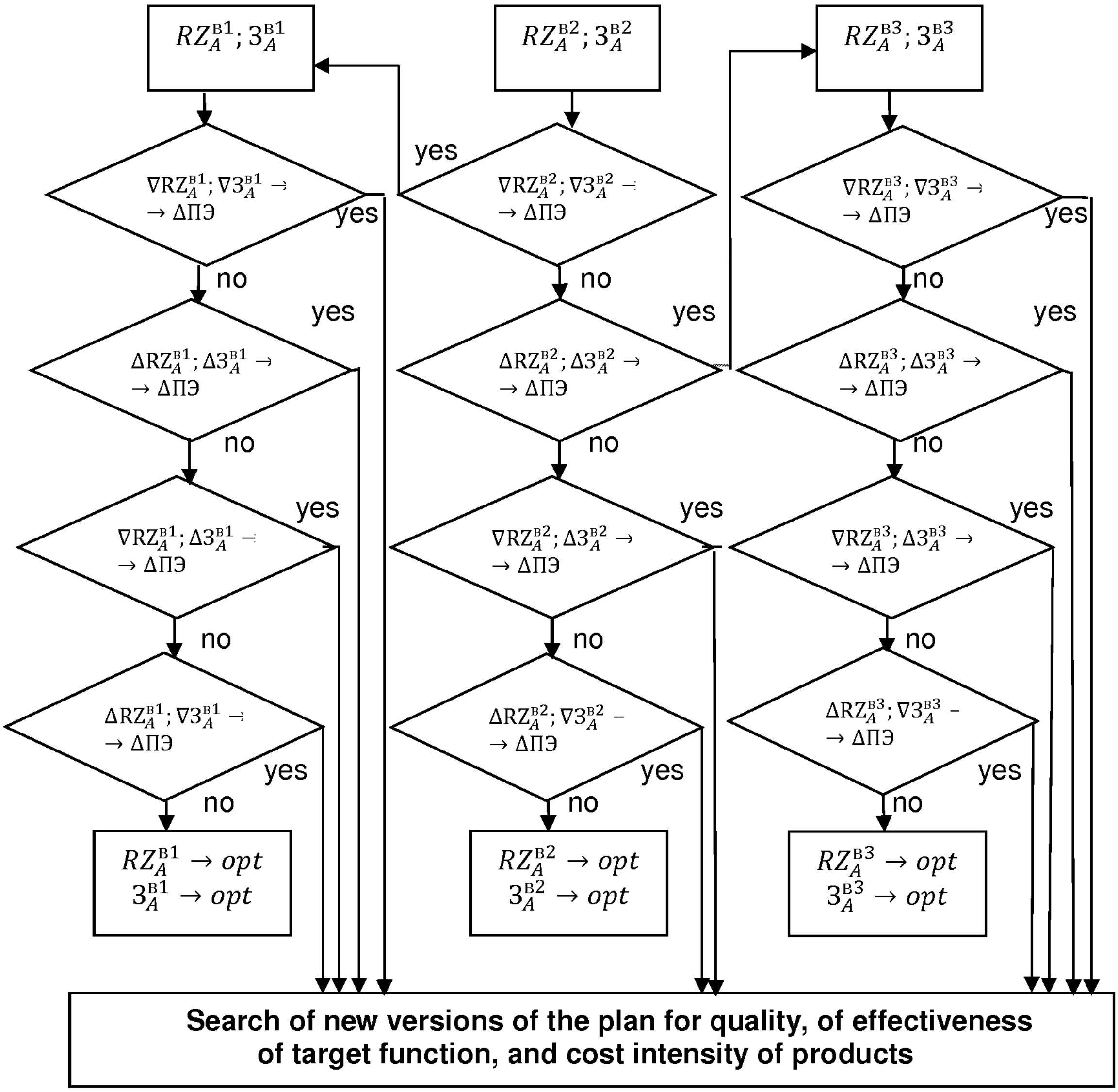
yes
no
Search of new versions of the plan for quality, of effectiveness of target function, and cost intensity of products

# [Fig.5.4]

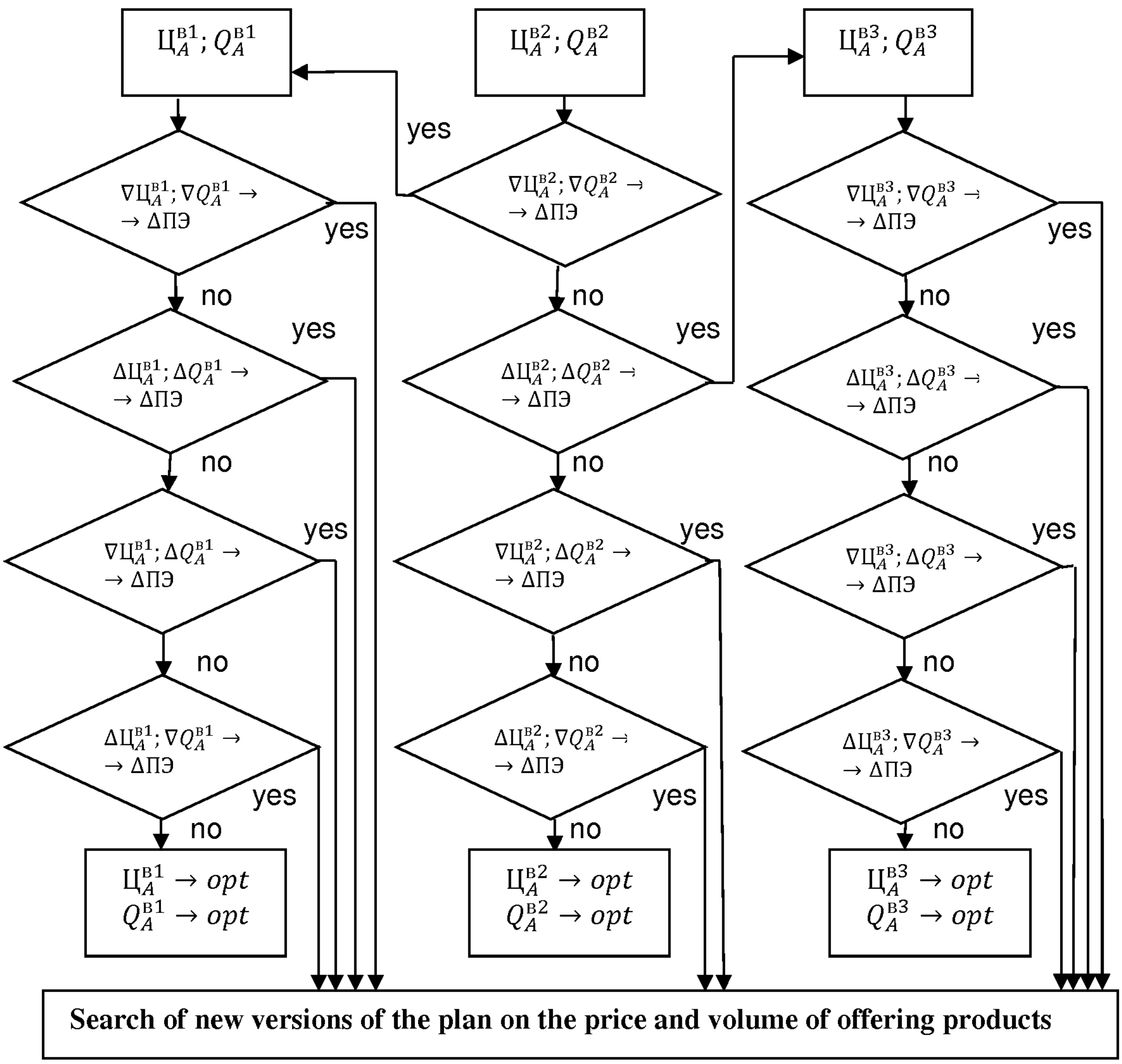
$Ц_A^{в1}; Q_A^{в1}$
$Ц_A^{в2}; Q_A^{в2}$
$Ц_A^{в3}; Q_A^{в3}$
$\nabla Ц_A^{в1}; \nabla Q_A^{в1} \rightarrow \rightarrow \Delta ПЭ$
$\nabla Ц_A^{в2}; \nabla Q_A^{в2} \rightarrow \rightarrow \Delta ПЭ$
$\nabla Ц_A^{в3}; \nabla Q_A^{в3} \rightarrow \rightarrow \Delta ПЭ$
$\Delta Ц_A^{в1}; \Delta Q_A^{в1} \rightarrow \rightarrow \Delta ПЭ$
$\Delta Ц_A^{в2}; \Delta Q_A^{в2} \rightarrow \rightarrow \Delta ПЭ$
$\Delta Ц_A^{в3}; \Delta Q_A^{в3} \rightarrow \rightarrow \Delta ПЭ$
$\nabla Ц_A^{в1}; \Delta Q_A^{в1} \rightarrow \rightarrow \Delta ПЭ$
$\nabla Ц_A^{в2}; \Delta Q_A^{в2} \rightarrow \rightarrow \Delta ПЭ$
$\nabla Ц_A^{в3}; \Delta Q_A^{в3} \rightarrow \rightarrow \Delta ПЭ$
$\Delta Ц_A^{в1}; \nabla Q_A^{в1} \rightarrow \rightarrow \Delta ПЭ$
$\Delta Ц_A^{в2}; \nabla Q_A^{в2} \rightarrow \rightarrow \Delta ПЭ$
$\Delta Ц_A^{в3}; \nabla Q_A^{в3} \rightarrow \rightarrow \Delta ПЭ$
yes
no
$Ц_A^{в1} \rightarrow opt$ $Q_A^{в1} \rightarrow opt$
$Ц_A^{в2} \rightarrow opt$ $Q_A^{в2} \rightarrow opt$
$Ц_A^{в3} \rightarrow opt$ $Q_A^{в3} \rightarrow opt$
Search of new versions of the plan on the price and volume of offering products

[Fig.5.5]

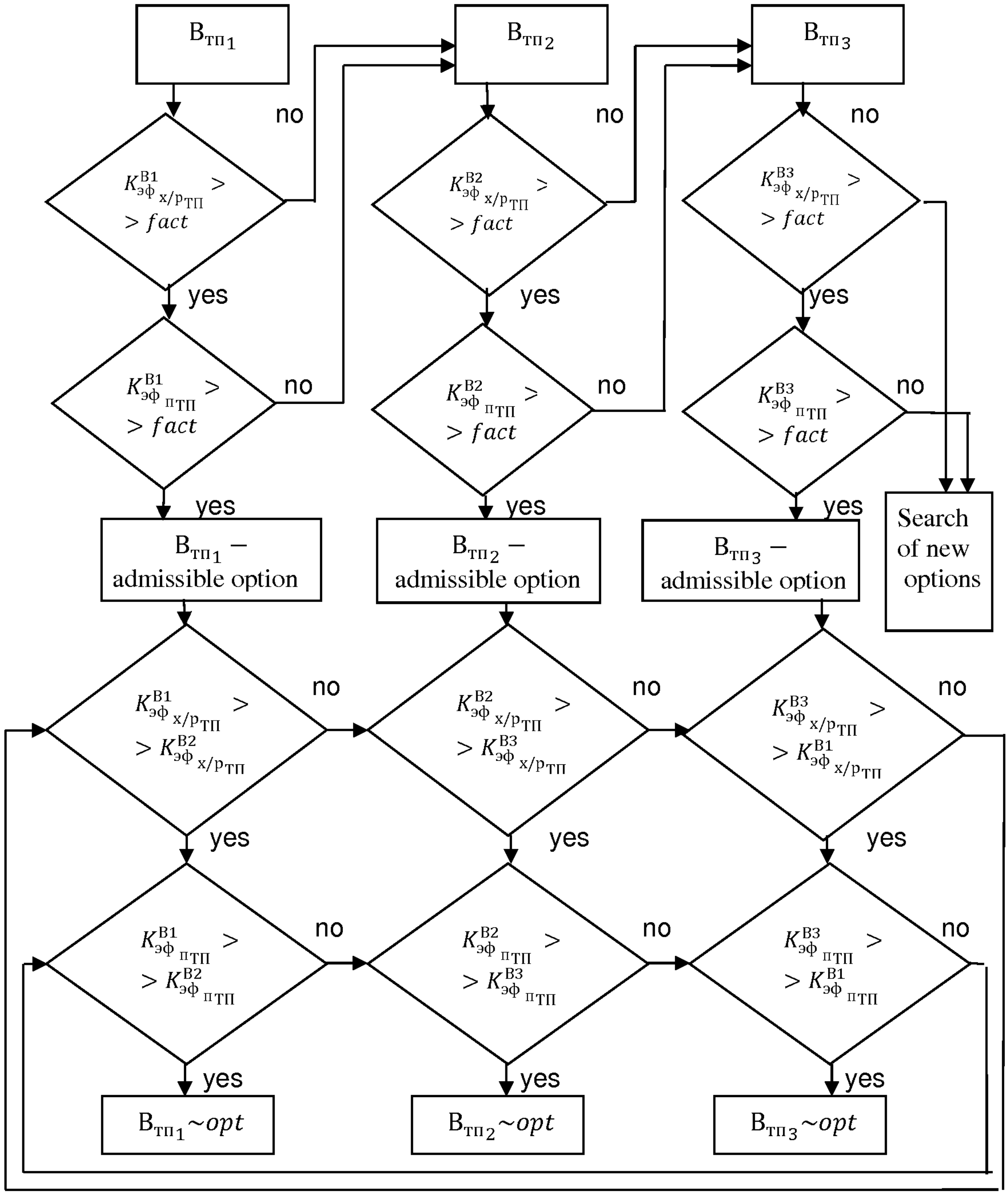
$B_{тп1}$
$B_{тп2}$
$B_{тп3}$
$K^{B1}_{эф\ х/р_{ТП}} > fact$
$K^{B2}_{эф\ х/р_{ТП}} > fact$
$K^{B3}_{эф\ х/р_{ТП}} > fact$
$K^{B1}_{эф\ п_{ТП}} > fact$
$K^{B2}_{эф\ п_{ТП}} > fact$
$K^{B3}_{эф\ п_{ТП}} > fact$
yes
no
$B_{тп1}$ – admissible option
$B_{тп2}$ – admissible option
$B_{тп3}$ – admissible option
Search of new options
$K^{B1}_{эф\ х/р_{ТП}} > K^{B2}_{эф\ х/р_{ТП}}$
$K^{B2}_{эф\ х/р_{ТП}} > K^{B3}_{эф\ х/р_{ТП}}$
$K^{B3}_{эф\ х/р_{ТП}} > K^{B1}_{эф\ х/р_{ТП}}$
$K^{B1}_{эф\ п_{ТП}} > K^{B2}_{эф\ п_{ТП}}$
$K^{B2}_{эф\ п_{ТП}} > K^{B3}_{эф\ п_{ТП}}$
$K^{B3}_{эф\ п_{ТП}} > K^{B1}_{эф\ п_{ТП}}$
$B_{тп1} \sim opt$
$B_{тп2} \sim opt$
$B_{тп3} \sim opt$

[Fig.6]

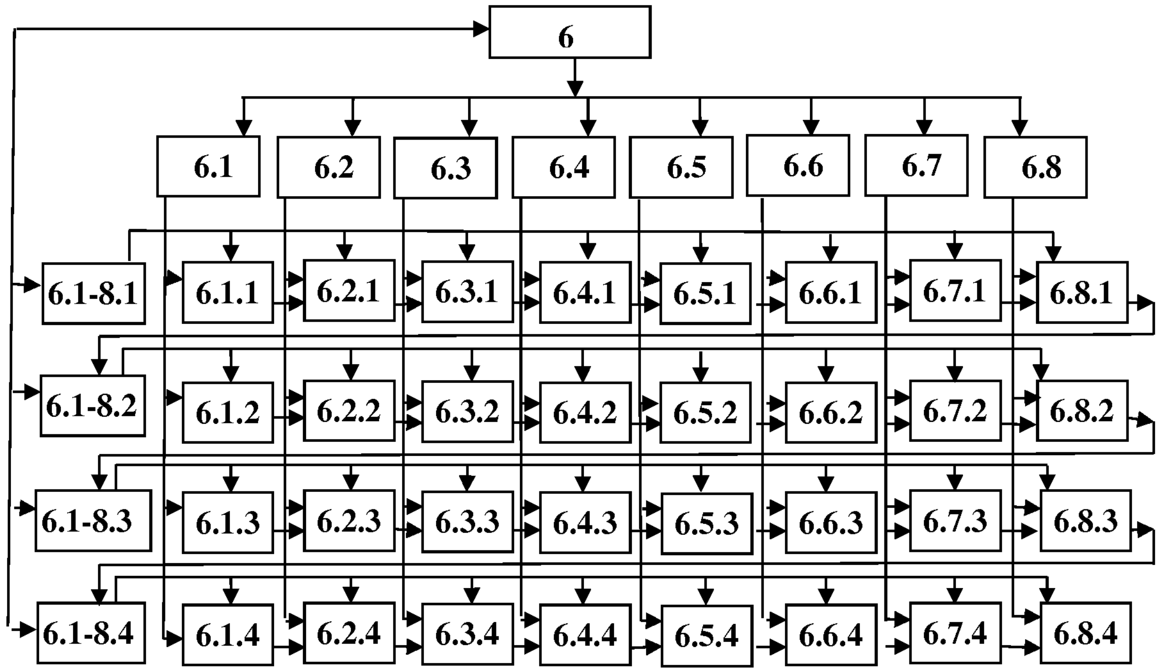
6
6.1
6.2
6.3
6.4
6.5
6.6
6.7
6.8
6.1-8.1
6.1.1
6.2.1
6.3.1
6.4.1
6.5.1
6.6.1
6.7.1
6.8.1
6.1-8.2
6.1.2
6.2.2
6.3.2
6.4.2
6.5.2
6.6.2
6.7.2
6.8.2
6.1-8.3
6.1.3
6.2.3
6.3.3
6.4.3
6.5.3
6.6.3
6.7.3
6.8.3
6.1-8.4
6.1.4
6.2.4
6.3.4
6.4.4
6.5.4
6.6.4
6.7.4
6.8.4

[Fig.6.1]

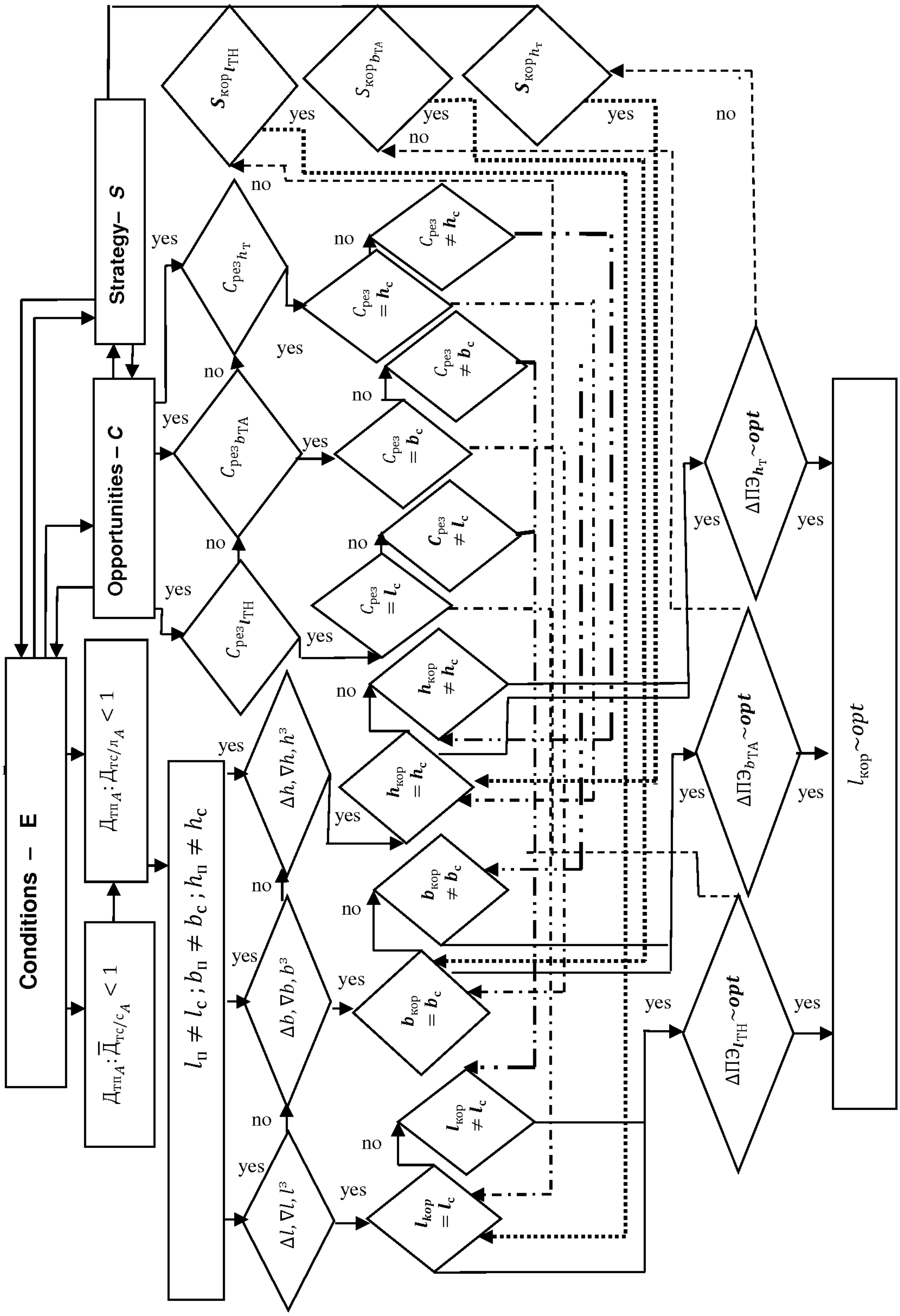

[Fig.6.2]

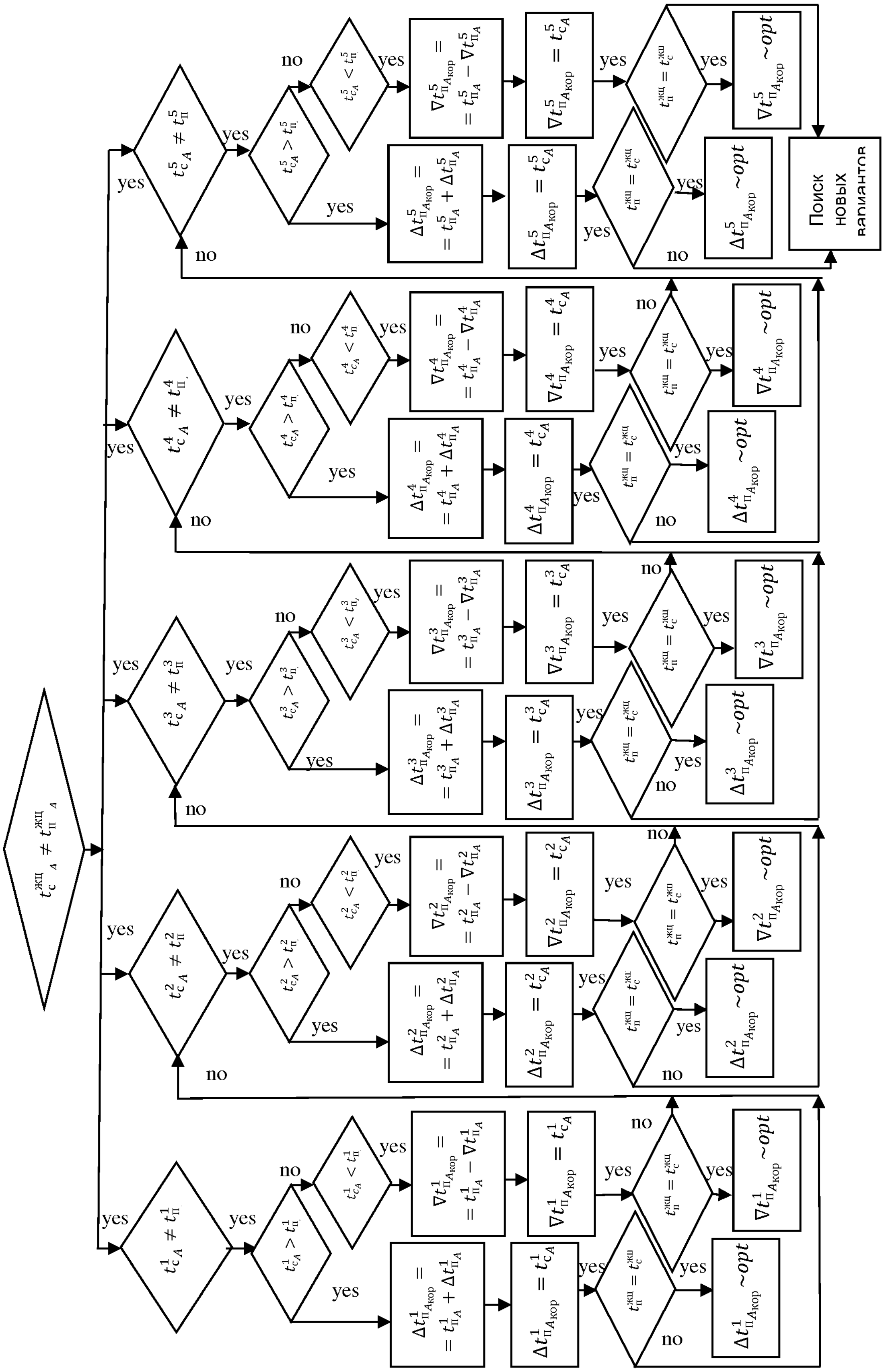

**[Fig.6.3]**

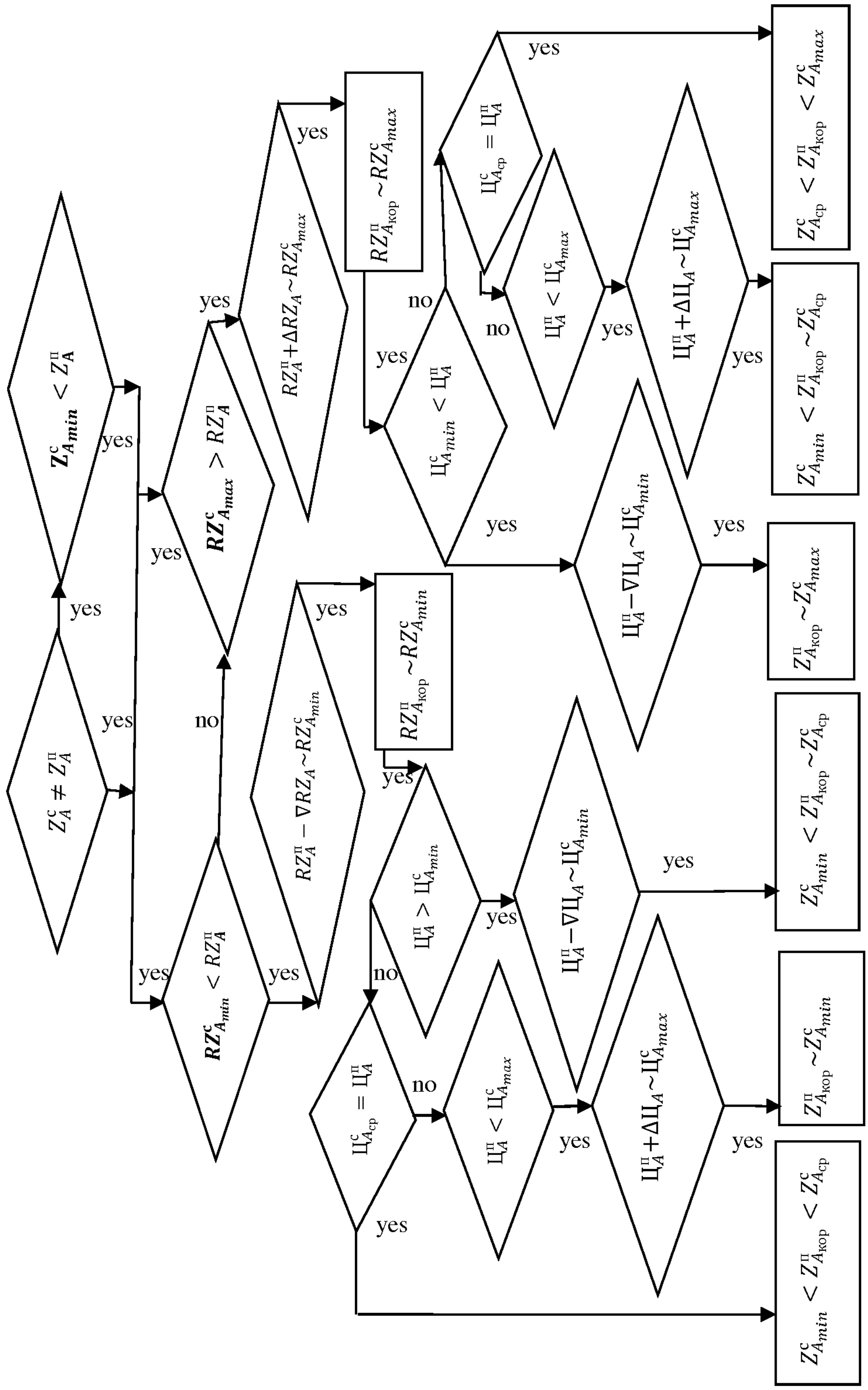
$Z^с_A \neq Z^п_A$
$Z^с_{A_{min}} < Z^п_A$
$RZ^с_{A_{max}} > RZ^п_A$
$RZ^с_{A_{min}} < RZ^п_A$
$RZ^п_A + \Delta RZ_A \sim RZ^с_{A_{max}}$
$RZ^п_A - \nabla RZ_A \sim RZ^с_{A_{min}}$
$RZ^п_{A_{кор}} \sim RZ^с_{A_{max}}$
$RZ^п_{A_{кор}} \sim RZ^с_{A_{min}}$
$Ц^с_{A_{min}} < Ц^п_A$
$Ц^с_{A_{ср}} = Ц^п_A$
$Ц^п_A < Ц^с_{A_{max}}$
$Ц^п_A + \Delta Ц_A \sim Ц^с_{A_{max}}$
$Ц^п_A - \nabla Ц_A \sim Ц^с_{A_{min}}$
$Ц^п_A > Ц^с_{A_{min}}$
$Ц^п_A - \nabla Ц_A \sim Ц^с_{A_{min}}$
$Ц^с_{A_{ср}} = Ц^п_A$
$Ц^п_A < Ц^с_{A_{max}}$
$Ц^п_A + \Delta Ц_A \sim Ц^с_{A_{max}}$
$Z^с_{A_{ср}} < Z^п_{A_{кор}} < Z^с_{A_{max}}$
$Z^с_{A_{min}} < Z^п_{A_{кор}} \sim Z^с_{A_{ср}}$
$Z^п_{A_{кор}} \sim Z^с_{A_{max}}$
$Z^с_{A_{min}} < Z^п_{A_{кор}} \sim Z^с_{A_{ср}}$
$Z^п_{A_{кор}} \sim Z^с_{A_{min}}$
$Z^с_{A_{min}} < Z^п_{A_{кор}} < Z^с_{A_{ср}}$

[Fig.6.4]

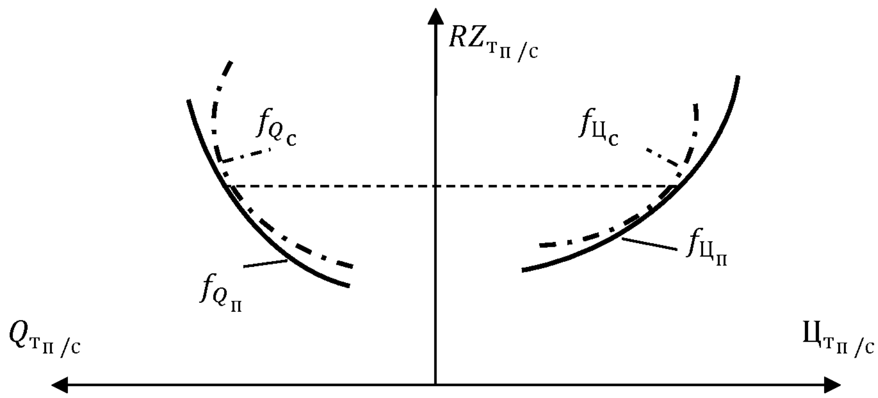
$RZ_{тп/с}$
$f_{Q_с}$
$f_{Ц_с}$
$f_{Ц_п}$
$f_{Q_п}$
$Q_{тп/с}$
$Ц_{тп/с}$

[Fig.6.5]

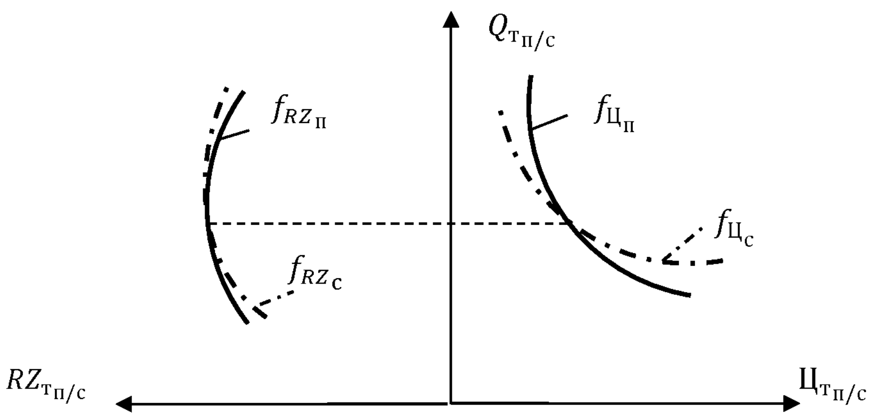
$Q_{тп/с}$
$f_{RZ_п}$
$f_{Ц_п}$
$f_{Ц_с}$
$f_{RZ_с}$
$RZ_{тп/с}$
$Ц_{тп/с}$

**[Fig.6.6]**

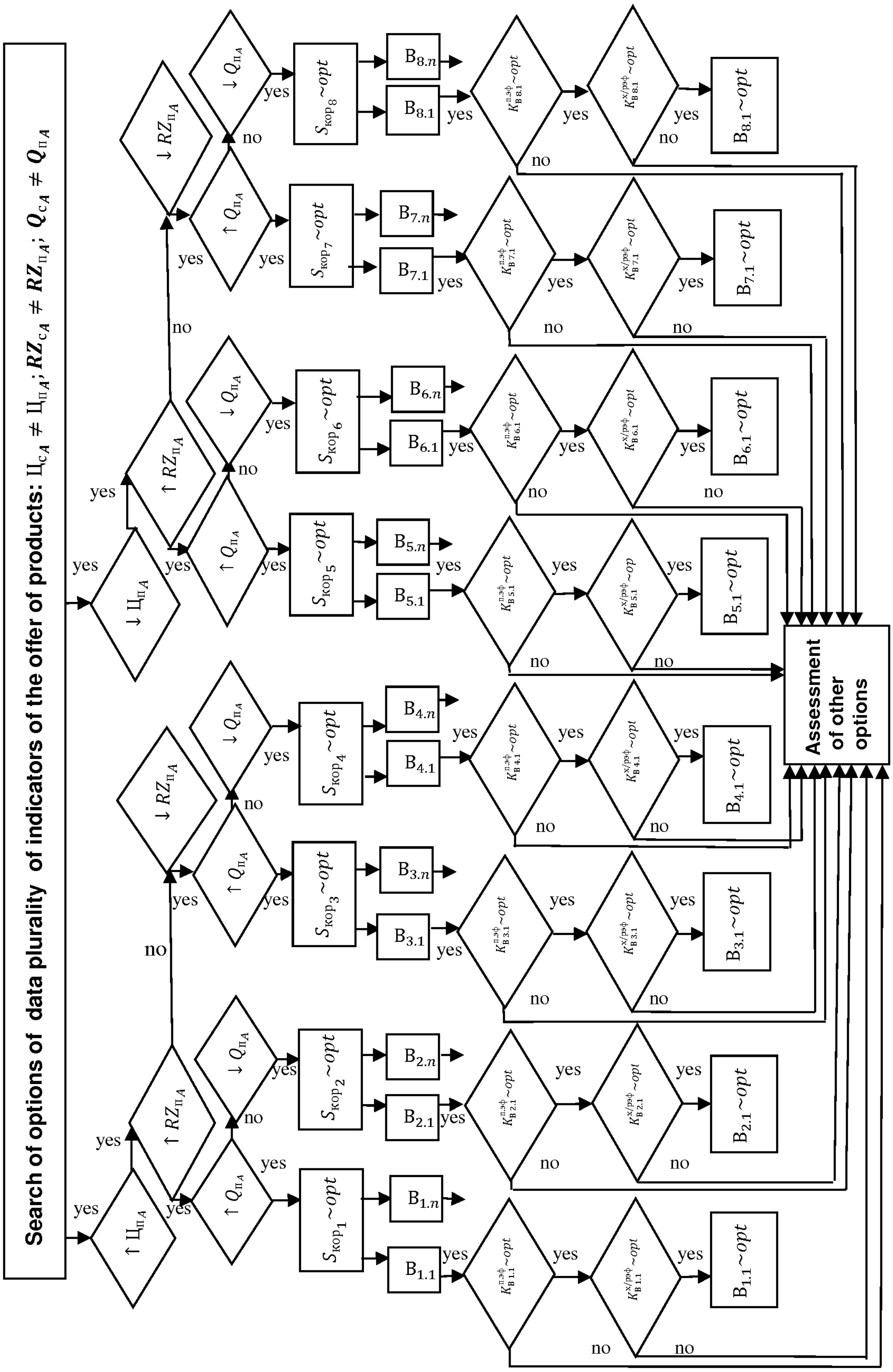
Search of options of data plurality of indicators of the offer of products
Assessment of other options

[Фиг.7]

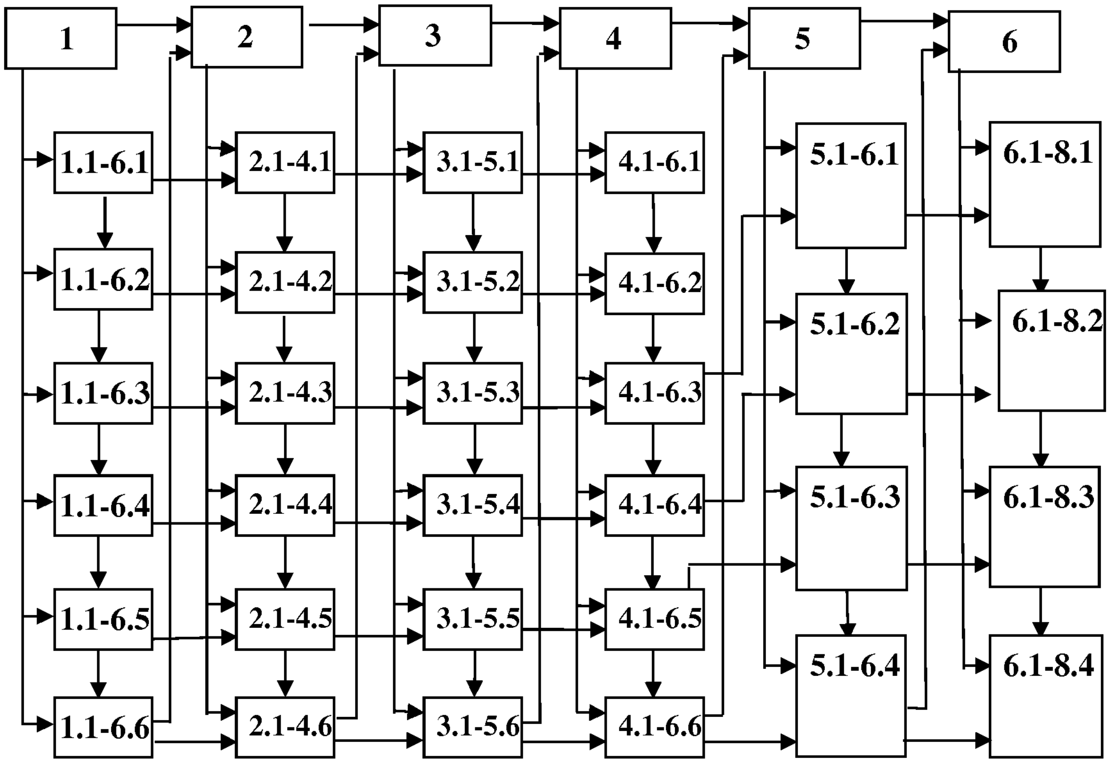
1
2
3
4
5
6
1.1-6.1
1.1-6.2
1.1-6.3
1.1-6.4
1.1-6.5
1.1-6.6
2.1-4.1
2.1-4.2
2.1-4.3
2.1-4.4
2.1-4.5
2.1-4.6
3.1-5.1
3.1-5.2
3.1-5.3
3.1-5.4
3.1-5.5
3.1-5.6
4.1-6.1
4.1-6.2
4.1-6.3
4.1-6.4
4.1-6.5
4.1-6.6
5.1-6.1
5.1-6.2
5.1-6.3
5.1-6.4
6.1-8.1
6.1-8.2
6.1-8.3
6.1-8.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2419874

### Non-patent literature cited in the description


- Mathematical statistics. - Novosibirsk. **BOROVKOV A. A.** Science. Publishing house of Institute of mathematics, 1997
- **WALD A.** the Consecutive analysis, the lane with English - M. *Fizmatgiz,* 1960
- **LEHMAN E.** *Check of statistical hypotheses, the lane with English.- M.,* 1964
- Big Encyclopaedic dictionary. 2000
- **RAYZBERG B. A. ; LOZOVSKY L. SH. ; STARODUBTSEV E. B.** modern economic dictionary. 1999
- **GRANBERG A. G.** Statistical modeling and forecasting / Under the editorship of A. G. Granberg.-M. *Finance and statistics,* 2000, 383
- **KARASYOV A. I. ; KRAMER N. SH. ; SAVELYEVA T. N.** Mathematical methods and models in planning. - M. *Economy,* 2001, 239
- **RAYZBERG B. A. ; LOZOVSKY L. SH. ; STARODUBTSEV E. B.** Modern economic dictionary. - 2nd prod., M. *INFRA-M.,* 1999, C. 479
- **KURAKOV L. P. ; KURAKOV V. L. ; KURAKOV OF A. L.** Economic and right: dictionary reference. - M. *Higher education institution and school,* 2004, C. 1072
- **BRYAN, F.L.** Evaluation of risk at Critical Control Points. *WHO,* 1992
- **MORTIMER, S. ; WALLACE, C.** HACCP A practical Approach. Chapman and Hall
- **BREKER OF T ; LANDER L.** *Differentiable sprouts and accidents,* 1977